# EUROPÄISCHE PATENTSCHRIFT

(11) **EP 2 916 995 B1**
(45) Veröffentlichungstag und Bekanntmachung des Hinweises auf die Patenterteilung: **26.10.2016**
(21) Anmeldenummer: 13815676.5
(22) Anmeldetag: 07.11.2013
(51) Int. Cl.: B23Q 37/00, B65G 21/06

(54) **FERTIGUNGSANLAGE ZUR HERSTELLUNG EINER BAUGRUPPE AUS MEHREREN TEILEN**
MANUFACTURING PLANT FOR PRODUCING AN ASSEMBLY CONSISTING OF A PLURALITY OF PARTS
INSTALLATION DE PRODUCTION DESTINÉE À LA FABRICATION D'UN ENSEMBLE CONSTITUÉ DE PLUSIEURS PIÈCES

(30) Priorität: 08.11.2012 AT 505002012
(43) Veröffentlichungstag der Anmeldung: 16.09.2015
(73) Patentinhaber: STIWA Holding GmbH, 4800 Attnang-Puchheim (AT)
(72) Erfinder: STICHT, Walter, Leopold, A-4800 Attnang-Puchheim (AT); KRITZINGER, Johann, A-4873 Frankenburg am Hausruck (AT); MERSNIK, Christian, A-4800 Attnang-Puchheim (AT); SCHLAGER, Reinhard, A-4892 Fornach (AT)
(74) Vertreter: Burger, Hannes
(86) Internationale Anmeldenummer: PCT/AT2013/050211
(87) Internationale Veröffentlichungsnummer: WO 2014/071432

(56) Entgegenhaltungen:
- WO-A1-2005/095049
- WO-A1-2012/042029
- DE-A1-102006 002 082
- DE-A1-102007 044 060
- US-A- 5 904 242

## Beschreibung

Die Erfindung betrifft eine Fertigungsanlage zur Herstellung einer Baugruppe aus mehreren Teilen.

Die WO 89/06177 A1 und WO 89/08002 A1 offenbaren eine gattungsgemäße Fertigungsanlage, welche eine Transportanlage zur Beförderung von Teilen mittels Teileträger und in Transportrichtung hintereinander angeordneten Arbeitsstationen und Teilebereitstellungsstationen umfasst. Die Transportanlage weist einen Grundrahmen, an diesem drehbar gelagerte Umlenkräder, eine um die Umlenkräder geführte Transportkette mit einem vorlaufenden, oberen Strang und einem rücklaufenden, unteren Strang, eine sich zwischen den Umlenkrädern erstreckende Führungsvorrichtung für den vorlaufenden, oberen Strang, und einen mit einem der Umlenkräder gekuppelten elektrischen Vorschubantrieb zur Fortbewegung der Transportkette in Transportrichtung umfasst. Die Kettenglieder der Transportkette bilden dabei die Teileträger aus. Zwar wird eine Modulbauweise für den Grundrahmen der Transportanlage beschrieben, nicht jedoch für die Anordnung der Arbeitsstationen und Teilebereitstellungsstationen. Jede Arbeitsstation und Teilebereitstellungsstation ist an hierfür speziell gestalteten Lagerrahmen angeordnet. Eine Vereinheitlichung der Lagerrahmen ist nicht vorgesehen.

Ist eine solche Fertigungsanlage erst einmal installiert, kann sie nur schwer für andere Einsatzzwecke umkonfiguriert werden.

Diese bekannten Fertigungsanlagen werden außerdem je nach Kundenanforderung konfiguriert. Das heißt, je nach Konfiguration der Fertigungsanlage und den erforderlichen Arbeitsstationen und Teilebereitstellungsstationen, auch Funktionsmodule genannt, werden die Lagerrahmen gestaltet. Damit ist zu jeder unterschiedlichen Konfiguration eine angepasste Gestaltung der Lagerrahmen erforderlich. Dementsprechend hoch ist der Dimensionierungsaufwand für unterschiedliche Konfigurationen und ist oftmals sogar eine Neukonstruktion nötig.

Aus der WO 2012/042029 A1 ist eine Fertigungsanlage mit einem Trägermodul bekannt, dessen Oberseite für die Aufnahme von Arbeitsstationen ausgebildet ist. Das Trägermodul ist in Form eines Prismas ausgebildet, an welchem an einer Seitenfläche Befestigungspunkte in einem vorbestimmten Befestigungsraster ausgebildet sind, welche dazu dienen um eine Transportkette am Trägermodul aufnehmen zu können. Weiters ist vorgesehen, dass das Trägermodul an einem Grundrahmen befestigt werden kann, wobei das Trägermodul derart ausgebildet ist, dass es zusammen mit mindestens einem identischen Trägermodul, welches ebenfalls am Grundrahmen befestigt werden kann, ein modulares Trägersystem bildet.

Aus der US 5 904 242 A ist eine modulartig aufgebaute Fertigungsanlage mit einer starren Plattform, auf der eine variable Anzahl von identischen Modulträgern angeordnet sind bekannt. Die Modulträger können seitlich eine umlaufende Kette aufnehmen, welche entsprechend der Anzahl der verwendeten Modulträger ebenfalls in deren Länge variabel ist. Weiters ist an den beiden gegenüberliegenden äußeren Enden ein Kettenantriebsmodul und ein Rückführmodul angeordnet, durch welche die Kette angetrieben bzw. umgelenkt werden kann. Darüber hinaus können auf den Modulträgern Arbeitsstationen angeordnet werden, welche auf durch die Kette aufgenommene Werkstücke einwirken können.

Der Erfindung liegt die Aufgabe zugrunde eine Fertigungsanlage zu schaffen, bei welcher sich eine weitgehende Standardisierung des konstruktiven Aufbaus erreichen lässt.

Die Aufgabe der Erfindung wird dadurch gelöst, dass die Arbeitsstationen und/oder Teilebereitstellungsstationen jeweils über Montageaufnahmen an Lagerrahmenmodulen gelagert sind, und dass das Traggehäuse nebeneinander angeordnete Tragrahmenmodule, eine Bodenplatte und eine Montageplatte umfasst, wobei die Bodenplatte und Montageplatte über Vertikalrahmen miteinander verbunden sind und die Montageplatte auf ihrer der Bodenplatte abgewandten Oberseite eine Montageebene ausbildet, auf welcher die Transportanlage über ihren Grundrahmen und die Lagerrahmenmodule über ihre Anschlussplatten abstützbar und über Befestigungsvorrichtungen lösbar zueinander verbunden sind, sodass sie das Traggehäuse ausbilden.

Von Vorteil ist, dass das Traggehäuse einerseits als Anschlussschnittstelle sowohl für die Transportanlage als auch die Lagerrahmenmodule und andererseits der Unterbringung unterschiedlicher Funktionseinheiten unterhalb der Montageebene zwischen der Bodenplatte und Montageplatte dient. Dieser Mehrfachnutzen des Traggehäuses erlaubt einen sehr kompakten Aufbau der Fertigungsanlage.

Unter dem Begriff "Funktionseinheit" wird ein Funktionsmodul verstanden, das bestimmte Funktionen der Fertigungsanlage übernimmt, wie beispielsweise die Steuerung von Antrieben der Arbeitsstationen und/oder Teilebereitstellungsstationen, die Verarbeitung elektrischer Signale von Gebern/Sensoren für die Arbeitsstationen und/oder Teilebereitstellungsstationen, die elektrische Versorgung von Antrieben/Sensoren für die Arbeitsstationen und/oder Teilebereitstellungsstationen, die Bereitstellung von Arbeitsmittel für die Arbeitsstationen und dgl.

Die Lagerrahmenmodule ermöglichen die Aufnahme entweder einer Arbeitsstation oder die Aufnahme einer Arbeitsstation und einer Teilebereitstellungsstation. Bevorzugt sind die Arbeitsstationen und Teilebereitstellungsstationen auswechselbar an den Lagerrahmenmodulen befestigt, sodass je nach Konfiguration der Fertigungsanlage bloß die Arbeitsstationen und Teilebereitstellungsstationen, nicht jedoch die Lagerrahmenmodule ausgewechselt werden müssen. Dadurch wird ein Baukastensystem aus einer Vielzahl von Prozessmodulen, welche durch die Arbeitsstationen und/oder Teilebereitstellungsstationen gebildet sind, geschaffen. Die Prozessmodule können nahezu beliebig kombiniert werden. Es kann ein flexibel konfigurierbarer mechanischer Aufbau der Fertigungsanlage realisiert werden.

Ebenso ermöglichen die Tragrahmenmodule die Aufnahme unterschiedlichster Funktionseinheiten. Bevorzugt sind die Funktionseinheiten auswechselbar in Aufnahmeschächten der Tragrahmenmodule angeordnet, sodass je nach Konfiguration der Fertigungsanlage bloß die Funktionseinheiten, nicht jedoch die Tragrahmenmodule des Traggehäuses ausgewechselt werden müssen. Dadurch wird ein Baukastensystem aus einer Vielzahl von Funktionsmodulen, welche durch die Funktionseinheiten gebildet sind, geschaffen. Die Funktionsmodule können nahezu beliebig kombiniert werden. Es kann ein flexibel konfigurierbarer Steuerungsaufbau der Fertigungsanlage realisiert werden.

Die Montageebene ist derart konfiguriert, dass die Transportanlage und Lagerrahmenmodule ohne großen Aufwand rasch montiert werden können. Der Grundrahmen und die Anschlussplatten sind auf die Konfiguration der Montageebene angepasst, sodass sich durch die Vereinheitlichung der Anschlussschnittstellen an der Transportanlage und Lagerrahmenmodule, unabhängig von deren Funktionalität, die Herstellung der Fertigungsanlage vereinfachen lässt.

Es ist auch von Vorteil, wenn die Lagerrahmenmodule für die Arbeitsstationen und/oder Teilebereitstellungsstationen im Wesentlichen gleichartig gestaltet sind. Durch die Vereinheitlichung der Lagerrahmenmodule können die Herstellkosten für die Fertigungsanlage reduziert werden.

Das Lagerrahmenmodul umfasst Seitenwände, eine diese verbindende Anschlussplatte und eine Montageaufnahme, wobei die Arbeitsstation über ihren Grundrahmen an der Montageaufnahme abstützbar und über eine Befestigungsvorrichtung lösbar mit dem Lagerrahmenmodul verbunden ist. Sohin kann das Lagerrahmenmodul entsprechend einer gewünschten Konfiguration auch bloß mit der Arbeitsstation ausgestattet werden. Die Arbeitsstation wird dabei über eine vorkonfektionierte Montageaufnahme auswechselbar am Lagerrahmenmodul montiert. Die Montage lässt sich vereinfachen, wenn die Montageaufnahme des Lagerrahmenmodules und der Grundrahmen der Arbeitsstation jeweils Schnellverschlusskupplungselemente und Positionierelemente aufweisen. Ist die Arbeitsstation montiert, ist diese über die Positionierelemente, beispielweise Passlöcher und Passstifte, exakt gegenüber dem Lagerrahmenmodul positioniert.

Das Lagerrahmenmodul kann andererseits Seitenwände, eine diese verbindende Anschlussplatte und eine Montageaufnahme umfassen, wobei die Teilebereitstellungsstation über ihren Grundrahmen an der Montageaufnahme abstützbar und über eine Befestigungsvorrichtung lösbar mit dem Lagerrahmenmodul verbunden ist. Sohin kann das Lagerrahmenmodul entsprechend einer gewünschten Konfiguration auch bloß mit der Teilebereitstellungsstation ausgestattet werden. Die Teilebereitstellungsstation wird dabei über eine vorkonfektionierte Montageaufnahme auswechselbar am Lagerrahmenmodul montiert. Die Montage lässt sich vereinfachen, wenn die Montageaufnahme des Lagerrahmenmodules und der Grundrahmen der Teilebereitstellungsstation jeweils Schnellverschlusskupplungselemente und Positionierelemente aufweisen. Ist die Teilebereitstellungsstation montiert, ist diese über die Positionierelemente, beispielweise Passlöcher und Passstifte, exakt gegenüber dem Lagerrahmenmodul positioniert.

Nach einer vorteilhaften Ausgestaltung der Erfindung ist es auch möglich, dass das Lagerrahmenmodul Seitenwände, eine diese verbindende Anschlussplatte und in übereinander liegenden Montageebenen eine erste Montageaufnahme und eine zweite Montageaufnahme umfasst, wobei die Arbeitsstation über ihren Grundrahmen an der ersten Montageaufnahme abstützbar und über eine Befestigungsvorrichtung lösbar mit dem Lagerrahmenmodul verbunden ist und wobei die Teilebereitstellungsstation über ihren Grundrahmen an der zweiten Montageaufnahme abstützbar und über eine Befestigungsvorrichtung lösbar mit dem Lagerrahmenmodul verbunden sind. Diese Anordnung erweist sich insbesondere bei einer Kombination Handhabung und Teilebereitstellung von Vorteil, da die Bewegungsbahnen eines Greifers für die Handhabung der zu montierenden Teile kurz gestaltet werden können. Damit verbunden ist eine höhere Produktionsleitung der Fertigungsanlage. Die Arbeitsstation und Teilebereitstellungsstation werden dabei jeweils über eine vorkonfektionierte Montageaufnahme auswechselbar am Lagerrahmenmodul montiert, wie oben beschrieben.

Es ist auch von Vorteil, wenn die Arbeitsstation und/oder Teilebereitstellungsstation an der(den) Montageaufnahme(n) zwischen den parallelen Seitenwänden angeordnet werden.

Die Anschlussplatten der Lagerrahmenmodule für die Arbeitsstationen und/oder Teilebereitstellungsstationen sind im Wesentlichen gleichartig gestaltet und umfassen jeweils eine Führungsvorrichtung. Dadurch wird eine exakte Positionierung der Lagerrahmenmodule relativ zu den einzelnen Tragrahmenmodulen bzw. zum Traggehäuse erreicht. Die Führungsvorrichtung kann hierzu eine Führungs- und Zentrierfunktion realisieren.

Eine vorteilhafte Ausgestaltung der Erfindung ist auch gegeben, wenn die Lagerrahmenmodule in einem etwa der Breite eines Lagerrahmenmodules entsprechenden Rasterabstand und in einer Längsreihe angeordnet sind. Der Rasterabstand kann dabei zwischen 90 mm und 360 mm variieren. Durch die kompakte Bauweise der Lagerrahmenmodule, der Arbeitsstationen und/oder Teilebereitstellungsstationen, kann entlang eines Transportabschnittes der Transportanlage eine hohe Anzahl an Arbeitsstationen und/oder Teilebereitstellungsstationen angeordnet werden, was die Herstellung von Produkten mit einer hohen Teileanzahl erlaubt. Die Lagerrahmenmodule sind dabei in Längsreihe nebeneinander und senkrecht zur Transportrichtung der Teileträger im Transportabschnitt angeordnet.

Ein besonders kompakter wie schwingungssteifer Aufbau der Fertigungsanlage ergibt sich, wenn die Lagerrahmenmodule in einem etwa der Breite eines Lagerrahmenmodules entsprechenden Rasterabstand in einer Längsreihe und zwischen Seitenständern derart angeordnet sind, dass sich einander zugewandte Seiten benachbarter Lagerrahmenmodule gegeneinander und die voneinander abgewandten Seiten des in der Längsreihe ersten Lagerrahmenmodules und letzten Lagerrahmenmodules gegen die Seitenständer abstützen.

Die Tragrahmenmodule können jeweils einen Bodenplattenteil, einen Montageplattenteil und Vertikalrahmenteile umfassen, welche zu einer selbstragenden Gehäuseeinheit miteinander verbunden sind. Die Gehäuseeinheiten können entsprechend einer Konfiguration beliebig kombiniert werden. Bevorzugt sind die Gehäuseeinheiten im Wesentlichen gleichartig gestaltet und weisen dieselben Außenabmessungen auf.

Nach einer vorteilhaften Ausgestaltung können die Tragrahmenmodule in einer Längsreihe angeordnet und jeweils über Befestigungsvorrichtungen zueinander verbunden sein, sodass sie das Traggehäuse ausbilden, wobei ein erstes Tragrahmenmodul mit einer ersten Funktionseinheit und ein zweites Tragrahmenmodul mit einer zweiten Funktionseinheit und ein oder mehrere zwischen diesen angeordnete dritte Tragrahmenmodule mit einer oder mehreren dritten Funktionseinheiten ausgestattet sind. Die Unterscheidung in unterschiedliche Funktionseinheiten ermöglicht die eindeutige Zuordnung zwischen einer Funktionseinheit und einem Prozessmodul. Dabei sind als Prozessmodule die Arbeitsstationen, Teilebereitstellungsstationen und die Transportanlage zu verstehen. Treten im Betrieb der Fertigungsanlage an irgendeinem der Prozessmodule Störungen auf, ist eine rasche Fehlerlokalisierung möglich. Ebenso kann eine eindeutige Trennung zwischen den unterschiedlichen Funktionseinheiten geschaffen werden. So können jene Funktionseinheiten, welche für den Arbeitsprozess benötigt werden, nahe den Arbeitsstationen und jene Funktionseinheiten, welche für die logistischen Transportabläufe benötigt werden, nahe der Transportanlage angeordnet werden. Dadurch können der Verkabelungsaufwand reduziert und Taktzeiten an den Arbeitsstationen optimiert werden.

Eine erste Funktionseinheit ist ein Antriebsschrankmodul mit einer elektrischen Energieversorgungseinheit und/oder elektronischen Steuerungsvorrichtung mit einer Rechnereinheit für die Transportanlage und/oder Kommunikationsschnittstelle zum Anschluss der Rechnereinheit an ein Datenbussystem.

Eine zweite Funktionseinheit ist ein Technologieschrankmodul mit einer Arbeitsmittelversorgungseinheit und/oder einer Aufbereitungseinheit für Druckmedium und/oder elektrisch betätigbaren Schalteinheiten.

Eine dritte Funktionseinheit umfasst nach einer ersten Ausführung eine den Arbeitsstationen entsprechende Anzahl an Schaltkastenmodule, welche jeweils mit einer ersten Ansteuerschaltung für eine Arbeitsstation ausgestattet sind, und/oder ein Schaltschrankmodul, welches mit einer Rechnereinheit ausgestattet ist, die ihrerseits über eine Kommunikationsleitung mit den Ansteuerschaltungen von mehreren Arbeitsstationen verbunden ist.

Nach einer zweiten Ausführung umfasst die dritte Funktionseinheit eine den Teilebereitstellungsstationen entsprechende Anzahl an Schaltkastenmodule, welche jeweils mit einer zweiten Ansteuerschaltung für eine Teilebereitstellungsstation ausgestattet sind, wobei die Ansteuerschaltungen über eine Kommunikationsleitung mit der Steuerungsvorrichtung, insbesondere der Rechnereinheit des Antriebsschrankmodules verbunden ist.

Es ist auch von Vorteil, wenn die Schaltkastenmodule und das Schaltschrankmodul zwischen der Bodenplatte und Montageplatte und mit gegenseitigem Abstand einander gegenüberliegend angeordnet sind und zwischen ihnen in der Bodenplatte je dritter Funktionseinheit zumindest eine Durchführungsöffnung für Leitungen ausgebildet ist. In dem Freiraum zwischen den Schaltkastenmodulen und dem Schaltschrankmodul einer dritten Funktionseinheit können Leitungen, welche zu den Arbeitsstationen und/oder Teilebereitstellungsstation führen, verlegt werden.

Es ist aber auch vorteilhaft, wenn das Schaltkastenmodul ein Einschubgehäuse mit einer Bodenwand, Deckenwand, Vorderwand, Rückwand und Seitenwänden ausbildet, wobei das Einschubgehäuse in einer oder mehreren ihrer Wände mit einer Luftaustrittsöffnung und einer Lufteintrittsöffnung versehen ist. Dies ermöglicht die Kühlung elektronischer Bauelemente, beispielsweise eine Ansteuerschaltung, Regler und dgl., und damit einen zuverlässigen Steuerungsbetrieb der Arbeitsstationen und/oder Teilebereitstellungsstation. Sind die Luftaustrittsöffnung an der Deckenwand und die Lufteintrittsöffnung an der Vorderwand angeordnet, entsteht zwischen ihnen ein Luftstrom, der im Bereich der Anordnung der elektronischen Bauelemente eine turbulente Strömung erzeugt und damit wird eine verbesserte Kühlung erreicht. Der Luftstrom kann von einem Ventilator erzeugt werden.

Eine vorteilhafte Ausbildung der Erfindung liegt auch darin, wenn das Schaltkastenmodul ein Einschubgehäuse mit einer Bodenwand, Deckenwand, Vorderwand, Rückwand und Seitenwänden ausbildet, wobei an der Rückwand ein Anschlussstecker für eine Energieversorgungsleitung der Arbeitsstation und/oder Teilebereitstellungsstation und/oder Anschlussstecker für eine Signalleitung und/oder eine Kommunikationsschnittstelle für den Anschluss an eine Datenbusleitung zur Datenübertragung vorgesehen ist. Die Anschlussstecker und Kommunikationsschnittstelle sind von einem Monteur leicht zugänglich, sobald das Schaltschrankmodul in entsprechende Stellung bewegt wurde. Dadurch wird die Installation der Leitungen vereinfacht.

Gemäß einer möglichen Ausführung der Erfindung bildet die dritte Funktionseinheit einen zwischen einander zugewandte Innenseiten der Boden- und Montageplattenteile in der Höhe und einander zugewandte Innenseiten der Vertikalrahmenteile in der Breite begrenzten Aufnahmeschacht für einen oder mehrere von diesem entfernbare Schaltkastenmodule und in der Verlängerung des Aufnahmeschachtes vorgesehenen Aufnahmeraum für das Schaltschrankmodul aus, wobei das Schaltschrankmodul relativ zum Aufnahmeschacht zwischen einer ersten Stellung, in welcher der Aufnahmeschacht verschlossen ist, und einer zweiten Stellung, in welcher der Aufnahmeschacht offen ist, bewegbar ist. In einer bevorzugten Ausführung können die Schaltkastenmodule zwischen einer vom Aufnahmeschacht entfernten ersten Stellung und einer im Aufnahmeschacht aufgenommenen zweiten Stellung bewegt werden. Dies erweist sich insbesondere von Vorteil, wenn ein defektes Schaltkastenmodul ausgewechselt, oder ein Typ Schaltkastenmodul auf einen anderen Typ Schaltkastenmodul umgerüstet werden soll. Damit kann sehr rasch und abgestimmt auf gewünschte Konfigurationen der Fertigungsanlage ein Umrüstvorgang vorgenommen werden. Hierzu werden gemäß gewünschter Konfigurationen unterschiedlich vorkonfektionierte Schaltkastenmodule bereitgestellt und installiert, wenn eine bestimmte Funktionalität gefordert ist.

Es erweist sich auch von Vorteil, wenn die dritte Funktionseinheit auf seinem Montageplattenteil je Lagerrahmenmodul eine Führungsvorrichtung umfasst, welche komplementär zur Führungsvorrichtung des Lagerrahmenmodules ausgebildet ist, sodass jedes Lagerrahmenmodul über die Führungsvorrichtungen relativ gegenüber dem Tragrahmenmodul justierbar und über die Anschlussplatte am Tragrahmenmodul montierbar ist. Sohin besteht auch die Möglichkeit das Lagerrahmenmodul gemeinsam mit einer Arbeitsstation und/oder Teilebereitstellungsstation als Baueinheit vom Traggehäuse zu entfernen und durch eine andere Baueinheit zu ersetzen.

Vorteilhaft ist auch, wenn die Tragrahmenmodule auf einem Untergestell montierbar sind und im Untergestell integriert zumindest ein Leitungsführungskanal vorgesehen ist, welcher je erster Funktionseinheit und/oder zweiter Funktionseinheit und/oder dritter Funktionseinheit eine Durchgangsöffnung ausbildet, durch welche Leitungen hindurchführbar sind. Dies begünstigt die Leitungsführung und kann auch die Gefahr vor Beschädigungen der Leitungen ausgeschlossen werden.

Es ist nach einer Ausführung der Erfindung auch möglich, dass das Lagerrahmenmodul mit zumindest einem Subschaltkastenmodul ausgestattet ist, welches einen ersten Gehäuseteil mit einer Bodenwand und an der Bodenwand auf einer ersten Seite angeordnete elektrische bzw. elektronische Schaltelemente umfasst und an einer der Seitenwände des Lagerrahmenmodules montierbar ist, wobei die Bodenwand ferner auf einer zweiten Seite eine wärmeleitende Kontaktfläche ausbildet, die gegen die Seitenwand des Lagerrahmenmodules anliegt, wenn das Subschaltkastenmodul am Lagerrahmenmodul montiert ist.

Anderenfalls ist es auch möglich, dass das Lagerrahmenmodul mit zumindest einem Subschaltkastenmodul ausgestattet ist, welches einen ersten Gehäuseteil mit einer Bodenwand, eine an dieser mit einer ersten Seite befestigte Kontaktplatte und an der Kontaktplatte auf einer zweiten Seite angeordnete elektrische Schaltelemente umfasst sowie an einer der Seitenwände des Lagerrahmenmodules montierbar ist, wobei die Bodenwand auf einer der Kontaktplatte abgewandten Seite eine wärmeleitende Kontaktfläche ausbildet, die gegen die Seitenwand des Lagerrahmenmodules anliegt, wenn das Subschaltkastenmodul am Lagerrahmenmodul montiert ist.

Das Gehäuse des Subschaltkastenmodules wird über eine oder mehrere Halteaufnahmen, insbesondere Schrauben an die Seitenwand des Lagerrahmenmodules gedrückt. Durch diesen Kontakt kann das Gehäuse, welches zur Kühlung der elektrischen Schaltelemente ausgebildet ist, Wärme an die Seitenwand abgeben. Die Seitenwand wird als ein großer Kühlkörper für die Schaltelemente verwendet. Entweder wird die Wärme unmittelbar von den Schaltelementen über die wärmeleitende Bodenwand oder über die Kontaktplatte und die wärmeleitende Bodenwand auf die Seitenwand abgeführt.

Die Kontaktplatte kann auch mit einer Wandstärke ausgebildet werden und eine ebene Montagefläche vorsehen, welche eine optimale Befestigung der Schaltelemente erlaubt.

Die Aufgabe der Erfindung wird auch dadurch gelöst, dass zumindest eine der Arbeitsstationen über Montageaufnahmen an mehreren Lagerrahmenmodulen gelagert ist, welche Lagerrahmenmodule entlang des Transportabschnittes der Transportanlage in Transportrichtung in einem Rasterabstand hintereinander angeordnet und über Befestigungsvorrichtungen lösbar mit dem Traggehäuse verbunden sowie mit einem ersten Linearführungssystem und einem zweiten Linearführungssystem versehen sind, wobei sich die Linearführungssysteme parallel zur Transportrichtung entlang mehrerer Lagerrahmenmodule durchgehend erstrecken und an diesen Lagerrahmenmodulen befestigt sind und die erste Bewegungsachse an ihren Endbereichen über die Linearführungssysteme gelagert ist, und dass zumindest ein elektrisch steuerbarer Linearantrieb vorgesehen ist, welcher sich parallel zur Transportrichtung entlang mehrerer Lagerrahmenmodule durchgehend erstreckt, sodass die zweite Bewegungsachse zwischen mehreren Lagerrahmenmodulen in der ersten Richtung, auch als x-Richtung bezeichnet, parallel zur Transportrichtung verstellbar ist. Dabei ist von Vorteil, dass auf standardisierte Lagerrahmenmodule zurückgegriffen wird, welche die Anordnung unterschiedlich gestalteter Arbeitsstationen ermöglichen. Das Umrüsten zwischen unterschiedlichen Arbeitsstationen gestaltet sich einfach, da ausschließlich die Komponenten der Arbeitsstationen, nicht aber die Rahmenkonstruktion mit den Lagerrahmenmodulen zu entfernen ist. Werden Linearführungssysteme und ein Linearantrieb gemäß der beanspruchten Lehre vorgesehen, so kann die zweite Bewegungsachse, welche mit einer Arbeitseinheit, wie einem Greifer ausgestattet ist, entlang eines Transportabschnittes der Transportanlage zwischen verschiedenen Arbeitspositionen innerhalb eines sich über die Breite eines Lagerrahmenmodules hinweg ausdehnenden Arbeitsbereiches verstellt werden. Beispielweise kann die zweite Bewegungsachse entlang einem Verstellweg von bis zu zehn Lagerrahmenmodulen bewegt werden. Der Verstellweg kann abhängig von der Produktionsleistung der Fertigungsanlage variieren. Je höher die Produktionsleistung, desto geringer der Verstellweg. Demnach kann die höchste Produktionsleistung erreicht werden, wenn sich der Verstellweg auf die Breite von einem Lagerrahmenmodul beschränkt. Andererseits wird der mechanische und steuerungstechnische Aufwand reduziert, wenn der Verstellweg für die zweite Bewegungsachse durch die Breite von mehreren Lagerrahmenmodulen definiert wird. Auch kann ein besonders robuster und gegen Schwingungen unempfindlicher "Portalrahmen" geschaffen werden. Sind höchste Produktionsleistungen erforderlich, kann die eine Arbeitsstation sehr einfach ausgewechselt und durch mehrere einzelne Arbeitsstationen ersetzt werden, welche eine Parallelisierung von Arbeitsprozessen ermöglichen.

Es ist auch von Vorteil, wenn ein elektrisch steuerbarer erster Linearantrieb und ein elektrisch steuerbarer zweiter Linearantrieb vorgesehen sind, welcher zweiter Linearantrieb sich parallel zur Transportrichtung entlang mehrerer Lagerrahmenmodule durchgehend erstreckt, wobei das erste Linearführungssystem und der erste Linearantrieb eine erste Führungs- und Antriebseinheit und das zweite Linearführungssystem und der zweite Linearantrieb eine zweite Führungs- und Antriebseinheit bilden und derart angeordnet sind, dass die erste Bewegungsachse an ihren Endbereichen über die Linearführungssysteme geführt und mittels der Linearantriebe mit Antriebskräften beaufschlagbar ist. Die Linearantriebe sind elektrisch synchronisiert, sodass die erste Bewegungsachse mit hoher Laufgenauigkeit entlang der Linearführungssysteme bewegt und die Arbeitspositionen wiederholgenau angefahren werden können. Auch können Schwingungen bei sehr hohen Stellgeschwindigkeiten für die erste Bewegungsachse und/oder zweite Bewegungsachse kompensiert werden, da die erste Bewegungsachse quasi zwischen den Führungs- und Antriebseinheiten "eingespannt" ist. Die Zusammenlegung der Linearführungssysteme und Linearantriebe zu je einer Führungs- und Antriebseinheit erlaubt außerdem einen sehr kompakten Aufbau der Arbeitsstation. Die Führungs- und Antriebseinheiten können jeweils als eine Baueinheit an den Lagerrahmenmodulen montiert werden, wodurch ein besonders einfacher und rascher Wechselvorgang von Arbeitsstationen angepasst auf unterschiedliche Anwendungsfälle möglich ist.

Zum besseren Verständnis der Erfindung wird diese anhand der nachfolgenden Figuren näher erläutert.

Es zeigen jeweils in stark schematisch vereinfachter Darstellung:
- Fig. 1: eine Fertigungsanlage mit einer möglichen Ausführung für eine Transportanlage zur Beförderung von Teilen mittels Teileträger und in Transportrichtung hintereinander angeordneten Arbeitsstationen und Teilebereitstellungsstationen in perspektivischer Ansicht;
- Fig. 2: die Transportanlage nach Fig. 1 in Seitenansicht;
- Fig. 3: die Transportanlage nach Fig. 1 in Draufsicht;
- Fig. 4, 5: ein Traggehäuse für die Transportanlage und Lagerrahmenmodule für in diesen auswechselbar gelagerten Arbeitsstationen und Teilebereitstellungsstationen in unterschiedlichen Ansichten;
- Fig. 6, 7: ein inneres Tragrahmenmodul mit auswechselbaren Schaltkastenmodulen und einem Schaltschrankmodul in unterschiedlichen Ansichten;
- Fig. 8: das Tragrahmenmodul gemäß den Fig. 6, 7 mit aus diesem entfernten Schaltkastenmodulen und dem eingeschwenkten Schaltschrankmodul in perspektivischer Ansicht;
- Fig. 9: ein Schaltkastenmodul in perspektivischer Ansicht;
- Fig. 10: das Tragrahmenmodul gemäß den Fig. 6, 7 mit in diesem befindlichen Schaltkastenmodulen und dem ausgeschwenkten Schaltschrankmodul, wobei ein rechter Vertikalrahmenteil entfernt ist, in perspektivischer Ansicht;
- Fig. 11: ein Lagerrahmenmodul mit einer Arbeitsstation und Teilebereitstellungsstation in perspektivischer Ansicht;
- Fig. 12: ein Lagerrahmenmodul mit entfernter Arbeitsstation und Teilebereitstellungsstation in perspektivischer Ansicht;
- Fig. 13: ein Längsschnitt durch die äußeren und zwei inneren Tragrahmenmodule, einen Ausschnitt der Transportanlage und einige der Lagerrahmenmodule;
- Fig. 14: eine Ausschnittsvergrößerung aus Fig. 13;
- Fig. 15: eine an mehreren separaten Lagerrahmenmodulen gelagerte Arbeitsstation;
- Fig. 16: ein Abschnitt vom Lagerrahmenmodul mit einem daran angeordneten Subschaltkastenmodul in Ansicht gemäß der Linie XVI in Fig. 12;
- Fig. 17: einen ersten Gehäuseteil, einen zweiten Gehäuseteil, eine Dichtung und eine Kontaktplatte für das Subschaltkastenmodul gemäß Fig. 16;
- Fig. 18: eine Fertigungsanlage mit einer möglichen Ausführung für eine Transportanlage zur Beförderung von Teilen mittels Teileträger und in Transportrichtung hintereinander angeordneten Arbeitsstationen und Teilebereitstellungsstationen mit möglichen Einhausungen der gesamten Fertigungsanlage oder einzelner Arbeitsstationen in perspektivischer Ansicht.
- Fig. 19: die Transportanlage nach Fig. 18 mit Einhausung einer einzelnen Arbeitsstation in Seitenansicht;
- Fig. 20: die Transportanlage nach Fig. 18 mit Einhausung einer einzelnen Arbeitsstation in Draufsicht;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

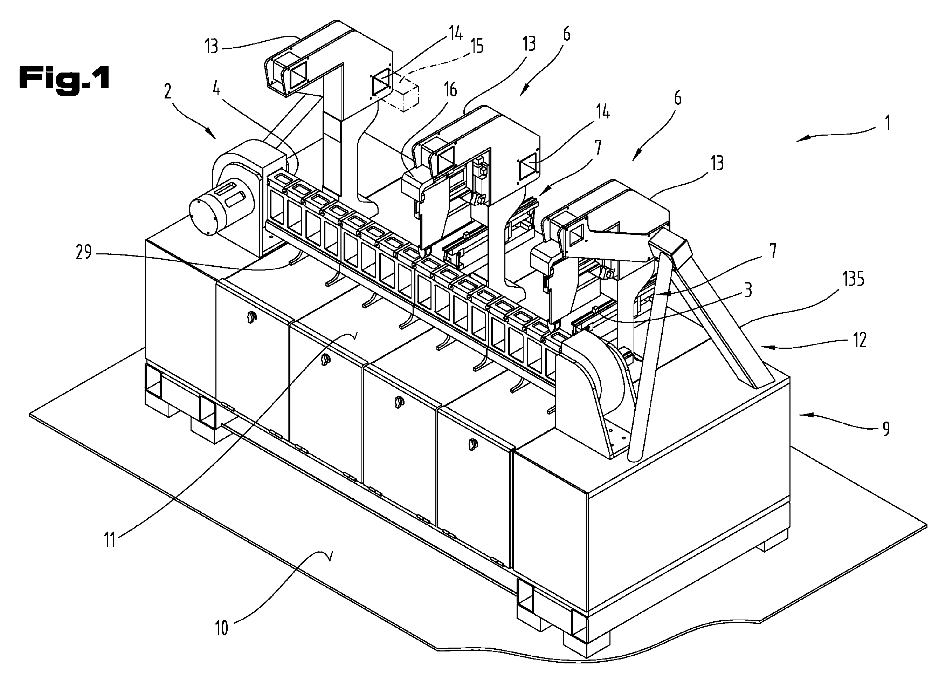

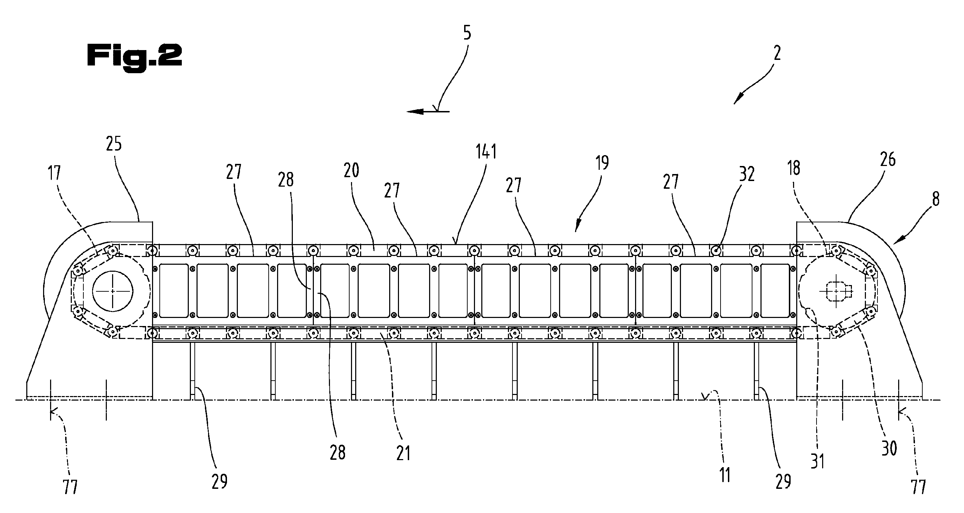

Fig. 1 zeigt eine bevorzugt automatisiert betriebene Fertigungsanlage 1, welche zumindest eine Transportanlage 2 zur Beförderung von Teilen 3 mittels Teileträgern 4 und entlang eines Transportabschnittes in Transportrichtung 5 (Fig. 2) hintereinander angeordnete, bevorzugt automatisiert betriebene Arbeitsstationen 6 und bevorzugt automatisiert betriebene Teilebereitstellungsstationen 7 umfasst. Nach dieser Ausführung umfasst die Transportanlage 2 bloß einen Transportabschnitt. Genauso gut kann eine andere Transportanlage vorgesehen werden, wie sie beispielweise aus der WO 02/72453 A2 bekannt geworden ist, welche in Transportrichtung mehrere Transportabschnitte umfasst und an zumindest einem der Transportabschnitte die Arbeitsstationen 6 und/oder Teilebereitstellungsstationen 7 angeordnet sind.

Die Transportanlage 2 nach gezeigter Ausführung, umfasst einen Grundrahmen 8 und kann über diesen auf einem Traggehäuse 9 aufgebaut werden, wie noch genauer beschrieben wird. Der Grundrahmen 8 bildet Anschlussschnittstellen aus. Diese sind nach gezeigter Ausführung an den Umlenkstationen 25, 26 ausgebildet.

Die Anzahl der Arbeitsstationen 6 und/oder Teilebereitstellungsstationen 7 kann abhängig von der Komplexität des herzustellenden Produktes variieren. So kann die Fertigungsanlage 1 auch nur eine Arbeitsstation 6 oder eine Arbeitsstation 6 und eine Teilebereitstellungsstation 7 umfassen. Die Arbeitsstationen 6 und Teilebereitstellungsstationen 7 sind bevorzugt automatisiert betrieben.

In der Fig. 1 sind aus Gründen der besseren Übersicht bloß zwei Arbeitsstationen 6 und bloß zwei Teilebereitstellungsstationen 7 gezeigt. Üblicherweise umfassen solche Fertigungsanlagen 1 bis zu zwanzig Arbeitsstationen 6 je Transportabschnitt der Transportanlage 2.

Die Arbeitsstationen 6 und Teilebereitstellungsstationen 7 sind an einer speziell gestalteten Rahmenkonstruktion 12 angeordnet, wobei eigenständige Lagerrahmenmodule 13 ebenso auf dem Traggehäuse 9 aufgebaut werden können, wie noch genauer beschrieben wird.

Zusätzlich können die Lagerrahmenmodule 13 über parallel zur Transportrichtung 5 des Transportabschnittes verlaufende und durch Aufnahmeöffnungen 14 hindurchgeführte Längstraversen 15, wie in strichpunktierte Linien angedeutet, miteinander verbunden werden. Die Längstraversen 15 werden in den Aufnahmeöffnungen 14 bevorzugt verdrehgesichert gehalten. Die Aufnahmeöffnungen 14 werden von, Seitenwände n120 der Lagerrahmenmodule 13 verbindenden Formprofilen ausgebildet.

Dadurch können die Lagerrahmenmodule 13 zu einer selbsttragenden Rahmenkonstruktion 12 verbunden werden, welche sich durch ihren modularen Aufbau auszeichnet. Jedes Lagerrahmenmodul 13 bildet dabei ein Aufnahmemodul.

Wie in der Fig. 1 eingetragen, sind zwei der drei dargestellten Lagerrahmenmodule 13 jeweils mit einer Arbeitsstation 6 und/oder einer Teilebereitstellungsstation 7 ausgestattet. Das dritte Lagerrahmenmodul 13 ist hingegen aus Gründen der besseren Übersicht nicht mit einer Arbeitsstation 6 und/oder einer Teilebereitstellungsstation 7 bestückt.

Die Arbeitsstationen 6 umfassen nach gezeigter Ausführung eine Handhabungsvorrichtung 16 mit einem Greifer, mit dem ein an der Teilebereitstellungsstation 7 bereitgestellter Teil 3 übernommen und auf einen Teileträger 4 übergeben werden kann.

Andererseits kann eine Arbeitsstationen 6 ein Prozessmodul, beispielweise eine Pressvorrichtung umfassen. In diesem Fall kann ein Teil 3 bereits an einer in Transportrichtung 5 vorangegangenen Arbeitsstationen 6 auf den Teileträger 4 übergeben und zu der in Transportrichtung 5 nachfolgenden Arbeitsstationen 6 transportiert worden sein, wo die Teile 3 miteinander gefügt werden. Eine gesonderte Teilebereitstellungsstation 7 kann an dieser Arbeitsstation 6 entfallen.

Die Teilebereitstellungsstation 7 umfasst eine Beschickungsvorrichtung zum Fördern und/oder Vereinzeln, mit welcher die Teile 3 aus einem nicht dargestellten Schüttgutbehälter bzw. Teilespeicher entnommen, vereinzelt und/oder ausgerichtet und in einen Bereitstellungsbereich gefördert werden, von wo die Teile 3 beispielweise mittels der Handhabungsvorrichtung 16 entnommen werden. Die Teile 3 werden beispielsweise durch Pfropfen, Scheiben, Stifte, Kontakte etc. gebildet. Solche Teilebereitstellungsstationen 7 sind beispielweise in der EP 0 637 559 A1, EP 1 460 006 A1 oder der DE 44 34 146 A1 bekannt geworden.

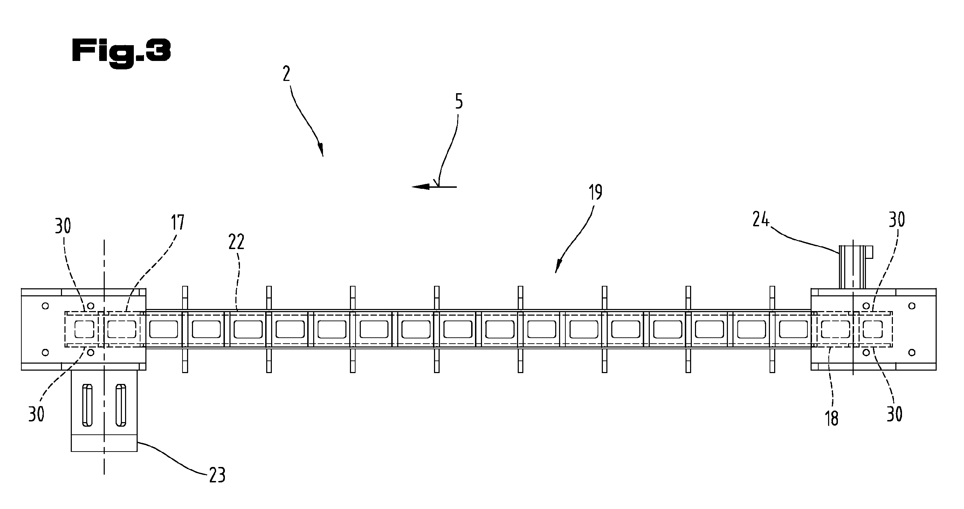

In den Fig. 2 und 3 sind die Transportanlage 2 und Teileträger 4 in unterschiedlichen Ansichten gezeigt.

Die Transportanlage 2 umfasst neben dem Grundrahmen 8, an diesem drehbar gelagerte Umlenkräder 17, 18, eine um die Umlenkräder 17, 18 über Formschluss geführte Transportkette 19 mit einem vorlaufenden, oberen Strang 20 und einem rücklaufenden, unteren Strang 21, eine sich zwischen den Umlenkrädern 17, 18 erstreckende Führungsvorrichtung 22 für den vorlaufenden, oberen Strang 20, einen mit dem ersten Umlenkrad 17 gekuppelten Vorschubantrieb 23 zur Fortbewegung der Transportkette 19 in Transportrichtung 5 und gegebenenfalls einen mit dem zweiten Umlenkrad 18 gekuppelten Bremsantrieb 24.

Der Grundrahmen 8 der Transportanlage 2 umfasst Umlenkstationen 25, 26 für die Aufnahme der Umlenkräder 17 ,18 und damit der Transportkette 19. Weiters umfasst der Grundrahmen 8 mehrere, zwischen den Umlenkstationen 25, 26 angeordnete Gehäuseteile 27. Diese Gehäuseteile 27 weisen einander zugewandte Stirnplatten 28 auf, die untereinander über nicht dargestellte Führungs- und/oder Kupplungsvorrichtungen zu der selbsttragenden Tragkonstruktion verbunden werden können. Der aus den Umlenkstationen 25, 26 und Gehäuseteilen 27 gebildete Grundrahmen 8 der Transportanlage 2 ist über Stützvorrichtungen 29 auf dem Traggehäuse 9 aufgebaut.

Die Umlenkstationen 25, 26 umfassen jeweils einen Gehäuseteil, ein an diesem drehbar gelagertes Umlenkrad 17, 18 und nicht dargestellte Führungsleistenteile, wobei letztere im Detail in der WO 89/06177 A1 beschrieben sind. Dadurch werden auch die durch den Polygoneffekt hervorgerufenen unterschiedlichen Kettengeschwindigkeiten im Umlenkbereich der Transportkette 19 ausgeglichen. Dies ermöglicht einen dynamischen Betrieb der Transportanlage 2. Die Transportkette 2 kann mit sehr hohen Vorschubgeschwindigkeiten angetrieben werden, was durch den speziellen Aufbau der Transportanlage 2 auch möglich ist.

Die Umlenkräder 17, 18 umfassen jeweils starr miteinander verbundene Umlenkscheiben 30 und in diesen am Außenumfang vertieft angeordnete, diametral gegenüberliegende Eingriffsnuten 31. Die Teileträger 4 umfassen an ihren in Transportrichtung 5 verlaufenden Längsseiten Führungsrollen, welche in Eingriffsnuten 31 der Umlenkscheiben 30 formschlüssig eingreifen, wenn die Transportkette 19 im Umlenkbereich um die Umlenkräder 17, 18 geführt wird.

Die Transportkette 19 umfasst über Gelenkachsen 32 gelenkig miteinander verbundene Kettenglieder, welche nach gezeigter Ausführung die Teileträger 4 bilden. Die Gelenkachse 32 verbindet jeweils zwei aufeinander folgende Teileträger 4 und verläuft parallel zur Drehachse der Umlenkräder 17, 18.

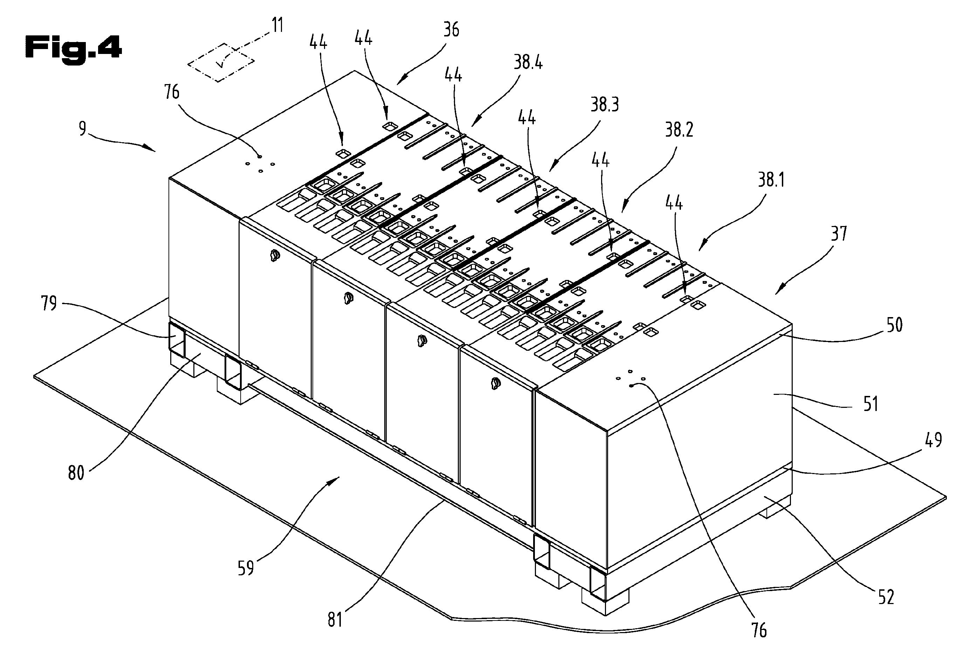

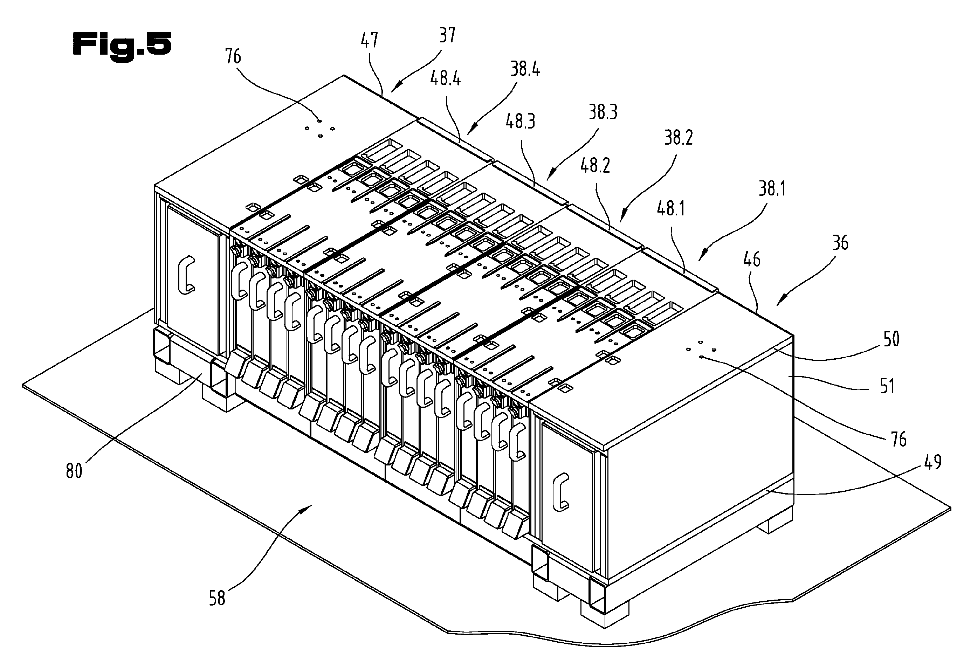

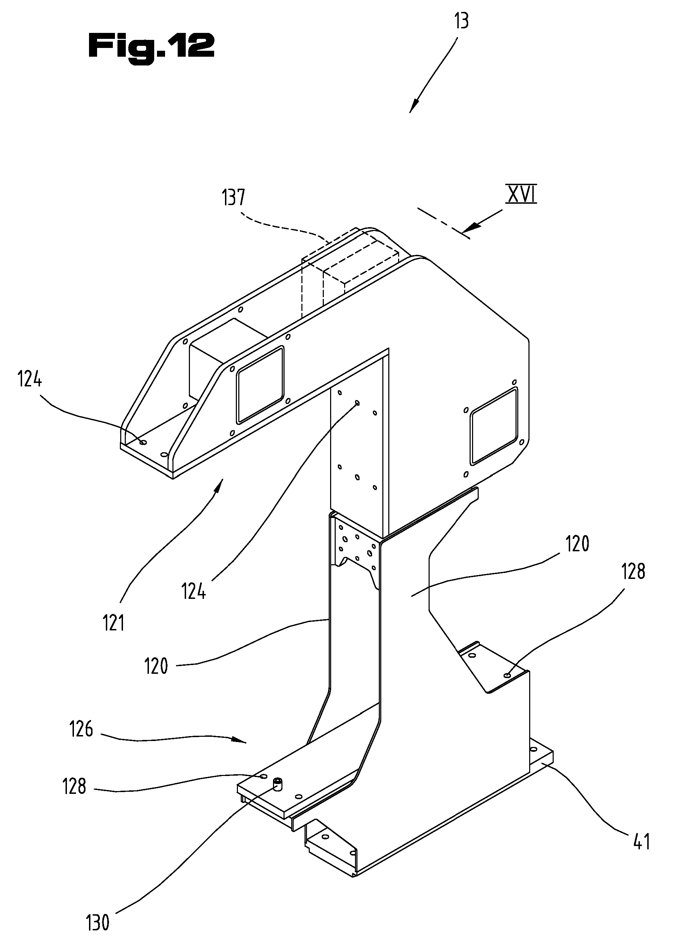

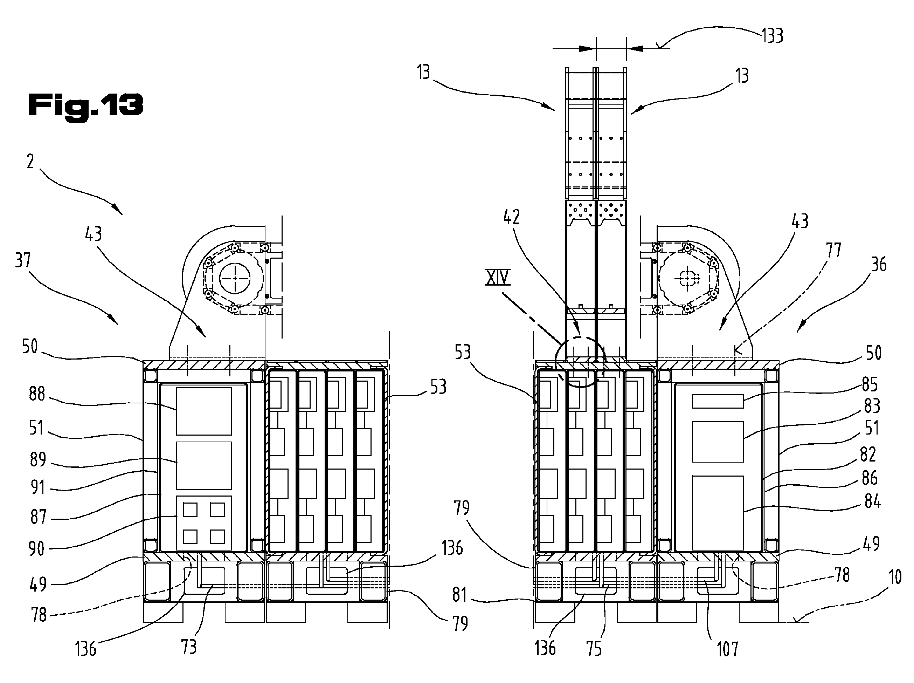

In den Fig. 4 und 5 ist das Traggehäuse 9 von unterschiedlichen Ansichten gezeigt. Dieses umfasst Tragrahmenmodule 36, 37, 38.1, 38.2, 38.3, 38.4, welche ihrerseits jeweils einen Bodenplattenteil 49 und einen Montageplattenteil 50 umfassen. Der Bodenplattenteil 49 und Montageplattenteil 50 sind über Vertikalrahmenteile 51 miteinander verbunden. Die Montageplattenteile 50 bilden auf ihrer, den Bodenplattenteilen 50 abgewandten Oberseite, eine Montageebene 11 aus, auf welcher die Transportanlage 2 über ihren Grundrahmen 8 und die Lagerrahmenmodule 13 über ihre Anschlussplatten 41 (Fig. 12, 13) abstützbar und über Befestigungsvorrichtungen 42, 43 (Fig. 13) bevorzugt lösbar mit dem Traggehäuse 9 verbunden sind.

Sämtliche Lagerrahmenmodule 13 sind im Wesentlichen gleichartig ausgebildet. Zwar kann die Konstruktion der Lagerrahmenmodule 13 entsprechend der Ausgestaltung der Arbeitsstationen 6 und/oder Teilebereitstellungsstationen 7 geringfügig variieren, jedoch ist zumindest die Anschlussplatte 41 sämtlicher Lagerrahmenmodule 13 identisch gestaltet. Das Lagerrahmenmodul 13 bildet eine Anschlussschnittstelle aus. Diese ist nach gezeigter Ausführung an der Anschlussplatte 41 ausgebildet.

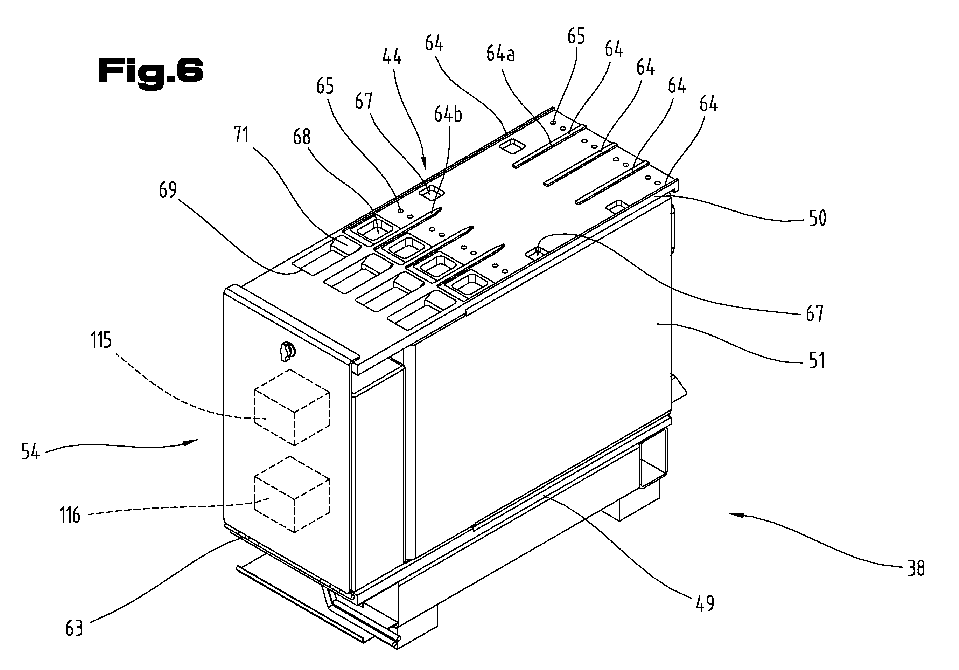

Die Tragrahmenmodule 36, 37, 38.1, 38.2, 38.3, 38.4 sind nebeneinander in einer Längsreihe angeordnet und jeweils über Befestigungsvorrichtungen 44 so zueinander verbunden, das sie das Traggehäuse 9 ausbilden. Die Befestigungsvorrichtungen 44 umfassen Aussparungen 67 (Fig.6) und nicht dargestellte Verbindungselemente, beispielsweise Schrauben, sodass die Tragrahmenmodule 36, 37, 38.1, 38.2, 38.3, 38.4 lösbar miteinander verbunden werden können. Das Vorsehen der Befestigungsvorrichtungen 44 ermöglicht die Aneinanderreihung einer beliebigen Anzahl von Tragrahmenmodulen 38.

Es kann auch nur ein einziges Tragrahmenmodul 38 vorgesehen werden, welches über die Befestigungsvorrichtungen 44 mit den äußeren Tragrahmenmodulen 36, 37 verbunden wird.

Andererseits können auch mehrere Tragrahmenmodule 38.1, 38.2, 38.3, 38.4 vorgesehen werden, welche über die Befestigungsvorrichtungen 44 jeweils mit dem benachbarten Tragrahmenmodul 38.1, 38.2, 38.3, 38.4 und mit den äußeren Tragrahmenmodulen 36, 37 verbunden werden. Beispielweise können bis zu zehn, insbesondere sechs Tragrahmenmodule 38 nebeneinander angeordnet werden.

Bevorzugt sind einerseits die äußeren Tragrahmenmodule 36, 37 gleich oder gegengleich ausgebildet. Die inneren Tragrahmenmodule 38.1, 38.2, 38.3, 38.4 sind bevorzugt jeweils gleichartig ausgebildet. Die äußeren Tragrahmenmodule 36, 37 können unterschiedliche Funktionseinheiten 46, 47 umfassen.

Die erste Funktionseinheit 46 kann ein Antriebsschrankmodul 82 mit einer elektrischen Energieversorgungseinheit 83, elektronischen Steuerungsvorrichtung mit einer Rechnereinheit 84 für die Transportanlage 2 und/oder Kommunikationsschnittstelle 85 zum Anschluss der Rechnereinheit 84 an ein Datenbussystem 107 umfassen.

Die zweite Funktionseinheit 47 kann ein Technologieschrankmodul 87 mit einer Arbeitsmittelversorgungseinheit 88, einer Aufbereitungseinheit 89 für Druckmedium und/oder elektrisch betätigbare Schalteinheiten 90 umfassen.

Die inneren Tragrahmenmodule 38.1, 38.2, 38.3, 38.4 können grundsätzlich gleichartige Funktionseinheiten 48.1, 48.2, 48.3, 48.4 umfassen.

Die dritte Funktionseinheit 48 kann eine den Arbeitsstationen 6 entsprechende Anzahl an Schaltkastenmodule 53, welche jeweils mit einer ersten Ansteuerschaltung 99 für eine Arbeitsstation 6 ausgestattet ist, und/oder ein Schaltschrankmodul 54, welches mit einer Rechnereinheit 115 ausgestattet ist, die ihrerseits über eine Kommunikationsleitung 70, 107 mit den Ansteuerschaltungen 99 von mehreren Arbeitsstationen 6 verbunden ist, umfassen.

Weiters kann die dritte Funktionseinheit 48 eine den Teilebereitstellungsstationen 7 entsprechende Anzahl an Schaltkastenmodule 53 umfassen, welche jeweils mit einer zweiten Ansteuerschaltung 100 für eine Teilebereitstellungsstation 7 ausgestattet sind, wobei die Ansteuerschaltungen 100 über eine Kommunikationsleitung 107 mit der Steuerungsvorrichtung, insbesondere der Rechnereinheit 84 des Antriebsschrankmodules 82 verbunden ist.

Jeder dieser Tragrahmenmodule 36, 37, 38 umfasst einen Bodenplattenteil 49, einen Montageplattenteil 50 und Vertikalrahmenteile 51, welche zu einer selbstragenden Gehäuseeinheit miteinander verbunden sind. Im montierten Zustand der Tragrahmenmodule 36, 37, 38 bilden die Bodenplattenteile 49 eine einteilige Bodenplatte und die Montageplattenteile 50 eine einteilige Montageplatte.

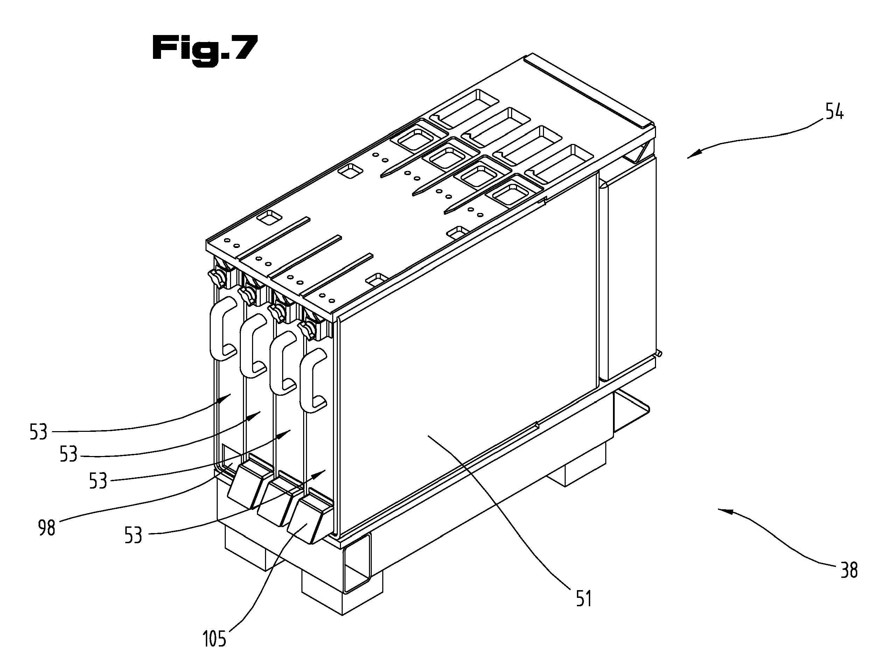

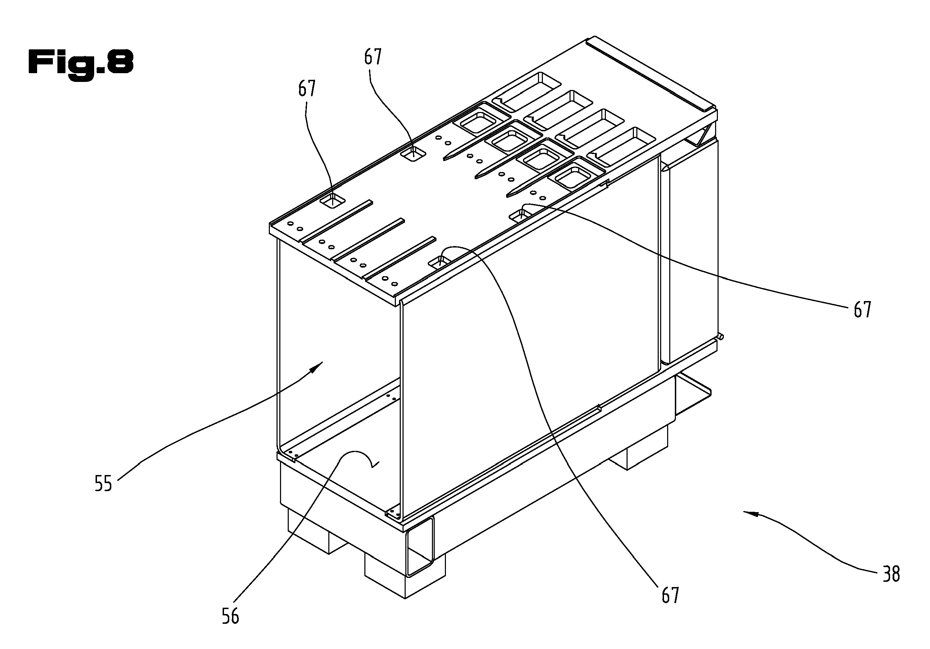

In den Fig. 6 bis 8 ist eine mögliche Ausführung des Tragrahmenmodules 38 gezeigt, wobei in Fig. 7 das Tragrahmenmodul 38 mit Schaltkastenmodulen 53 und in Fig. 8 ohne Schaltkastenmodule 53 dargestellt ist. Die Schaltkastenmodule 53 sind vorzugsweise durch Einschubmodule gebildet.

Das Tragrahmenmodul 38 umfasst den Bodenplattenteil 49, den Montageplattenteil 50 und die Vertikalrahmenteile 51, wobei der Bodenplattenteil 49 und Montageplattenteil 50 über die Vertikalrahmenteile 51 auf Abstand gehalten und zueinander parallel verlaufen. Die Vertikalrahmenteile 51 sind Winkelprofile, welche mit dem Bodenplattenteil 49 und Montageplattenteil 50 verbunden sind.

Das Tragrahmenmodul 38 ist mit der Funktionseinheit 48 ausgestattet, welche eine der Anzahl an Arbeitsstationen 6 und/oder Teilebereitstellungsstationen 7 entsprechende Anzahl an Schaltkastenmodule 53 (Fig. 7) und zumindest ein Schaltschrankmodul 54 umfasst. Das Schaltschrankmodul 54 ist vorzugsweise durch ein Kippmodul gebildet. Denkbar ist aber auch eine Ausführung als Einschubmodul.

Die Schaltkastenmodule 53 werden nebeneinander in einem Aufnahmeschacht 55 (Fig. 8) untergebracht und können unabhängig voneinander in den Aufnahmeschacht 55 eingeschoben oder aus dem Aufnahmeschacht 55 herausgezogen werden.

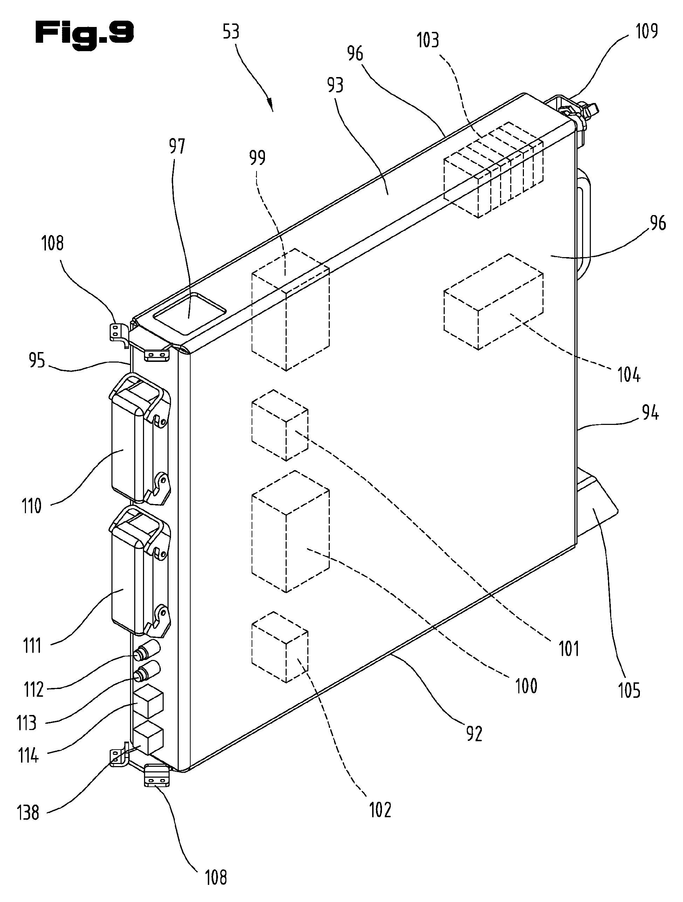

Vorzugsweise bildet zumindest der Bodenplattenteil 49 eine Auflagefläche 56 aus, sodass die Schaltkastenmodule 53 beim Einschieben an der Auflagefläche 56 aufliegen können. In der eingeschobenen Position der Schaltkastenmodule 53 können sich diese mit ihren einander zugewandten Seitenwänden 96 (Fig. 9) gegeneinander und gegen die Vertikalrahmenteile 51 abstützen, wie in Fig. 7 ersichtlich.

Der Aufnahmeschacht 55 ist durch einander zugewandte Innenseiten der Boden- und Montageplattenteile 49, 50 in der Höhe und einander zugewandte Innenseiten der Vertikalrahmenteile 51 in der Breite begrenzt und ist von einer Rückseite 58 (Fig. 5) des Tragrahmenmodules 38 zugänglich.

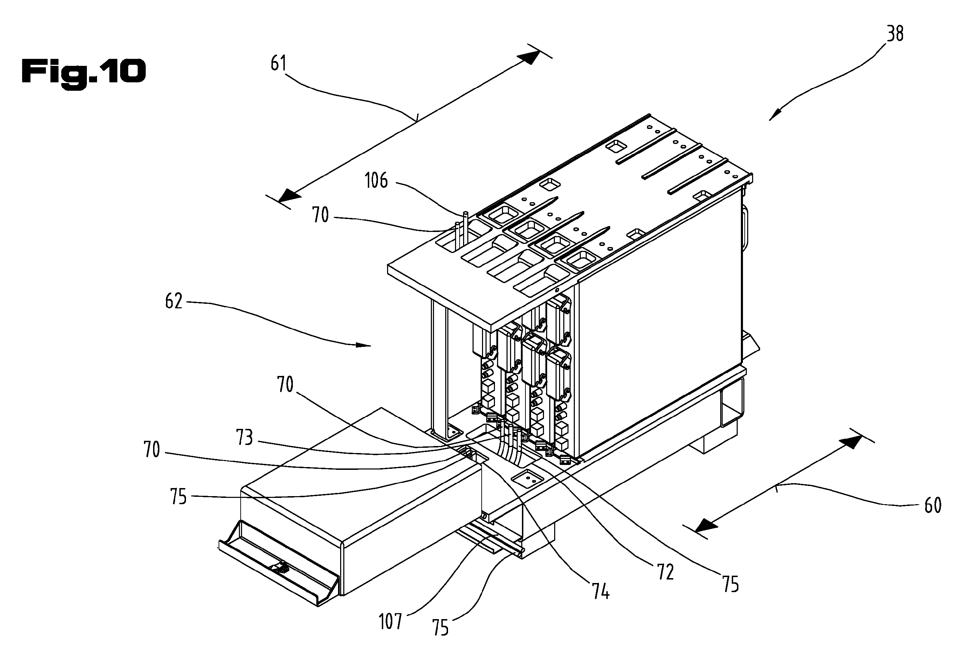

Der Aufnahmeschacht 55 erstreckt sich von der Rückseite 58 des Tragrahmenmodules 38 in Richtung einer Vorderseite 59 (Fig. 4) des Tragrahmenmodules 38. Eine Schachttiefe 60 ist geringer als eine Gehäusetiefe 61 des Tragrahmenmodules 38, sodass sich in der Verlängerung des Aufnahmeschachtes 55 ein Aufnahmeraum 62 für das Schaltschrankmodul 54 ergibt, wie in Fig. 10 ersichtlich.

Das Schaltschrankmodul 54 ist relativ zum Aufnahmeschacht 55 zwischen einer ersten Stellung (Fig. 6) und einer zweiten Stellung (Fig. 10) bewegbar, sodass der Aufnahmeschacht 55 bzw. die Schaltkastenmodule 53 von der Vorderseite 58 des Tragrahmenmodules 38 zugänglich ist bzw. sind, wie noch anhand Fig. 10 näher beschrieben wird. Vorzugsweise ist das Schaltschrankmodul 54 über eine Scharnieranordnung 63 mit dem Bodenplattenteil 49 gelenkig verbunden.

Wie in den Fig. 4, 5 und 6 auch ersichtlich, bildet der Montageplattenteil 50 einen Abschnitt der Montageebene 11 aus und ist an seiner dem Bodenplattenteil 49 abgewandten Oberseite mit aus Führungsschienen 64 gebildeten Führungsvorrichtungen versehen, wobei je Lagerrahmenmodul 13 eine Führungsvorrichtung vorgesehen ist.

Die Führungsschienen 64 verlaufen parallel zueinander und bilden voneinander getrennte Führungsschienenabschnitte 64a, 64b aus. Genauso gut können sich die Führungsschienen 64 aber auch durchgehend erstrecken. Die Führungsschienen 64 können aus dem vollen Material des Montageplattenteiles 50 heraus gefräst sein. Andererseits können die Führungsschienen 64 als separate Bauteile hergestellt und am Montageplattenteil 50 befestigt werden. Nach gezeigter Ausführung ragen die Führungsschienen 64 über die Montageebene 11 vor. Alternativ dazu können in die Montageebene 11 Aufnahmenuten eingearbeitet werden, sodass die Montageebene 11 ebenflächig ist.

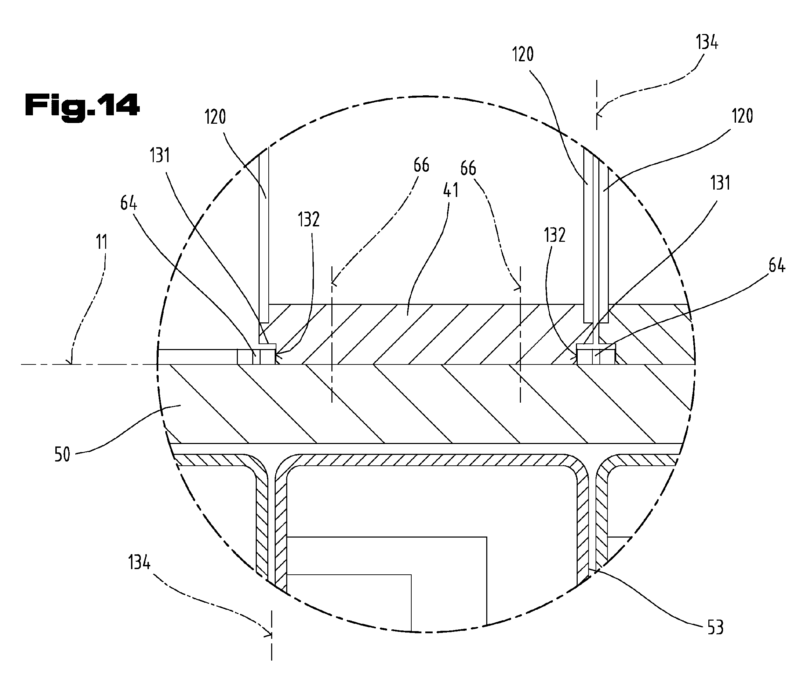

Am Montageplattenteil 50 eines Tragrahmenmodules 38 sind auch Befestigungslöcher 65 vorgesehen, an welchen über Verbindungselemente 66 (Fig. 14), beispielweise Schrauben, die Befestigung der Lagerrahmenmodule 13 an dem Montageplattenteil 50 und somit an einem Tragrahmenmodul 38 erfolgen kann. Ebenso können nicht dargestellte Positionierlöcher vorgesehen werden, in welchen Passstifte einsetzbar sind. Damit wird zusätzlich eine Feinpositionierung der Lagerrahmenmodule 13 relativ zu einem Tragrahmenmodul 38.1, 38.2, 38.3, 38.4 ermöglicht. Die Führungsvorrichtung, Befestigungslöcher 65, Verbindungselemente 66 und gegebenenfalls die Positionierlöcher sowie Passstifte bilden dabei die Befestigungsvorrichtung 42, wie in Fig. 13 eingetragen.

Jeder Montageplattenteil 50 kann mit vier in Transportrichtung 5 nebeneinanderliegenden und identischen Aufnahmen für Lagerrahmenmodule 13, wie sie im obigen Absatz beschrieben sind, ausgestattet werden. Wenn der Rasterabstand 90mm beträgt, so beträgt die Länge eines Montageplattenteiles 50 in Transportrichtung 5 gesehen dem vierfachen Rasterabstand, also 360mm. Wenn der Rasterabstand 360mm beträgt, so beträgt die Länge eines Montageplattenteiles 50 1440mm.

Ferner kann der Montageplattenteil 50 Aussparungen 67 und in diesen einmündende, nicht dargestellte Bohrungen umfassen, die derart angeordnet und ausgebildet sind, dass nicht dargestellte Verbindungselemente, beispielweise Schrauben, angebracht und benachbarte Tragrahmenmodule 36, 37, 38.1, 38.2, 38.3, 38.4 im oberen Bereich ihrer Vertikalrahmenteile 51 lösbar miteinander verbunden werden können. Diese Verbindungselemente können etwa Laschen sein, welche zwei benachbarte Tragrahmenmodule 36, 37, 38 überspannen, wodurch diese miteinander verbunden werden können.

Es ist weiters möglich, dass der Montageplattenteil 50 mit Durchgangsöffnungen 68 versehen ist, wobei jede Durchgangsöffnung 68 sich mit einer Luftaustrittsöffnung 97 (Fig. 9) im Einschubgehäuse eines Schaltkastenmodules 53 deckt, wenn sich dieses Schaltkastenmodul 53 im Aufnahmeschacht 55 (Fig. 7) befindet. Nicht eingetragen sind die Gitterabdeckungen, welche auf die Durchgangsöffnungen 68 aufgesetzt werden.

Der Montageplattenteil 50 kann auch je Arbeitsstation 6 und/oder Teilebereitstellungsstation 7 einen sich durch diesen hindurch erstreckenden Führungskanal 69 für Leitungen 70 umfassen, welcher eine Schrägfläche 71 zur Umlenkung der aus dem Führungskanal 69 herausgeführten Leitungen 70 ausbildet. Die Leitungen 70 sind elektrische und/oder fluidische Leitungen zur Versorgung der Arbeitsstationen 6 und/oder Teilebereitstellungsstationen 7 mit elektrischer Energie und/oder mit fluidischen Medien, beispielsweise Druckluft oder Hydrauliköl. Ebenso kann eine der Leitungen 70 eine Kommunikationsleitung für die Datenkommunikation mit einem Datenbus sein. Andererseits kann die Leitung 70 auch eine Technologieleitung sein, beispielsweise eine Versorgungsleitung für Schmierstoff, Kühlflüssigkeit und dgl., sofern im Schaltschrankmodul 54 eine Arbeitsmittelversorgungseinheit und dgl. vorgesehen ist. Einige der Leitungen 70 werden aus dem Schaltschrankmodul 54 an der Bodenwand aus einer nicht gezeigten Durchgangsöffnungen herausgeführt und durch die Durchgangsöffnungen 72, 74 (Fig. 10) sowie dem Führungskanal 69 hindurchgefädelt. Eine Rechnereinheit 115 ist über eine andere der Leitungen 70, wie etwa eine Kommunikationsleitung an einen Datenbus, beispielsweise ein adressbasiertes Netzwerk, angeschlossen. Diese Leitung 70 wird durch die Durchgangsöffnung 72 hindurchgefädelt, wie dies in den Fig. 10 ersichtlich ist.

Wie nicht dargestellt, kann auch der Bodenplattenteil 49 Aussparungen 67 und in diesen einmündende nicht dargestellte Bohrungen umfassen, die derart angeordnet und ausgebildet sind, dass nicht dargestellte Verbindungselemente, beispielweise Schrauben, angebracht und benachbarte Tragrahmenmodule 36, 37, 38.1, 38.2, 38.3, 38.4 im unteren Bereich ihrer Vertikalrahmenteile 51 lösbar miteinander verbunden werden können.

Andererseits können die Montageplattenteile 50 oder sowohl die Montageplattenteil 50 als auch die Bodenplattenteile 49 der miteinander zu verbindenden Tragrahmenmodule 36, 37, 38.1, 38.2, 38.3, 38.4 an ihren einander zugewandten Längsseitenkanten komplementär gestaltete Formschlusselemente ausbilden. In diesem Fall sind die Befestigungsvorrichtungen 44 zwischen den Tragrahmenmodulen 36, 37, 38.1, 38.2, 38.3, 38.4 jeweils durch ineinandergreifende Formschlusselemente gebildet. Beispielweise können die Tragrahmenmodule 36, 37, 38.1, 38.2, 38.3, 38.4 über Schwalbenschanzführungen lösbar miteinander verbunden sein.

Sind die Tragrahmenmodule 36, 37, 38.1, 38.2, 38.3, 38.4 über die Befestigungsvorrichtungen 44 miteinander verbunden, so bilden die Montageplattenteile 50 eine durchgehende bzw. einteilige Montageplatte und die Bodenplattenteile 49 eine durchgehende bzw. einteilige Bodenplatte aus.

Andererseits ist es auch denkbar, dass eine einzige Bodenplatte und/oder Montageplatte verwendet wird, welche sämtliche Tragrahmenmodule 36, 37, 38.1, 38.2, 38.3, 38.4 überspannt. In diesem Fall sind die Tragrahmenmodule 36, 37, 38.1, 38.2, 38.3, 38.4 ohne dem eigenständigen Bodenplattenteil 49 und Montageplattenteil 50 gestaltet und jeweils durch Vertikalrahmenteile 51 gebildet, welche mit der Innenseite der Bodenplatte und/oder Montageplatte verbunden werden.

Wie in Fig. 10 ersichtlich, kann das Tragrahmenmodul 38 im Bodenplattenteil 49 eine durch diesen hindurch erstreckende erste Durchführungsöffnung 72 für Leitungen 73, 75 und gegebenenfalls für die Leitungen 70 und eine sich durch diesen hindurch erstreckende zweite Durchführungsöffnung 74 für Leitungen 70, 75 umfassen.

Die Leitungen 73 sind fluidische Leitungen zur Versorgung der Arbeitsstationen 6 und/oder Teilebereitstellungsstationen 7 mit fluidischen Medien, beispielsweise Druckluft oder Hydrauliköl. Andererseits kann die Leitung 73 auch eine Technologieleitung sein, beispielsweise eine Versorgungsleitung für Schmierstoff, Kühlflüssigkeit, Druckluft, Vakuum, Einzelteile zur Montage wie Federn etc., ein Lichtwellenleiter und dgl., sofern im Technologieschaltschrankmodul 87 eine Arbeitsmittelversorgungseinheit 88, eine Aufbereitungseinheit 89 und dgl. vorgesehen ist. Die Leitungen 73 werden aus dem Technologieschaltschrankmodul 87 an der Bodenwand aus einer Durchgangsöffnung 78 (Fig. 13) herausgeführt und durch die Durchgangsöffnung 72 sowie dem Führungskanal 69 hindurchgefädelt.

Die erste Durchführungsöffnung 72 kann auch für Leitungen 75 verwendet werden. Diese Leitungen 75 sind elektrische Leitungen zur Versorgung der Schaltschrankmodule 53 mit elektrischer Energie. Die Leitungen 75 sind an eine Energieversorgungseinheit 83 (Fig. 13), insbesondere an einen Netzteil angeschlossen, welche im Antriebsschrankmodul 82 angeordnet ist. Auch können die elektrischen Versorgungsleitungen für unterschiedliche Spannungsversorgungen dienen, beispielweise 24 Volt und 100 Volt. Diese werden durch die erste Durchgangsöffnung 72 hindurchgefädelt und an einen Anschlussstecker 114 (Fig. 9, 10) angeschlossen. Ebenso werden elektrische Versorgungsleitungen durch die zweite Durchgangsöffnung 74 hindurchgefädelt und über die an der Bodenwand vorgesehen Durchgangsöffnung in das Schaltschrankmodul 54 hineingeführt.

Die Leitungen 75 können auch eine Kommunikationsleitung für die Datenkommunikation mit einem Datenbus umfassen. Ein Ein-/Ausgangsmodul 103 (Fig. 9), insbesondere eine Busklemmenreihe, welches in einem Schaltkastenmodul 53 angeordnet ist, ist über die Kommunikationsleitung an einen Datenbus, wie etwa ein adressbasiertes Netzwerk, angeschlossen. Die Kommunikationsleitung wird durch die erste Durchgangsöffnung 72 hindurchgefädelt und an einen Kommunikationsschnittstelle 138 (Fig. 9, 10) angeschlossen.

Wie in Fig. 10 an einem der Führungskanäle 69 eingetragen, führen aus den Führungskanälen 69 Leitungen 70, welche entweder vom Schaltschrankmodul 54 und/oder Technologieschrankmodul 87 wegführen, und Leitungen 106, welche entweder von den Anschlusssteckern 110, 112 (Fig. 9, 10) zu Antrieben und/oder Sensoren der Arbeitsstationen 6 und/oder Teilebereitstellungsstationen 7 hinführen und von elektrischen Gebern, insbesondere Inkrementalgeber, oder Sensoren der Arbeitsstationen 6 und/oder Teilebereitstellungsstationen 7 zu den Anschlusssteckern 111, 113 (Fig. 9, 10) zurückführen. Die Leitungen 106 sind elektrische Leitungen, insbesondere zur Energieversorgung der Arbeitsstation 6 und/oder Teilebereitstellungsstation 7 bzw. Signalleitungen von den Gebern/Sensoren.

Es sei an dieser Stelle hingewiesen, dass in Fig. 10 aus Gründen der besseren Übersicht nur eine Leitung 70, 72, 75, 106 dargestellt ist. Üblicherweise sind eine Vielzahl von Leitungen 70, 72, 75, 106 vorhanden, die jeweils zu einem Leitungsstrang gebündelt werden.

Wie aus den Fig. 4, 5 und 13 ersichtlich, umfasst das äußere Tragrahmenmodul 36 ebenfalls den Bodenplattenteil 49, den Montageplattenteil 50 und die Vertikalrahmenteile 51, wobei der Bodenplattenteil 49 und Montageplattenteil 50 über die Vertikalrahmenteile 51 auf Abstand gehalten und zueinander parallel verlaufen. Die Vertikalrahmenteile 51 sind durch waagrecht verlaufende Hohlprofile, auchHolme bezeichnet, und vertikal verlaufende Hohlprofile, auch Steher bezeichnet, gebildet, welche beispielweise durch Schweißen miteinander verbunden sind. Das äußere Tragrahmenmodul 37 ist bevorzugt gleichartig oder gegengleich gestaltet. Der Montageplattenteil 50 der Tragrahmenmodule 36, 37 bildet je einen Abschnitt der Montageebene 11 aus.

Der Montageplattenteil 49 ist wiederum mit Befestigungsvorrichtungen 44 versehen, welche gemäß den obigen Ausgestaltungen ausgeführt sein können.

Am Montageplattenteil 50 eines Tragrahmenmodules 36 oder 37 sind auch Befestigungslöcher 76 vorgesehen, an welchen über Verbindungselemente 77 (Fig. 2, 13), beispielweise Schrauben, die Befestigung des Grundrahmens 8 der Transportanlage 2, insbesondere der Umlenkstationen 25, 26 erfolgen kann. Ebenso können nicht dargestellte Positionierlöcher vorgesehen werden, in welchen Passstifte einsetzbar sind. Damit wird zusätzlich eine Feinpositionierung des Grundrahmens 8 relativ zum Tragrahmenmodul 36, 37 ermöglicht.

Die Befestigungslöcher 76, Verbindungselemente 77 und gegebenenfalls die Positionierlöcher sowie Passstifte bilden dabei die Befestigungsvorrichtung 43, wie in Fig. 13 eingetragen.

Wie in Fig. 13 in strichlierten Linien eingetragen, kann der Bodenplattenteil 49 auch eine sich durch diesen hindurch erstreckende Durchführungsöffnung 78 für die oben beschriebenen Leitungen 70, 73, 75 umfassen.

Es sei erwähnt, dass das Tragrahmenmodul 36 und das Tragrahmenmodul 37 identisch, beziehungsweise gegengleich ausgebildet sind. Es wird deshalb auf die obige Offenbarung hingewiesen. Lediglich unterschiedliche Funktionseinheiten 46, 47 werden verwendet. Das Tragrahmenmodul 36 ist mit der ersten Funktionseinheit 46 und das Tragrahmenmodul 37 ist mit der zweiten Funktionseinheit 47 ausgestattet.

Wie in den Fig.1, 4, 5 ersichtlich, sind die Tragrahmenmodule 36, 37, 38 über ein Untergestell 52 auf einem Boden 10 abgestützt.

Nach der gezeigten Ausführung, ist jedes Tragrahmenmodul 36, 37, 38 auf einem eigenständigen Untergestell 52 mit Aufstellfüßen aufgestellt. Das Untergestell 52, wie es in den Fig. 4, 5 für die Tragrahmenmodule 36, 37 und in den Fig. 6, 7 für das Tragrahmenmodul 38 näher dargestellt ist, umfasst mit Abstand parallel verlaufende Holme 79 und sich zwischen diesen erstreckende Streben 80, welche beispielweise durch Schweißen miteinander verbunden sein können. Die Holme 79 und Streben 80 können beispielweise in Form von geschlossenen oder offenen Hohlprofilen ausgeführt sein.

Wie auch in den Fig. 1 und 4 ersichtlich, kann sich integriert im Untergestell 52 zwischen den äußeren Tragrahmenmodulen 36, 37 zumindest ein Leitungsführungskanal 81 erstrecken, innerhalb welchem in Fig. 13 schematisch eingetragene Leitungen 75 für die elektrische Energieversorgung und/oder eine Datenbusleitung 107 verlegt werden. Der Leitungsführungskanal 81 bildet je Funktionseinheit 46 und/oder Funktionseinheit 47 und/oder Funktionseinheit 48 eine Durchgangsöffnung 136 aus, wie in Fig. 13 eingetragen.

Die Durchgangsöffnung 72 und/oder die Durchgangsöffnung 74 und/oder die Durchgangsöffnung 78 korrespondieren jeweils mit einer je Funktionseinheit 46; 47; 48 vorgesehenen Durchgangsöffnung 136 im Leitungsführungskanal 81, sodass die Leitungen 70, 73, 75 jeweils durch die Durchgangsöffnung 72; 74; 78 und zwischen den Streben 80 und anschließend durch die Durchgangsöffnung 136 hindurch in den Leitungsführungskanal 81 hinein geführt werden können. Dort kann auch der Anschluss an zentrale Leitungen, wie elektrische Versorgungsleitung 75 oder Datenbusleitung 107 erfolgen. Der Leitungsführungskanal 81 ist bevorzugt an der Vorderseite 59 angeordnet.

Wie in Fig. 13 schematisch eingetragen, kann die erste Funktionseinheit 46 ein Antriebsschrankmodul 82 mit einer elektrischen Energieversorgungseinheit 83, insbesondere ein Netzteil, einer elektronischen Steuerungsvorrichtung mit einer Rechnereinheit 84, auch als Hostrechner bezeichnet, für die Transportanlage 2, einer Kommunikationsschnittstelle 85 zum Anschluss der Rechnereinheit 84 an eine Kommunikationsleitung, insbesondere eine Datenbusleitung 107, für die Datenkommunikation umfassen. Umfasst der Vorschubantrieb 23 und/oder Bremsantrieb 24 einen servogeregelten Elektromotor, so ist im Antriebsschrankmodul 82 auch ein nicht dargestellter Regler angeordnet. Die Steuerungsvorrichtung kann auch eine Auswerteeinheit, insbesondere ein Logikprogramm, wie eine Software, zur Analyse von Betriebszuständen der Arbeitsstationen 6 und/oder Teilebereitstellungsstationen 7 umfassen. Das Antriebsschrankmodul 82 ist vorzugsweise ein Einschubmodul.

Das Antriebsschrankmodul 82 kann in einen Aufnahmeschacht 86 eingeschoben oder aus dem Aufnahmeschacht 86 herausgezogen werden. Der Aufnahmeschacht 86 ist durch einander zugewandte Innenseiten der Boden- und Montageplattenteile 49, 50 in der Höhe und einander zugewandte Innenseiten der Vertikalrahmenteile 51 in der Breite begrenzt und ist von einer Vorderseite 59 des jeweiligen Tragrahmenmodules 36, 37 zugänglich. Der Aufnahmeschacht 86 erstreckt sich von der Rückseite 58 des jeweiligen Tragrahmenmodules 36, 37 in Richtung einer Vorderseite 59 des jeweiligen Tragrahmenmodules 36, 37.

Das Antriebsschrankmodul 82 umfasst ein Einschubgehäuse mit einer Bodenwand, Deckenwand, Vorderwand und Seitenwänden, wobei an der Vorderwand, welche der Vorderseite 59 des jeweiligen Tragrahmenmodules 36, 37benachbart ist, ein Griff montiert ist. Bevorzugt ist das Einschubgehäuse aus Blechbiegeteilen hergestellt. In der Bodenwand ist eine Durchgangsöffnung vorgesehen, welche sich mit der Durchführungsöffnung 78 des Bodenplattenteiles 49 deckt, wenn sich das Antriebsschrankmodul 82 im Aufnahmeschacht 86 befindet.

Wie in Fig. 13 schematisch Linien eingetragen, umfasst die zweite Funktionseinheit 47 ein Technologieschrankmodul 87 mit einer Arbeitsmittelversorgungseinheit 88, einer Aufbereitungseinheit 89 für fluidisches Medium, wie eine Wartungseinheit, Druckminderventile, Vakuumpumpe und dgl., einer Aufbereitungseinheit für Laserstrahlenergie und/oder elektrisch betätigbaren Schalteinheiten 90, wie Magnetventile und dgl. Die Arbeitsmittelversorgungseinheit 88 umfasst beispielweise einen Behälter mit einem Rohstoff bzw. Arbeitsmittel, welcher von einer Arbeitsstation 6 benötigt wird, beispielsweise ein Schmierstoff, wie Fett, eine Kühlflüssigkeit und dgl. Das Technologieschrankmodul 87 ist vorzugsweise ein Einschubmodul.

Das Technologieschrankmodul 87 kann in einen Aufnahmeschacht 91 eingeschoben oder aus dem Aufnahmeschacht 91 herausgezogen werden. Der Aufnahmeschacht 91 ist durch einander zugewandte Innenseiten der Boden- und Montageplattenteile 49, 50 in der Höhe und einander zugewandte Innenseiten der Vertikalrahmenteile 51 in der Breite begrenzt und ist von einer Vorderseite 59 des Traggehäuses 9 zugänglich. Der Aufnahmeschacht 91 erstreckt sich von der Rückseite 58 des Traggehäuses 9 in Richtung einer Vorderseite 59 des Traggehäuses 9.

Das Technologieschrankmodul 87 umfasst ein Einschubgehäuse mit einer Bodenwand, Deckenwand, Vorderwand und Seitenwänden, wobei an der Vorderwand, welche der Vorderseite 59 des Traggehäuses 9 benachbart ist, ein Griff montiert ist. Bevorzugt ist das Einschubgehäuse aus Blechbiegeteilen hergestellt. In der Bodenwand ist eine Durchgangsöffnung vorgesehen, welche sich mit der Durchführungsöffnung 78 des Bodenplattenteiles 49 deckt, wenn sich das Antriebsschrankmodul 82 im Aufnahmeschacht 91 befindet.

In Fig. 9 ist eines der Schaltkastenmodule 53 gezeigt, welches im Aufnahmeschacht 55 des Tragrahmenmodules 38 auswechselbar angeordnet werden kann.

Das Schaltkastenmodul 53 umfasst ein Einschubgehäuse mit einer Bodenwand 92, Deckenwand 93, einer Vorderwand 94, einer Rückwand 95 und Seitenwänden 96, wobei das Einschubgehäuse in der Vorderwand 94 mit einer Lufteintrittsöffnung 98 (Fig. 7) und in der Deckenwand 93 mit einer Luftaustrittsöffnung 97 versehen ist. An die Lufteintrittsöffnung 98 schließt ein Ansaugstutzen 105 (Fig. 7) an. Dabei wird über den Ansaugstutzen 105 "frische" Umgebungsluft angesaugt und über die Luftaustrittsöffnung 67 und die Durchgangsöffnung 68 die "erwärmte" Luft aus dem Einschubgehäuse an das Freie abgeführt. Hierzu kann zusätzlich innerhalb des Einschubgehäuses ein Ventilator vorgesehen werden, welcher einen optimalen Luftaustausch mit der Umgebung ermöglicht.

Das Einschubgehäuse ist mit einer ersten Ansteuerschaltung 99 für eine Arbeitsstation 6 und/oder einer zweiten Ansteuerschaltung 100 für eine Teilebereitstellungsstation 7 ausgestattet. Die Ansteuerschaltung 99 kann mit einem ersten Regler 101 und die Ansteuerschaltung 100 mit einem zweiten Regler 102 verbunden werden. Ebenso kann das Einschubgehäuse ein Ein-/Ausgangsmodul für Sensoren und Aktoren umfassen. Die Datenbusleitung, welche an der Fertigungsanlage 1 verwendet werden kann, ist ein adressbasierte Netzwerk, welches in mehrere Netzwerksegmente unterteilt ist. Diese Netzwerksegmente werden über ein Switchmodul 104, auch Netzwerkweiche bezeichnet, miteinander verbunden.

An der Rückwand 95 ragen Befestigungslaschen 108, welche der Befestigung des Schaltkastenmodules 53 dient, wenn es sich im Aufnahmeschacht 55 befindet. Beispielweise werden die Schaltkastenmodule 53 über Schrauben am Tragrahmenmodul 38 fixiert. Andererseits sind auch andere Technologien einsetzbar, welche eine Arretierung eines Schaltkastenmodules 53 ermöglichen, wie beispielweise federelastische Rastelemente. Ebenso kann das Schaltkastenmodul 53 über einen Schließmechanismus 109, welcher an der Vorderwand 94 angeordnet ist, arretiert werden, wenn es sich im Aufnahmeschacht 55 befindet.

Gleiche Fixierung- oder Arretierungstechnologie ist auch bei dem Schaltschrankmodul 54, Technologieschrankmodul 87 und Antriebsschrankmodul 82 einsetzbar.

Wie auch in Fig. 9 ersichtlich, sind an der Rückwand 95 des Schaltkastenmodules 53 Anschlussstecker 110 bis 114 und eine Kommunikationsschnittstelle 138 angeordnet. Diese Anordnung hat den Vorteil, dass die bei abgekippter Stellung des Schaltschrankmodules 54, wie in Fig. 10 eingetragen, die Anschlussstecker 110 bis 114 und Kommunikationsschnittstelle 138 frei zugänglich sind und eine einfache Installation/Wartung möglich ist.

Der erste Anschlussstecker 110 für die elektrische Verbindung zu einer Energieversorgungsleitung 106 ist mit Antrieben/Sensoren der Arbeitsstation 6 verbunden. Der Anschlussstecker 110 ist ein Signalausgangsstecker für die Arbeitsstation 6.

Ein zweiter Anschlussstecker 111 für die elektrische Verbindung zu einer Signalleitung 106 ist mit Antrieben/Sensoren der Arbeitsstation 6 verbunden und dient der Rückführung von elektrischen Signalen der Antriebe/Sensoren zu der Ansteuerschaltung 99 bzw. dem Regler 101. Der Anschlussstecker 111 ist ein Signaleingangsstecker für die Arbeitsstation 6.

Der dritte Anschlussstecker 112 für die elektrische Verbindung zu einer Energieversorgungsleitung 106 ist mit Antrieben/Sensoren der Teilebereitstellungsstation 7 verbunden. Der Anschlussstecker 112 ist ein Signalausgangsstecker für die Teilebereitstellungsstation 7.

Der vierte Anschlussstecker 113 für die elektrische Verbindung zu einer Signalleitung 106 ist mit Sensoren der Teilebereitstellungsstation 7 verbunden und dient der Rückführung von elektrischen Signalen der Sensoren zu der Ansteuerschaltung 100 bzw. Regler 102. Der Anschlussstecker 113 ist ein Signaleingangsstecker für die Teilebereitstellungsstation 7.

Der fünfte Anschlussstecker 114 dient der elektrischen Verbindung zur Energieversorgungsleitung 75.

Natürlich können noch weitere Anschlussstecker vorgesehen werden, welche beispielweise der elektrischen Verbindung zur Energieversorgungsleitungen unterschiedlicher Versorgungsspannungen oder für die Sicherheitstechnik dienen.

Die Kommunikationsschnittstelle 138 dient dem Anschluss an eine Datenbusleitung 107 zur Datenübertragung zwischen dem jeweiligen Schaltkastenmodul 53, dem Schaltschrankmodul 54 und dem Antriebsschrankmodul 82.

Das Schaltschrankmodul 54 umfasst, wie in Fig. 6 in strichlierte Linien eingetragen, zumindest eine Rechnereinheit 115, insbesondere eine Speicherprogrammierbare Steuerung (SPS), welche über die Kommunikations- und Datenbusleitung 70, 107 mit den Ansteuerschaltungen 99 von mehreren Arbeitsstationen 6 und/oder mit den Ansteuerschaltungen 100 von mehreren Teilebereitstellungsstationen 7 verbunden ist. Das Schaltschrankmodul 54 kann auch wiederum ein Switchmodul 116 zum Verbinden der Netzwerksegmente umfassen. Auch ist es möglich, dass das Schaltschrankmodul 54 optional oder zusätzlich zum Technologieschrankmodul 87 mit einer Arbeitsmittelversorgungseinheit 88, Aufbereitungseinheit 89 für fluidisches Medium, wie eine Wartungseinheit, Druckminderventile und dgl., elektrisch betätigbaren Schalteinheiten 90, wie Magnetventile und dgl. versehen ist, wie dies jedoch nicht dargestellt ist. Grundsätzlich handelt es sich um kleine Baueinheiten, welche von deren Abmessungen in das Schaltschrankmodul 54 einpassen.

Zur erleichterten Wartung der Fertigungsanlage 1, beziehungsweise zum schnellen wechseln der einzelnen Arbeitsstationen 6 beziehungsweise Teilebereitstellungsstationen 7 kann es notwendig sein, dass die Verkabelung möglichst einfach aufgebaut ist.

Dies kann dadurch erreicht werden, dass die einzelnen Elektronik beinhaltenden Module, wie Arbeitsstation 6, Teilebereitstellungsstation 7, Schaltkastenmodul 53, Schaltschrankmodul 54, Antriebsschrankmodul 82, Energieversorgungseinheit 83, Rechnereinheit 84, Technologieschrankmodul 87, Arbeitsmittelversorgungseinheit 88, Aufbereitungseinheit 89, Schalteinheit 90, usw. nicht mit einzelnen Kabelführungen miteinander verbunden werden, sondern mittels Kabelbäumen verbunden werden, welche sämtliche Leitungen, die zwei Module miteinander verbinden, enthalten. Hierzu kann vorgesehen sein, dass ein derartiger Kabelbaum einen Anschlussstecker enthält, welcher mit einer Schnellwechselvorrichtung ausgestattet ist und sämtliche notwendigen Leitungen in sich vereint. Weiters kann vorgesehen sein, dass ein derartiger Kabelbaum auf einem festen Blechrahmen aufgebaut ist, sodass der Kabelbaum als Ganzes leicht aus der Fertigungsanlage 1 entfernt werden kann. Dies bringt den Vorteil mit sich, dass der Kabelbaum schnell und einfach gewechselt werden kann. Besonders wenn die Verbindung zwischen zwei Modulen fehlerhaft ist, kann dadurch der Kabelbaum einfach gewechselt werden, wodurch nur eine kurze Stillstehzeit der Fertigungsanlage 1 notwendig ist.

Besonders bei der Verbindung zwischen Arbeitsstationen 6 und/oder Teilebereitstellungsstationen 7 und den zugehörigen Schaltkastenmodulen 53 erscheint eine derartige Ausführung mittels eines Kabelbaumes als sehr vorteilhaft.

Weiters kann vorgesehen sein, dass ein Kabelbaum mit seinem festen Blechrahmen und seinen Anschlüssen so in der Fertigungsanlage 1 aufgenommen ist, dass beispielsweise bei dem Wechsel einer Arbeitsstation 6 oder einer Teilebereitstellungsstation 7, die Verbindung der Stecker zwischen diesen Stationen und dem Kabelbaum nicht separat hergestellt werden muss, sondern dass die Stecker so angeordnet sind, dass diese automatisch beim Platzieren der Arbeitsstation 6 oder der Teilebereitstellungsstation 7 an ihrem Bestimmungsort, mit dem Kabelbaum verbunden werden.

Weiters kann auch vorgesehen sein, dass ein derartiger Kabelbaum auch entlang seiner Ausdehnung modular aufgebaut ist. Dies kann den Vorteil haben, dass bei engen Platzverhältnissen, beziehungsweise bei weiten zu überwindenden Strecken, der Ein - und Ausbau des Kabelbaumes erleichtert wird.

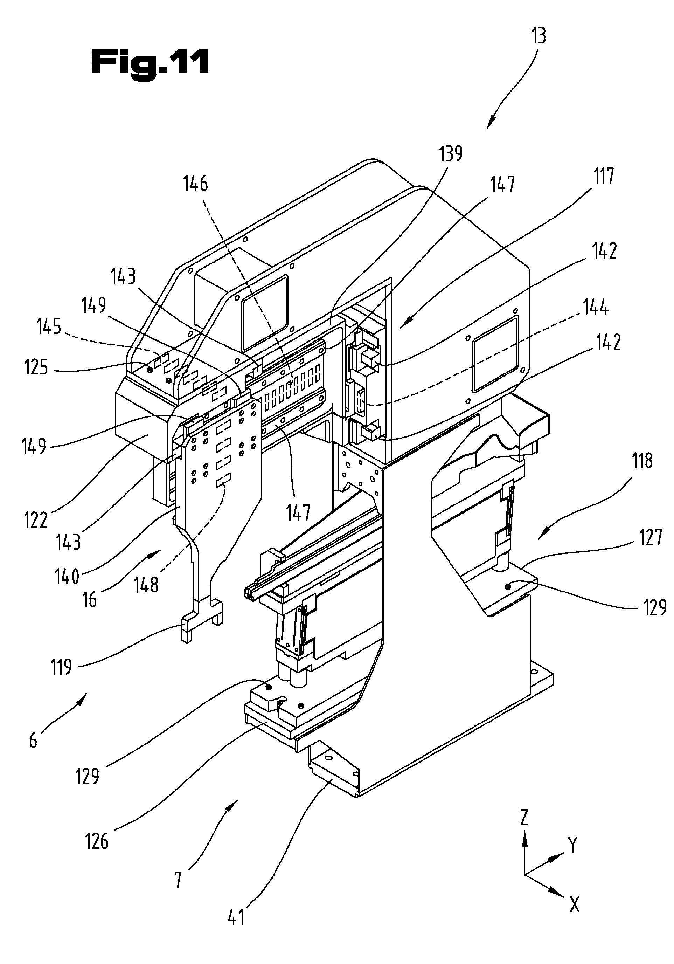

In den Fig. 11 und 12 ist eines der Lagerrahmenmodule 13 gezeigt, wobei in Fig. 11 eine Arbeitsstation 6 und eine Teilebereitstellungsstation 7 eingetragen sind. In Fig. 12 sind die Arbeitsstation 6 als auch die Teilebereitstellungsstation 7 entfernt.

Nach gezeigter Ausführung ist am Lagerrahmenmodul 13 über eine erste Montagevorrichtung 117 die Arbeitsstation 6 und über eine zweite Montagevorrichtung 118 die Teilebereitstellungsstation 7 montiert. Die Arbeitsstation 6 umfasst nach gezeigter Ausführung die Handhabungsvorrichtung 16 mit einem Greifer 119, mit dem ein an der Teilebereitstellungsstation 7 bereitgestellter Teil 3 (Fig. 1) übernommen und auf einen Teileträger 4 übergeben werden kann. Natürlich kann anstatt der Handhabungsvorrichtung 16 auch eine andere Arbeitseinheit, beispielweise eine Fügevorrichtung zum stoffschlüssigen, kraftschlüssige oder formschlüssigen Verbinden von Teilen 3, vorgesehen werden, welche am Lagerrahmenmodul 13 gelagert ist.

Nach dem gezeigtem Ausführungsbeispiel, ist die Arbeitseinheit bzw. der Greifer 119 der Handhabungsvorrichtung 16 über eine erste Bewegungsachse 139 in einer ersten Richtung, auch als x-Richtung bezeichnet, parallel zur Transportrichtung 5 (Fig. 2) und über eine zweite Bewegungsachse 140 in einer zweiten Richtung, auch als z-Richtung bezeichnet, senkrecht zu einer Transportebene 141 (Fig. 2) der Transportanlage 2 verstellbar, wobei die zweite Bewegungsachse 140 an der ersten Bewegungsachse 139 gelagert und auch in einer dritten Richtung auch y-Richtung genannt, verstellbar ist. Somit kann die Arbeitseinheit bzw. der Greifer 119 in drei Raumrichtungen und relativ gegenüber der Transportanlage 2 verstellt werden, um einen Arbeitsprozess durchführen zu können.

Nachdem jedes Lagerrahmenmodul 13 mit einer Arbeitsstation 6 ausgestattet ist, ist jedes Lagerrahmenmodul 13 mit einem ersten Linearführungssystem und einem zweiten Linearführungssystem versehen. Zusätzlich ist zumindest ein elektrisch steuerbarer Linearantrieb zur Verstellung der Arbeitseinheit bzw. des Greifers 119 in der x-Richtung parallel zur Transportrichtung (Fig. 2) vorgesehen. Nach gezeigter Ausführung sind zwei elektrisch steuerbare und synchron geschaltete Linearantriebe 144, 145 vorhanden, mittels welcher die erste Bewegungsachse 139 verstellbar ist. Dabei wirken die, betragsmäßig gleich großen und in dieselbe Richtung wirkenden Antriebskräfte auf die Endabschnitte der ersten Bewegungsachse 139 ein. Die Linearführungssysteme umfassen jeweils am Lagerrahmenmodul 13 befestigte Linearführungen 142, 143, mittels welcher die erste Bewegungsachse 139 am Lagerrahmenmodul 13 gelagert ist. Es erweist sich auch von Vorteil, wenn das erste Linearführungssystem 142 und der erste Linearantrieb 144 eine erste Antriebs- und Lagereinheit als auch das zweite Linearführungssystem 143 und der zweite Linearantrieb 145 eine zweite Antriebs- und Lagereinheit bilden, wobei die erste Antriebs- und Lagereinheit als auch die zweite Antriebs- und Lagereinheit jeweils am Lagerrahmenmodul 13 über nicht dargestellte Verbindungselemente, beispielsweise Schrauben befestigt sind. Durch das "doppelseitige" Antriebs- und Führungskonzept werden eine dynamische Verstellung der Arbeitseinheit bzw. des Greifers 119 und ein robuster, schwingungssteifer, Aufbau der Arbeitsstation 6 erreicht. Die Linearführungssysteme und der zumindest eine oder die Linearantriebe erstrecken sich dabei jeweils nur bis maximal über die Breite 133 (Fig. 13) eines Lagerrahmenmodules 13. Durch die begrenzte Verstellbewegung der Arbeitseinheit bzw. des Greifers 119 in der x-Richtung innerhalb der maximalen Breite 133 des Lagerrahmenmodules 13, kann auch bei Aneinanderreihung der Arbeitsstationen 6 mit kleinstem Rasterabstand eine Kollision mit einer Arbeitseinheit einer benachbarten Arbeitsstation 6 vermieden. Demnach ist der Arbeitsbereich für die Arbeitseinheit bzw. des Greifers 119 durch die einfache Breite 133 (Fig. 13) eines Lagerrahmenmodules 13 begrenzt.

Die erste Bewegungsachse 139 ist mit einem dritten Linearführungssystem versehen. Zusätzlich ist die erste Bewegungsachse 139 mit zumindest einem elektrisch steuerbaren Linearantrieb 146 zur Verstellung der Arbeitseinheit bzw. des Greifers 119 in der y-Richtung im Wesentlichen senkrecht zur Transportrichtung (Fig. 2) versehen. Das dritte Linearführungssystem umfasst an der ersten Bewegungsachse 139 befestigte Linearführungen 147, mittels welcher die zweite Bewegungsachse 140 an der ersten Bewegungsachse 139 gelagert ist.

Die zweite Bewegungsachse 140 ist über ein viertes Linearführungssystem an der ersten Bewegungsachse 140 gelagert. Zusätzlich ist die zweite Bewegungsachse 140 mit zumindest einem elektrisch steuerbaren, und in horizontaler Richtung wirkenden Linearantrieb 148 zur Verstellung der Arbeitseinheit bzw. des Greifers 119 in der z-Richtung im Wesentlichen senkrecht auf die Transportebene 141 (Fig. 2) versehen. Das vierte Linearführungssystem umfasst dabei an der ersten Bewegungsachse 139 gelagerte Linearführungen 149.

Das Lagerrahmenmodul 13 umfasst Seitenwände 120, eine diese verbindende Anschlussplatte 41 und eine erste Montageaufnahme 121, wobei die Arbeitsstation 6 über ihren Grundrahmen 122 an der Montageaufnahme 121 abstützbar und über eine Befestigungsvorrichtung lösbar mit dem Lagerrahmenmodul 13 verbunden ist. Die erste Montageaufnahme 121 bildet eine in einer Horizontalebene verlaufende erste Montageplattform und eine in einer Vertikalebene verlaufende zweite Montageplattform aus, wie in den Fig. 11 und 12 ersichtlich. Am Lagerrahmenmodul 13 sind Befestigungslöcher 124 vorgesehen, an welchen über Verbindungselemente 125, beispielweise Schrauben, die Befestigung des Grundrahmens 122 bzw. der Arbeitsstation 6 erfolgen kann. Ebenso können nicht dargestellte Positionierlöcher vorgesehen werden, in welchen Passstifte einsetzbar sind. Damit wird zusätzlich eine Feinpositionierung der Arbeitsstation 6 relativ zum Lagerrahmenmodul 13 ermöglicht. Die Befestigungslöcher 124 und Verbindungselemente 125 sowie gegebenenfalls die Positionierlöcher sowie Passstifte bilden die Befestigungsvorrichtung.

Ferner kann das Lagerrahmenmodul 13 eine zweite Montageaufnahme 126 umfassen, wobei die Teilebereitstellungsstation 7 über ihren Grundrahmen 127 an der Montageaufnahme 126 abstützbar und über eine Befestigungsvorrichtung lösbar mit dem Lagerrahmenmodul 13 verbunden ist. Die zweite Montageaufnahme 126 bildet eine in einer Horizontalebene verlaufende erste Montageplattform aus, wie in den Fig. 11 und 12 ersichtlich. Am Lagerrahmenmodul 13 sind Befestigungslöcher 128 vorgesehen, an welchen über Verbindungselemente 129, beispielweise Schrauben, die Befestigung des Grundrahmens 127 bzw. der Teilebereitstellungsstation 7 erfolgen kann. Ebenso kann ein Positionierloch vorgesehen werden, in welches ein Passstift 130 einführbar ist. Damit wird zusätzlich eine Feinpositionierung der Teilebereitstellungsstation 7 relativ zum Lagerrahmenmodul 13 ermöglicht. Die Befestigungslöcher 128 und Verbindungselemente 129 sowie gegebenenfalls das Positionierloch sowie der Passstifte bilden die Befestigungsvorrichtung.

Wie in Fig. 12 ersichtlich, sind die Arbeitsstation 6 und Teilebereitstellungsstation 7 in übereinander liegenden Montageebenen am Lagerrahmenmodul 13 montiert.

Die Anschlussplatte 41, wie sie in Fig. 14 besser ersichtlich ist, umfasst an ihrer der Montageebene 11 zugewandten Unterseite eine Führungsvorrichtung. Diese umfasst parallel zueinander verlaufende Führungsschienen 131, welche mit ihren voneinander abgewandten Führungsflächen 132 mit den Führungsschienen 64 des Tragrahmenmodules 38 eingreifen.

Das Lagerrahmenmodul 13 ist über die Befestigungsvorrichtung 42 auswechselbar am Traggehäuse 9 montiert.

Wie der Fig. 13 zu entnehmen, sind die Lagerrahmenmodule 13 in einem im Wesentlichen der Breite 133 eines Lagerrahmenmodules 13 entsprechenden Rasterabstand und in einer Längsreihe angeordnet. Der Rasterabstand bzw. die Breite 133 beträgt etwa 90 mm oder einem ganzzahligen Vielfachen von 90 mm, maximal 360 mm.

Es sei darauf hingewiesen, dass aus Gründen der besseren Übersicht nur zwei Lagerrahmenmodule 13 eingezeichnet sind. Die Anzahl der Lagerrahmenmodule 13 variiert abhängig von der Anzahl der Arbeitsstationen 6.

Gemäß dem gezeigten Ausführungsbeispiel sind auf einem Tragrahmenmodul 38 vier Lagerrahmenmodule 13 auswechselbar montiert. Ebenso umfasst die dem Tragrahmenmodul 38 zugeordnete Funktionseinheit 48 vier auswechselbare Schaltkastenmodule 53. Hingegen umfasst die Funktionseinheit 48 bloß ein Schaltschrankmodul 54.

Wesentlich ist, dass sowohl die Lagerrahmenmodule 13 als auch die Schaltkastenmodule 53 jeweils in einer Montageebene 134 übereinander angeordnet sind, wie in Fig. 14 eingetragen. Dadurch besteht eine unmittelbare Zuordnung zwischen einem der Lagerrahmenmodule 13 bzw. einer der Arbeitsstationen 6 und/oder Teilebereitstellungsstationen 7 und einem der Schaltkastenmodule 53. Die Montageebene 134 für die Lagerrahmenmodule 13 als auch die Schaltkastenmodule 53 verläuft senkrecht zur Transportrichtung 5 (Fig. 2) entlang eines Transportabschnittes, in welchem die Arbeitsstationen 6 und/oder Teilebereitstellungsstationen 7 bzw. die Lagerrahmenmodule 13 angeordnet sind.

Wie aus Fig. 1 hervorgeht, sind die Lagerrahmenmodule 13 zwischen Seitenständern 135 derart angeordnet, dass sich die einander benachbarten Seiten der Lagerrahmenmodule 13 gegeneinander und die voneinander abgewandten Seiten des in der Längsreihe ersten und letzten Lagerrahmenmodules 13 gegen die Seitenständer 135 abstützen.

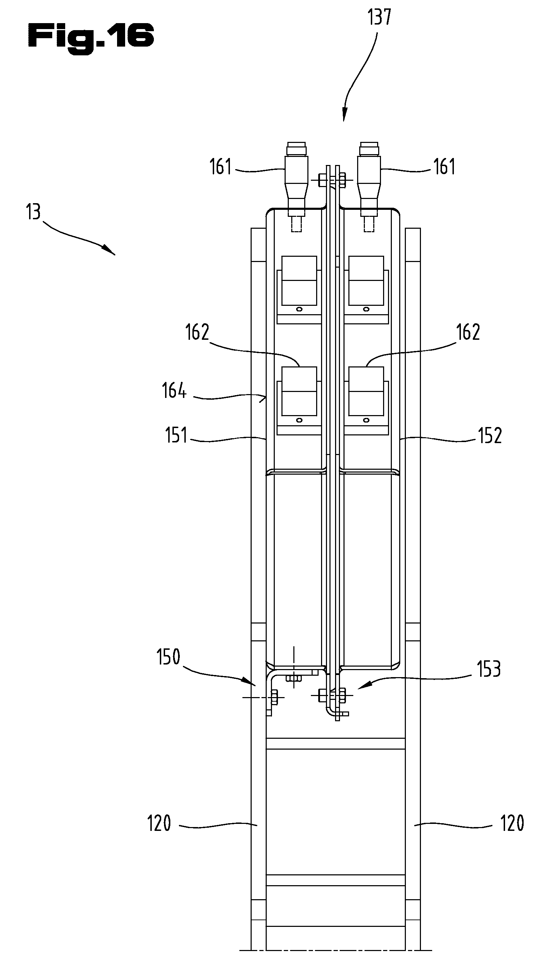

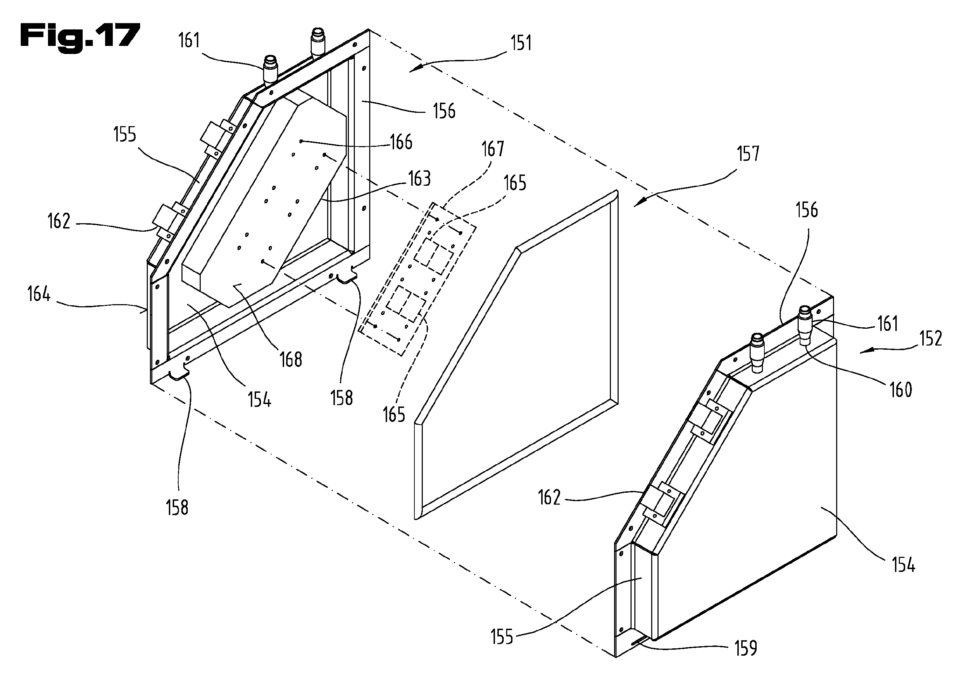

Wie in Fig. 12 schematisch in strichlierte Linien eingetragen, ist es auch möglich, dass am Lagerrahmenmodul 13 zumindest ein Subschaltkastenmodul 137 angeordnet wird, wie es in den Fig. 16 und 17 näher gezeigt ist. Bevorzugt wird dieses zwischen den Seitenwänden 120 angeordnet und am Lagerrahmenmodul 13 auswechselbar befestigt. In diesem Subschaltkastenmodul 137 können die Ansteuerschaltung 99 für eine Arbeitsstation 6 und/oder die zweite Ansteuerschaltung 100 für eine Teilebereitstellungsstation 7 und/oder der erste Regler 101 und/oder der zweite Regler 102 untergebracht werden.

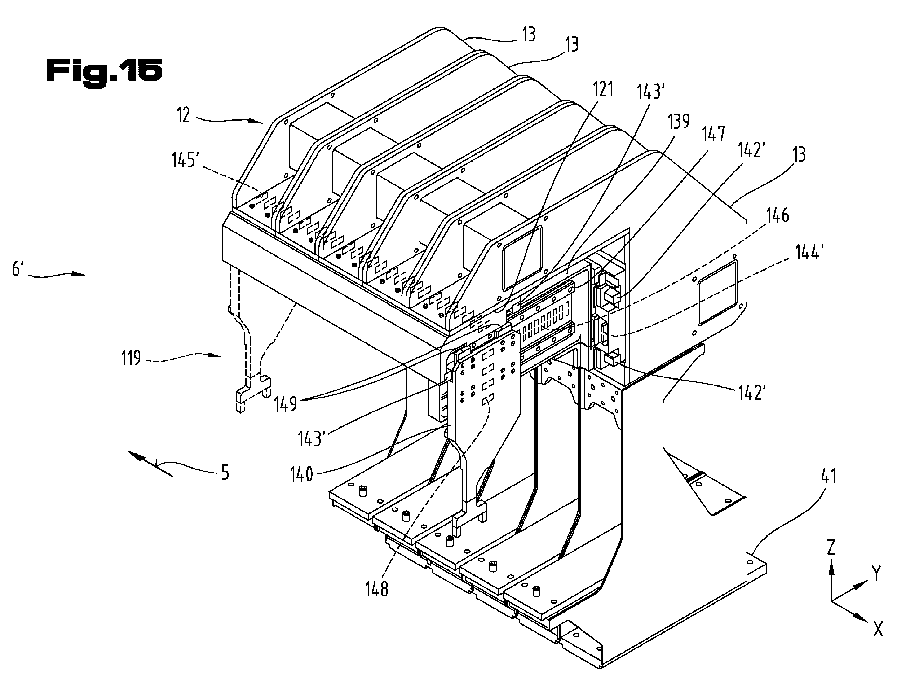

Fig. 15 zeigt eine Arbeitsstation 6', wie sie an der oben beschriebenen Fertigungsanlage 1 zur Herstellung einer Baugruppe aus mehreren Teilen 3 eingesetzt werden kann. Die Transportanlage 2 und das Traggehäuse 9 der Fertigungsanlage 1 sind aus Gründen der besseren Übersicht nicht dargestellt.

Die Lagerrahmenmodule 13 der Rahmenkonstruktion 12 sind wiederum, wie oben beschrieben, entlang eines Transportabschnittes der Transportanlage 2 in Transportrichtung 5 hintereinander angeordnet, wovon nach diesem Ausführungsbeispiel mehreren Lagerrahmenmodulen 13 eine Arbeitsstation 6' zugeordnet bzw. die Arbeitsstation 6' über die Montageaufnahmen 121 (siehe auch Fig. 12) an mehreren Lagerrahmenmodulen 13 gelagert bzw. an diesen über Verbindungselemente, beispielsweise Schrauben befestigt ist. Die Montageaufnahmen 121 bilden jeweils eine in einer Horizontalebene verlaufende erste Montageplattform und eine in einer Vertikalebene verlaufende zweite Montageplattform aus, wie in Fig. 15 ersichtlich.

Es ist eine beliebige Anordnung oder Kombination der in den Fig. 11 und 15 beschriebenen Ausführungen möglich. So kann eine Fertigungsanlage 1 derart gestaltet sein, dass jede der Arbeitsstationen 6 an einem eigenständigen Lagerrahmenmodul 13, gemäß der Ausführung nach Fig. 11, gelagert ist. Andererseits kann eine Fertigungsanlage 1 derart gestaltet sein, dass eine Arbeitsstation 6' an mehreren Lagerrahmenmodulen 13, gemäß der Ausführung nach Fig. 15, gelagert ist. Im letzteren Fall, kann die Fertigungsanlage 1 auch nur eine Arbeitsstation 6', gemäß der Ausführung nach Fig. 11, aufweisen, beispielweise eine Handhabungsvorrichtung 16 mit einem Greifer 119, welcher unterschiedliche Teilegeometrien ergreifen und die Teile 3 nacheinander von mehreren Teilebereitstellungsstationen 7 (Fig. 11), welche an den Lagerrahmenmodulen 13 gelagert sind, entnehmen kann. Ebenso kann eine Fertigungsanlage 1 derart gestaltet sein, dass diese eine oder mehrere Arbeitsstationen 6 gemäß der Ausführung nach Fig. 11 und eine oder mehrere Arbeitsstation 6' gemäß der Ausführung nach Fig. 15 umfasst.

Durch die Anordnung der Lagerrahmenmodule 13 ist aber ein Umrüstvorgang auf mehrere Arbeitsstationen 6 besonders rasch durchführbar. Ein solcher Umrüstvorgang ist beispielsweise erforderlich, wenn Arbeitsprozesse parallelisiert und effizienter durchgeführt werden sollen. Es ist lediglich die auszuwechselnde, einzige bisher verwendete, Arbeitsstation 6' zu entfernen, nicht aber die Lagerrahmenmodule 13. Die einzuwechselnden Arbeitsstationen 6 können sehr einfach über die Montageaufnahmen 121, wie oben beschrieben, an den Lagerrahmenmodulen 13 befestigt werden. Die Teilebereitstellungsstationen 7 sind möglicherweise bereits vorhanden oder können ebenfalls sehr rasch nachgerüstet werden.

Die Arbeitseinheit bzw. der Greifer 119 der Handhabungsvorrichtung 16 ist wiederum über eine erste Bewegungsachse 139 in einer x-Richtung parallel zur Transportrichtung 5 (Fig. 2) und über eine zweite Bewegungsachse 140 in einer z-Richtung senkrecht zu einer Transportebene 141 (Fig. 2) der Transportanlage 2 verstellbar, wobei die zweite Bewegungsachse 140 an der ersten Bewegungsachse 139 gelagert und auch in einer y-Richtung verstellbar ist. Somit kann die Arbeitseinheit bzw. der Greifer 119 in drei Raumrichtungen und relativ gegenüber der Transportanlage 2 verstellt werden, um einen Arbeitsprozess durchführen zu können.

Diese Ausführung unterscheidet sich gegenüber der in Fig. 11 beschrieben Ausführungsvariante dadurch, dass sich die Linearführungen 142', 143' sowohl des ersten Linearführungssystems als auch des zweiten Linearführungssystems parallel zur Transportrichtung 5 und über mehrere Lagerrahmenmodule 13 durchgehend erstrecken. Die Linearführungen 142', 143' sind dabei an mehreren Lagerrahmenmodulen 13 befestigt.

Zusätzlich ist zumindest ein elektrisch steuerbarer Linearantrieb zur Verstellung der Arbeitseinheit bzw. des Greifers 119 in der x-Richtung parallel zur Transportrichtung (Fig. 2) vorgesehen. Nach gezeigter Ausführung sind zwei elektrisch steuerbare und synchron geschaltete Linearantriebe 144', 145' vorhanden, mittels welcher die erste Bewegungsachse 139 verstellbar ist. Dabei wirken die, betragsmäßig gleich großen und in dieselbe Richtung wirkenden, Antriebskräfte auf die Endabschnitte der ersten Bewegungsachse 139 ein. Auch der bzw. die Linearantriebe 144', 145' erstrecken sich parallel zur Transportrichtung 5 und durchgehend über mehrere Lagerrahmenmodule 13.

Somit ist es nun möglich, dass die zweite Bewegungsachse 14 zwischen mehreren Lagerrahmenmodulen 13 in der x-Richtung parallel zur Transportrichtung 5 verstellbar ist und auch die Arbeitseinheit bzw. der Greifer 119 entlang eines Transportabschnittes der Transportanlage 2 verschiedene Arbeitspositionen 2 außerhalb eines Lagerrahmenmodules 13 anfahren kann, wie dies in Fig. 15 auch in strichlierte Linien angedeutet ist.

Die oben beschriebenen Linearantriebe 144, 145, 146, 148; 144', 145' sind beispielweise elektrische Asynchron- und Synchron-Linearmotoren. Solche Linearmotoren erlauben die direkte Erzeugung linearer Bewegung ohne Getriebe. Sie umfassen einen stromdurchflossenen Primärteil, auch Spulenanordnung bezeichnet und einen Sekundärteil, auch Permanentmagnetanordnung bezeichnet.

Für die Verstellbewegung der ersten Bewegungsachse 139 mittels dem einen oder den beiden Linearantrieben 144', 145' in x-Richtung ist der Primärteil ortsfest angeordnet und die Spulen sind am Lagerrahmenmodul 13 (gemäß der Ausführung nach Fig. 11) oder an den Lagerrahmenmodulen 13 (gemäß der Ausführung nach Fig. 15) befestigt, während der Sekundärteil bzw. die Permanentmagneten an der ersten Bewegungsachse 139 fest montiert sind und die erste Bewegungsachse 139 gemeinsam mit den Permanentmagneten gegenüber den Spulen verstellbar ist. Die Antriebskraft bei einem Linearantrieb bzw. Antriebskräfte bei zwei Linearantrieben wirken berührungsfrei elektromagnetisch auf die erste Bewegungsachse 139. Die Antriebsleistung wird dem Primärteil zugeführt, während die erste Bewegungsachse 139 nur den Erregerteil enthält.

Für die Verstellbewegung der zweiten Bewegungsachse 140 mittels dem Linearantrieb 146 in y-Richtung ist der Sekundärteil bzw. sind die Permanentmagneten an der ersten Bewegungsachse 139 fest montiert, während der Sekundärteil bzw. die Spulen an der zweiten Bewegungsachse 140 fest montiert sind und die zweite Bewegungsachse 140 gemeinsam mit den Spulen gegenüber der ersten Bewegungsachse 139 bzw. den Permanentmagneten relativ verstellbar ist. Die Antriebskraft wirkt berührungsfrei elektromagnetisch auf die zweite Bewegungsachse 140.

Für die Verstellbewegung der zweiten Bewegungsachse 140 mittels dem Linearantrieb 148 in z-Richtung ist der Primärteil bzw. sind die Spulen an der ersten Bewegungsachse 139 an einem in y-Richtung mit der zweiten Bewegungsachse 140 verstellbaren Spulenträger, welcher nicht dargestellt ist fest montiert, während der Sekundärteil bzw. die Permanentmagneten an der zweiten Bewegungsachse 140 fest montiert sind und die zweite Bewegungsachse 140 gemeinsam mit den Permanentmagneten gegenüber dem Spulenträger relativ verstellbar ist. Die Antriebskraft wirkt berührungsfrei elektromagnetisch auf die zweite Bewegungsachse 140.

Die Linearführungssysteme umfassen jeweils am Lagerrahmenmodul 13 befestigte Linearführungen 142', 143', mittels welcher die erste Bewegungsachse 139 am Lagerrahmenmodul 13 gelagert ist.

Es erweist sich auch von Vorteil, wenn das erste Linearführungssystem 142' und der erste Linearantrieb 144' eine erste Führungs- und Antriebseinheit als auch das zweite Linearführungssystem 143' und der zweite Linearantrieb 145' eine zweite Führungs- und Antriebseinheit bilden, wobei die erste Führungs- und Antriebseinheit als auch die zweite Führungs- und Antriebseinheit jeweils an den Lagerrahmenmodulen 13 über nicht dargestellte Verbindungselemente, beispielsweise Schrauben befestigt sind.

Durch das "doppelseitige" Führungs- und Antriebskonzept werden eine dynamische Verstellung der Arbeitseinheit bzw. des Greifers 119 und ein robuster, schwingungssteifer, Aufbau der Arbeitsstation 6' erreicht. Die Linearführungssysteme und der zumindest eine oder die Linearantriebe 144', 145' erstrecken sich dabei durchgehend über die Breite mehrerer Lagerrahmenmodule 13.

Die erste Bewegungsachse 139 ist wiederum mit einem dritten Linearführungssystem versehen. Zusätzlich ist die erste Bewegungsachse 139 mit zumindest einem elektrisch steuerbaren Linearantrieb 146 zur Verstellung der Arbeitseinheit bzw. des Greifers 119 in der y-Richtung im Wesentlichen senkrecht zur Transportrichtung (Fig. 2) versehen. Das dritte Linearführungssystem umfasst an der ersten Bewegungsachse 139 befestigte Linearführungen 147, mittels welcher die zweite Bewegungsachse 140 an der ersten Bewegungsachse 139 gelagert ist.

Die zweite Bewegungsachse 140 ist wiederum über ein viertes Linearführungssystem an der ersten Bewegungsachse 140 gelagert. Zusätzlich ist die zweite Bewegungsachse 140 mit zumindest einem elektrisch steuerbaren, in horizontaler Lage befestigten Linearantrieb 148 zur Verstellung der Arbeitseinheit bzw. des Greifers 119 in der z-Richtung im Wesentlichen senkrecht auf die Transportebene 141 (Fig. 2) versehen. Das vierte Linearführungssystem umfasst dabei an der ersten Bewegungsachse 139 gelagerte Linearführungen 149.

Andererseits ist es auch möglich, dass die Linearantriebe 144, 145, 146, 148; 144', 145' jeweils einen Elektromotor, insbesondere einen stufenlos steuerbaren Servo- oder Schrittschaltmotor, eine an diesen direkt angeflanschte Gewindespindel und zumindest eine über die Gewindespindel entlang von Führungen verstellbare Schlitten umfasst. Ein solcher Linearantrieb 144, 145, 146, 148; 144', 145' bildet eine Führungs- und Antriebseinheit. Die erste Bewegungsachse 139 wird, wie oben beschrieben, von einem oder zwei Linearantrieben 144, 145; 144', 145' in x-Richtung angetrieben, wobei dann die Bewegungsachse 139 mit einem oder zwei in x-Richtung verstellbaren Schlitten verbunden ist. Die zweite Bewegungsachse 140 wird mit einem Linearantrieb 146 in y-Richtung angetrieben, indem die Bewegungsachse 140 mit einem in y-Richtung verstellbaren Schlitten verbunden ist. Die zweite Bewegungsachse 140 wird zudem mit einem Linearantrieb 148 in z-Richtung angetrieben, indem die Bewegungsachse 140 mit einem in z-Richtung verstellbaren Schlitten verbunden ist.

Die Fig. 16 zeigt einen Teilabschnitt eines der Lagerrahmenmodule 13 und das an diesem befestigte Subschaltkastenmodul 137. Das Subschaltkastenmodul 137 ist zwischen den Seitenwänden 120 des Lagerrahmenmodules 13 angeordnet und über eine oder mehrere Haltaufnahmen 150 an zumindest einer der Seitenwände 120 auswechselbar befestigt. Bevorzugt ist das Subschaltkastenmodul 137 an der Seitenwand 120 über lösbare Verbindungselemente, wie Schrauben montiert. Ein Subschaltkastenmodul 137 kann im Bedarfsfall vom Lagerrahmenmodul 13 sehr rasch entfernt und durch eine anderes Subschaltkastenmodul 137 ersetzt werden, beispielweise bei Störungen oder Umrüstvorgängen. In diesem Subschaltkastenmodul 137 können die elektronischen Schaltelemente 165 der ersten Ansteuerschaltung 99 bzw. des ersten Reglers 101 für eine Arbeitsstation 6 und/oder zweiten Ansteuerschaltung 100 bzw. des zweiten Reglers 102 für eine Teilebereitstellungsstation 7 untergebracht werden.

Natürlich können im Subschaltkastenmodul 137 auch andere der oben zu Fig. 9 beschriebenen elektronischen Schaltelemente angeordnet werden, wie das Ein-/Ausgangsmodul für Sensoren und/oder Aktoren und/oder das Switchmodul, auch Netzwerkweiche bezeichnet. Ebenso wäre es auch denkbar, dass die Energieversorgungseinheit, insbesondere das Netzteil, welche gemäß obigen Ausführungen im Antriebsschrankmodul 82 untergebracht ist, im Subschaltkastenmodul 137 angeordnet wird. Grundsätzlich könnten im Subschaltkastenmodul 137 auch vom Technologieschrankmodul 87 beispielsweise die elektrisch betätigbaren Schalteinheiten, wie Magnetventile und dgl. angeordnet werden.

Die Anordnung des Subschaltkastenmodules 137 bzw. der elektronischen Schaltelemente möglichst nahe der Aktoren und/oder Sensoren für die Arbeitsstation 6 und/oder für die Teilebereitstellungsstation 7 ermöglicht besonders kurze Schaltzeiten bzw. Reaktionszeiten.

Das Subschaltkastenmodul 137 umfasst, wie in Fig. 17 näher dargestellt, ein Gehäuse mit einem ersten Gehäuseteil 151 und einem zweiten Gehäuseteil 152, welche über eine Verbindungsvorrichtung 153 (Fig. 16) miteinander lösbar verbunden sind. Bevorzugt sind die Gehäuseteile 151, 152 weitestgehend identisch ausgebildet. Diese umfassen jeweils eine Bodenwand 154 und eine an diesem senkrecht vorragende, umlaufende Umrandung 155. Außerdem kann an der Umrandung 155 ein umlaufender Montageflansch 156 vorgesehen werden, welcher von der Umrandung 155 abgewinkelt ist und parallel zur Bodenwand 154 verläuft. Zwischen den Gehäuseteilen 151, 152 wird bevorzugt eine Dichtung 157 angeordnet. Die Gehäuseteile 151, 152 sind bevorzugt aus wärmeleitenden Material, insbesondere einem metallischen Material hergestellt. Insbesondere ist zumindest der erste Gehäuseteil 151 an seiner Bodenwand 154 aus metallischem Material hergestellt.

Der Montageflansch 156 des ersten Gehäuseteiles 151 umfasst, wie gezeigt, an diesem vorragende Einhängelaschen 158, welche in am Montageflansch 156 des zweiten Gehäuseteiles 152 vorgesehene Aufnahmeschlitze 159 eingreifen, wenn die Gehäuseteile 151, 152 miteinander verbunden sind. Die Gehäuseteile 151, 152 sind zusätzlich über lösbare Verbindungselemente (Fig. 16), wie Schrauben, miteinander verbunden. Die Einhängelaschen 158, Aufnahmeschlitze 159 und Verbindungselemente bilden eine mögliche Ausführung einer Verbindungsvorrichtung 153.

An der Umrandung 155 sind ferner Aufnahmeöffnungen 160 zur Durchführung von nicht gezeigten elektrischen Leitungen zur Versorgung von Antrieben der Arbeitsstationen 6 und/oder Teilebereitstellungsstationen 7 mit elektrischen Steuersignalen und/oder Sensorsignalen vorgesehen. Hierzu sind an den Aufnahmeöffnungen 157 auch Anschlussstecker 161, 162 vorgesehen. Der erste Anschlussstecker 161 für die elektrische Verbindung zu einer Energieversorgungsleitung ist mit Antrieben/Sensoren der Arbeitsstation 6 verbunden. Der Anschlussstecker 161 ist ein Signalausgangsstecker für die Arbeitsstation 6. Ein zweiter Anschlussstecker 161 für die elektrische Verbindung zu einer Signalleitung ist mit Antrieben/Sensoren der Arbeitsstation 6 verbunden und dient der Rückführung von elektrischen Signalen der Antriebe/Sensoren zu der Ansteuerschaltung 99 bzw. dem Regler 101. Der Anschlussstecker 161 ist ein Signaleingangsstecker für die Arbeitsstation 6.

Der dritte Anschlussstecker 162 für die elektrische Verbindung zu einer Energieversorgungsleitung ist mit Antrieben/Sensoren der Teilebereitstellungsstation 7 verbunden. Der Anschlussstecker 162 ist ein Signalausgangsstecker für die Teilebereitstellungsstation 7. Der vierte Anschlussstecker 162 für die elektrische Verbindung zu einer Signalleitung ist mit Sensoren der Teilebereitstellungsstation 7 verbunden und dient der Rückführung von elektrischen Signalen der Sensoren zu der Ansteuerschaltung 100 bzw. Regler 102. Der Anschlussstecker 162 ist ein Signaleingangsstecker für die Teilebereitstellungsstation 7.

Natürlich können noch weitere Anschlussstecker vorgesehen werden, welche beispielweise der elektrischen Verbindung zur Energieversorgungsleitungen unterschiedlicher Versorgungsspannungen oder für die Sicherheitstechnik dienen. Auch können je nach Bestückung des Subschaltkastenmodules 137 mit elektronischen Bauelementen bzw. Schaltelementen entweder nur die Anschlussstecker 161 oder nur die Anschlussstecker 162 vorgesehen werden.

Die beschriebenen elektronischen Schaltelemente, beispielweise Servoregler, entwickeln, insbesondere auch wegen der hohen Schaltzyklenanzahl bzw. der elektrischen Leistung Wärme. Die Temperatur der Schaltelemente darf eine festgelegte Maximaltemperatur nicht überschreiten. Der Kühlung der Schaltelemente kommt also eine besondere Bedeutung zu.

Hierzu kann das Subschaltkastenmodul 137 zusätzlich eine in Fig. 17 dargestellte wärmeleitende Kontaktplatte 163 umfassen, welche unmittelbar mit ihrer ersten Seitenflächen an der Bodenwand 154 anliegt und an dieser befestigt ist. Die Bodenwand 153 wiederum bildet zumindest eine der Kontaktplatte 163 abgewandte wärmeleitende Kontaktfläche 164 für das Subschaltkastenmodul 137 aus, welche unmittelbar an der Seitenwand 120 des Lagerrahmenmodules 13 anliegt. Die Kontaktplatte 163 dient der Aufnahme der in Fig. 17 schematisch dargestellte Schaltelemente 165 und werden die Schaltelemente 165 über Montageelemente 166 auf der Kontaktplatte 163 lösbar befestigt, insbesondere angeschraubt. Wie gezeigt können mehrere Schaltelemente 165 auch auf einer Platine 167 angeordnet werden, wobei dann die Platine 167 auf der Kontaktplatte 163 aufliegt und an dieser befestigt ist. Dabei bildet die Kontaktplatte 163 an einer der ersten Seitenfläche gegenüberliegenden zweiten Seitenfläche eine Montagefläche 168 aus, welche mit ausreichend hoher Genauigkeit gefertigt werden kann, um eine einwandfreie Montage der Schaltelemente 165 oder der Platine 167 mit den Schaltelementen 165 zu ermöglichen.

Wie oben beschrieben wird das Subschaltkastenmodul 137 auf einer Seite, beispielweise am ersten Gehäuseteil 151 an eine der Seitenwände 120 des Lagerrahmenmodules 13 angeschraubt. Hierdurch wird das Subschaltkastenmodul 137 mit seiner Kontaktfläche 164 zuverlässig an die Seitenwand 120 gepresst.

Andererseits ist es auch möglich, dass die Schaltelemente 165 oder die Platine 167 mit den Schaltelementen 165 direkt an der wärmeleitenden Bodenwand 154 des Gehäuseteiles 151 angeordnet sind. Die Bodenwand 154 bildet dabei einen Kühlkörper.

Die im Betrieb entstehende Wärmeenergie der Schaltelemente 165 lässt sich nun zum Großteil über die Kontaktplatte 163, den Gehäuseteil 151 und die Kontaktfläche 164 gemäß erster Ausführung oder den Gehäuseteil 151 und die Kontaktfläche 164 gemäß zweiter Ausführung von den Schaltelementen 165 an die Seitenwand 120 des Lagerrahmenmodules 13 abgeben. Die Kontaktplatte 163 bildet dabei einen Kühlkörper. Die Seitenwand 120, die Kontaktplatte 163 und die Kontaktfläche 164 sind vorteilhaft jeweils insbesondere zumindest teilweise aus einem metallischen Material gefertigt.

Da die Seitenwand 120 in der Regel aus einem metallischen Werkstoff gefertigt ist und zumindest die eine Seite des Subschaltkastenmodules 137 mit der Seitenwand 120 wärmetechnisch verbunden ist, wirkt die Seitenwand 120 für die im Subschaltkastenmodul 137 angeordneten Schaltelemente 165 als ein im Vergleich zum Gehäuse des Subschaltkastenmodules 137 großer Kühlkörper.

Wie nicht weiters dargestellt, ist es auch möglich, dass das Gehäuse des Subschaltkastenmodules 137 bloß einen Gehäuseteil 151 aufweist, welcher über den Montageflansch 156 an der Seitenwand 120 montierbar ist. In diesem Fall können die Schaltelemente 165 direkt an der Seitenwand 120 montiert werden, wobei dann die Wärmeenergie der Schaltelemente 165 direkt auf die Seitenwand 120 abgeleitet wird.

Es kann notwendig sein, die von der Fertigungsanlage 1 ausgehenden Lärmemissionen zu minimieren. Weiters kann es notwendig sein, dass gewisse Arbeitsschritte unter Schutzatmosphäre durchgeführt werden müssen, oder dass in der Fertigungsanlage besondere Reinheit benötigt wird. Darüber hinaus kann es notwendig sein dafür zu sorgen, dass einzelne Arbeitsstationen 6 keinen negativen Einfluss auf benachbarte Arbeitsstationen 6, bezüglich Schmutzabsonderung oder dergleichen besitzen.

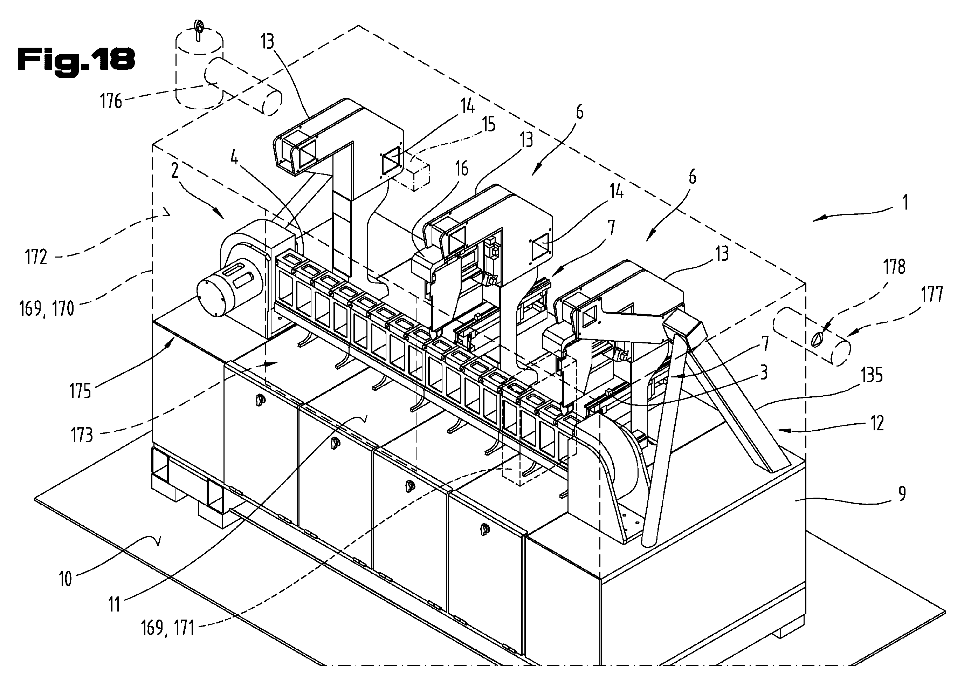

In den Fig. 18 bis 20 ist eine weitere, gegebenenfalls für sich eigenständige Ausführungsform der Fertigungsanlage 1 gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen. Besonders durch die Hinzunahme eines Schutzmodules 169 in die Fertigungsanlage 1 kann die mögliche Notwendigkeit zur Minimierung der Emissionen erfüllt werden.

Vor allem können die einzelnen in den Fig. 18 bis 20 gezeigten Ausführungen den Gegenstand von eigenständigen, erfindungsgemäßen Lösungen bilden. Die diesbezüglichen, erfindungsgemäßen Aufgaben und Lösungen sind der Detailbeschreibung dieser Figuren zu entnehmen.

Wie in den Fig. 18 bis 20 schematisch dargestellt, kann an der Fertigungsanlage 1 ein Schutzmodul 169 angebracht sein, durch welches einzelne oder mehrere Bearbeitungsschritte von der Umwelt, beziehungsweise voneinander möglichst gut abgekoppelt werden können. Hierzu gibt es verschiedene, in weiterer Folge noch näher beschriebene Ausführungsformen, wie ein derartiges Schutzmodul 169 ausgebildet und an der Fertigungsanlage 1 angebracht sein kann, um verschiedene Schutzanforderungen erreichen zu können.

### Anordnung der Schutzmodul 169 überall möglich

### Vertikale Verschiebbarkeit von Schutzmodul 169 ergänzen

Wie in Fig. 18 dargestellt kann das Schutzmodul 169 als Gehäuse 170 ausgeführt sein, welches die komplette Fertigungsanlage 1 einhaust, es ist jedoch auch möglich, dass das Schutzmodul 169 als Trennwand 171 ausgeführt ist, welche bei den einzelnen Arbeitsstationen 6 für eine Abkapselung dieser sorgt. Natürlich ist es auch möglich, dass eine Fertigungsanlage 1 sowohl eine an den Arbeitsstationen 6 eingesetzte Trennwand 171 als auch ein, die komplette Fertigungsanlage 1 abkapselndes Gehäuse 171 aufweist.

Eine Ausführungsvariante in der die komplette Fertigungsanlage 1 mit einem Gehäuse 170 versehen wird, wird vorzugsweise verwendet werden, wenn etwa die komplette Fertigungsanlage 1 bezüglich Geräuschemissionen verbessert werden soll. Hierbei kann vorgesehen sein, dass an der Innenwandung eines derartigen Gehäuses 170 Schalldämmelemente angebracht sind. Das Gehäuse 170 kann dabei gleichzeitig als Schutzumgrenzung dienen um den Maschinenbediener vom Gefahrenbereich der Fertigungsanlage 1 abgrenzen zu können.

Um die Bedienfreundlichkeit zu erhöhen, kann vorgesehen sein, dass ein Teilbereich oder mehrere Teilbereiche des Gehäuses mit einer Sichtscheibe 172 versehen sind, um den Fertigungsprozess beobachten zu können. Weiters kann auch vorgesehen sein, dass ein oder mehrere Inspektionszugänge 173 vorhanden sind, durch welche der Maschinenbediener die Arbeitsstation 6 erreichen kann, um etwa Wartungsarbeiten oder Fehlerbehebungen durchzuführen. In einer bevorzugten Ausführung ist eine Sichtscheibe 172 in einen Rahmen integriert und als Inspektionszugang 173 ausgeführt, wobei vorgesehen sein kann, dass der Inspektionszugang 173 entweder aufschwenkbar oder seitlich oder nach oben ausschiebbar ist. Es kann auch vorgesehen sein, dass die Größe des Inspektionszuganges so groß gewählt wird, dass beispielsweise eine komplette Seitenwand des Gehäuses 170 geöffnet werden kann. Weiters ist es auch denkbar, dass ein Austausch einzelner Arbeitsstationen 6 durch einen derartigen Inspektionszugang 173 durchgeführt werden kann.

Zur Durchführung einer großen Revision bzw. für größere Umbauarbeiten am modulartigen Aufbau der Fertigungsanlage 1 kann vorgesehen sein, dass das Gehäuse 170 komplett von der Fertigungsanlage 1 abhebbar ist. Hierzu ist es notwendig, dass das Gehäuse 170 über Befestigungsmittel 174 mit dem Traggehäuse 9 beziehungsweise der Montageebene 11 verbunden ist. Diese Befestigungsmittel 174 sollten dem modularen Aufbau der Fertigungsanlage 1 Rechnung tragend schnell bzw. einfach zu öffnen und wieder zu verschließen sein.

Alternativ dazu kann vorgesehen sein, dass das Gehäuse 170 auf Schienen oder teleskopischen Auszügen angebracht ist, um beispielsweise das komplette Gehäuse 170 leicht zur Störungsbehebung entfernen zu können. Diese teleskopischen Auszüge können beispielsweise so ausgestaltet sein, dass sie das Gehäuse 170 nach oben abheben. Weiters kann vorgesehen sein, dass das Gehäuse beispielsweise durch eine vertikale Mittelebene getrennt ist, und die beiden Gehäusehälften horizontal ausschiebbar sind.

Weiters ist es denkbar, dass das Gehäuse 170 dazu ausgebildet ist, um eine Schutzatmosphäre bzw. einen Reinraum in der Fertigungsanlage 1 herzustellen. Hierzu kann vorgesehen sein, dass eine Dichtung 175 zwischen Gehäuse 170 und Traggehäuse 9 angebracht ist. Weiters kann vorgesehen sein, dass eine Gaszuführung 176 am Gehäuse 170 angebracht ist, durch welche beispielsweise gereinigte Umgebungsluft zugeführt wird, wodurch sich innerhalb des Gehäuses 170 ein leichter Überdruck gegenüber der Umgebung ausbildet. Somit kann die Fertigungsanlage 1 beispielsweise als Reinraummodul betrieben werden, da die Ausströmende Luft sicherstellt, dass keine unerwünschte Luft von außen in das Gehäuse 170 eindringen kann. Hierzu werden keine allzu hohen Anforderungen an die Abdichtung 175 gestellt, da bei kontinuierlicher Luftzufuhr eine geringe Leckage kein Problem darstellt.

Alternativ zu der Ausführung als Reinraummodul kann vorgesehen sein, dass durch die Gaszuführung 176 nicht normale Umgebungsluft, sondern ein inertes Schutzgas wie beispielsweise Stickstoff zugeführt wird. Dies kann von besonderer Bedeutung sein, wenn beispielsweise Schweißvorgänge oder sonstige Vorgänge innerhalb der Fertigungsanlage 1 durchgeführt werden, bei denen eine Oxidation unerwünscht ist. Bei der Einleitung eines Gases wie Stickstoff muss die Dichtung 175 entsprechend dichter ausgeführt werden bzw. den Ansprüchen der Arbeitssicherheit Rechnung getragen werden, um den Maschinenbediener nicht zu gefährden.

Zusätzlich kann vorgesehen sein, dass eine oder mehrere Absaugöffnungen 177 zu Absaugzwecken im Gehäuse 170 integriert sind, wobei an diesen Absaugöffnungen 177 Ventilatoren 178 angebracht sein können.

Zusätzlich kann vorgesehen sein, dass am Gehäuse 170 Bedienelemente angebracht sind, durch welche der Maschinenbediener die Fertigungsanlage 1 steuern kann.

Auch bei einer Ausführung des Schutzmodules 169 als Trennwand 171 können bei entsprechender Abdichtung obige Schutzfunktionen im Arbeitsbereich einer einzelnen Arbeitsstation 6 erreicht werden. Eine Trennwand 171 wird vorzugsweise dazu eingesetzt, um empfindliche Arbeitsschritte voneinander abtrennen zu können. Dies ist beispielsweise der Fall, wenn an einer Arbeitsstation 6 ein Schweißvorgang durchgeführt wird und die nebenstehende Arbeitsstation 6 davon nicht beeinträchtigt werden soll. Es gibt mehrere verschiedene Möglichkeiten eine derartige Trennwand 171 an der Fertigungsanlage 1 in modulartiger Bauweise anzubringen.

Es ist beispielsweise möglich, dass die Trennwand 171 direkt am Lagerrahmenmodul 13 befestigt ist und somit die Arbeitsstation 6 einhaust. Hierbei kann vorgesehen sein, dass die Trennwand 171 starr am Lagerrahmenmodul 13 montiert ist, wodurch ein gewisser Abstand zum Transportmodul 2, insbesondere zu den Teileträgern 4 gehalten werden muss, um die Transportkette 19 in seiner Bewegung nicht einzuschränken. Dies hat natürlich den Nachteil, dass die einzelnen Teileträger 4 bzw. die einzelnen Arbeitsstationen 6 nicht 100% voneinander abgetrennt werden können.

Alternativ zu der Ausführung mit einer starren bzw. starr befestigten Trennwand 171 kann vorgesehen sein, dass die Trennwand 171 in vertikaler Richtung relativ zum Lagerrahmenmodul 13 verschiebbar ist, wodurch erreicht werden kann, dass die Trennwand 171 während des Transportes bzw. der Verfahrbewegung eines Teileträgers 4 angehoben werden kann und anschließend während des Bearbeitungsvorganges abgesenkt werden kann, um eine möglichst gute Abtrennung zum benachbarten Teileträger 4 bzw. zur benachbarten Arbeitsstation 6 erreichen zu können.

Weiters kann vorgesehen sein, dass die Trennwand 171 einen flexiblen Teilabschnitt, beispielsweise in Form eines Streifenvorhanges aufweist, sodass die Trennwand möglichst nahe an die Teileträger 4 herangeführt werden kann, und dabei die Teileträger 4 die Trennwand problemlos passieren können.

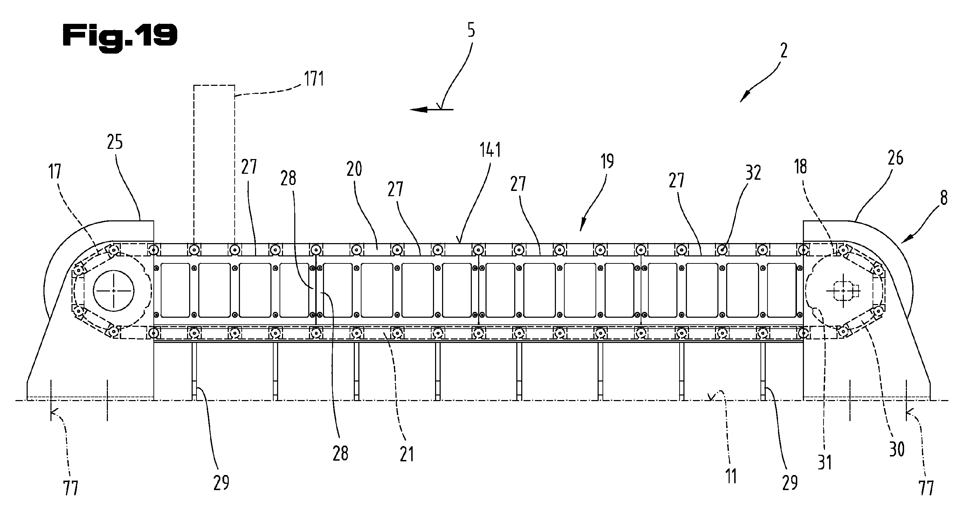

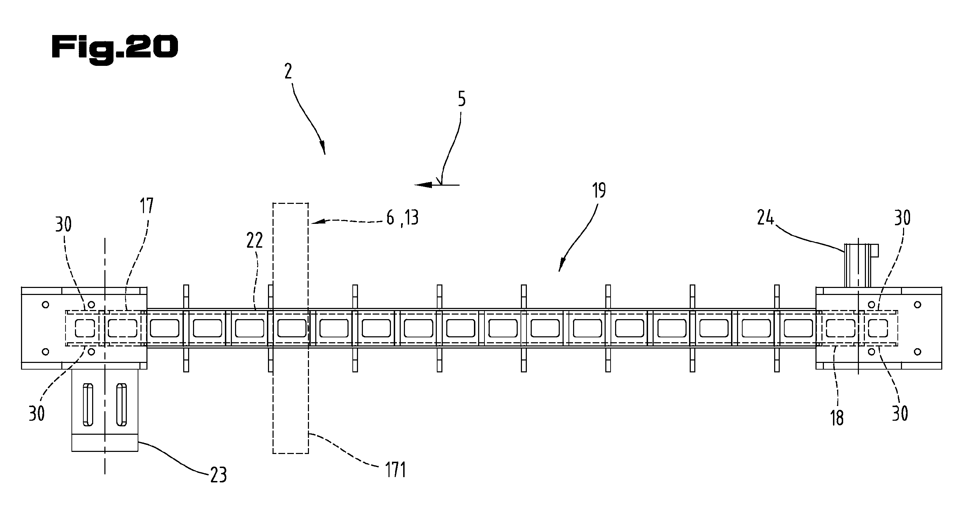

In wieder einer anderen Ausführung kann vorgesehen sein, dass wie in Fig. 19 und 20 dargestellt die Trennwand 171 nicht am Lagerrahmenmodul 13 befestigt ist, sondern dass diese in modulartiger Bauweise direkt an der Transportanlage 2 bzw. am Traggehäuse 9 befestigt ist. Hierbei kann wie in der oben beschriebenen Ausführung vorgesehen sein, dass die Trennwand 171 starr bzw. relativbeweglich zur Transportanlage 2 in die Fertigungsanlage 1 integriert ist. Für die Ausführung der Trennwand 171 gibt es mehrere verschiedene Möglichkeiten. Es ist beispielsweise möglich, dass die Trennwand 171 als eher blechartiges Gebilde ausgeführt ist um zwei Teileträger 4 bzw. zwei Arbeitsstationen 6 voneinander abtrennen zu können. Weiters ist es auch möglich, dass die Trennwand 171 als teilweise geschlossenes Gehäuse ausgeführt ist, wodurch eine Arbeitsstation 6 sehr gut von einer benachbarten Arbeitsstation 6 abgetrennt werden kann.

Die Ausführungsbeispiele zeigen mögliche Ausführungsvarianten der Fertigungsanlage 1, wobei an dieser Stelle bemerkt sei, dass die Erfindung nicht auf die speziell dargestellten Ausführungsvarianten derselben eingeschränkt ist, sondern der Schutzumfang durch die Ansprüche definiert wird.

Der Ordnung halber sei abschließend darauf hingewiesen, dass zum besseren Verständnis des Aufbaus der Fertigungsanlage 1, diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Fertigungsanlage | 36 | Tragrahmenmodul |
| 2 | Transportanlage | 37 | Tragrahmenmodul |
| 3 | Teil | 38 | Tragrahmenmodul |
| 4 | Teileträger | 39 | |
| 5 | Transportrichtung | 40 | |
| | | | |
| 6 | Arbeitsstation | 41 | Anschlussplatte |
| 7 | Teilebereitstellungsstation | 42 | Befestigungsvorrichtung |
| 8 | Grundrahmen | 43 | Befestigungsvorrichtung |
| 9 | Traggehäuse | 44 | Befestigungsvorrichtung |
| 10 | Boden | 45 | |
| | | | |
| 11 | Montageebene | 46 | Funktionseinheit |
| 12 | Rahmenkonstruktion | 47 | Funktionseinheit |
| 13 | Lagerrahmenmodul | 48 | Funktionseinheit |
| 14 | Aufnahmeöffnung | 49 | Bodenplattenteil |
| 15 | Längstraverse | 50 | Montageplattenteil |
| | | | |
| 16 | Handhabungsvorrichtung | 51 | Vertikalrahmenteil |
| 17 | Umlenkrad | 52 | Untergestell |
| 18 | Umlenkrad | 53 | Schaltkastenmodul |
| 19 | Transportkette | 54 | Schaltschrankmodul |
| 20 | oberer Strang | 55 | Aufnahmeschacht |
| | | | |
| 21 | unterer Strang | 56 | Auflagefläche |
| 22 | Führungsvorrichtung | 57 | |
| 23 | Vorschubantrieb | 58 | Rückseite |
| 24 | Bremsantrieb | 59 | Vorderseite |
| 25 | Umlenkstation | 60 | Schachttiefe |
| | | | |
| 26 | Umlenkstation | 61 | Gehäusetiefe |
| 27 | Gehäuseteil | 62 | Aufnahmeraum |
| 28 | Stirnplatte | 63 | Scharnieranordnung |
| 29 | Stützvorrichtung | 64 | Führungsschiene |
| 30 | Umlenkscheibe | 65 | Befestigungsloch |
| | | | |
| 31 | Eingriffsnut | 66 | Verbindungselement |
| 32 | Gelenkachse | 67 | Aussparung |
| 33 | | 68 | Durchgangsöffnung |
| 34 | | 69 | Führungskanal |
| 35 | | 70 | Leitung |
| 71 | Schrägfläche | 111 | Anschlussstecker |
| 72 | Durchführungsöffnung | 112 | Anschlussstecker |
| 73 | Leitung | 113 | Anschlussstecker |
| 74 | Durchführungsöffnung | 114 | Anschlussstecker |
| 75 | Leitung | 115 | Rechnereinheit |
| | | | |
| 76 | Befestigungsloch | 116 | Switchmodul |
| 77 | Verbindungselement | 117 | Montagevorrichtung |
| 78 | Durchführungsöffnung | 118 | Montagevorrichtung |
| 79 | Holm | 119 | Greifer |
| 80 | Strebe | 120 | Seitenwand |
| | | | |
| 81 | Leitungsführungskanal | 121 | Montageaufnahme |
| 82 | Antriebsschrankmodul | 122 | Grundrahmen |
| 83 | Energieversorgungseinheit | 123 | |
| 84 | Rechnereinheit | 124 | Befestigungsloch |
| 85 | Kommunikationsschnittstelle | 125 | Verbindungselement |
| | | | |
| 86 | Aufnahmeschacht | 126 | Montageaufnahme |
| 87 | Technologieschrankmodul | 127 | Grundrahmen |
| 88 | Arbeitsmittelversorgungseinheit | 128 | Befestigungsloch |
| 89 | Aufbereitungseinheit | 129 | Verbindungselement |
| 90 | Schalteinheit | 130 | Passstift |
| | | | |
| 91 | Aufnahmeschacht | 131 | Führungsschiene |
| 92 | Bodenwand | 132 | Führungsfläche |
| 93 | Deckenwand | 133 | Breite |
| 94 | Vorderwand | 134 | Montageebene |
| 95 | Rückwand | 135 | Seitenständer |
| | | | |
| 96 | Seitenwand | 136 | Durchgangsöffnungen |
| 97 | Luftaustrittsöffnung | 137 | Subschaltkastenmodul |
| 98 | Lufteintrittsöffnung | 138 | Kommunikationsschnittstelle |
| 99 | Ansteuerschaltung | 139 | Bewegungsachse |
| 100 | Ansteuerschaltung | 140 | Bewegungsachse |
| | | | |
| 101 | Regler | 141 | Transportebene |
| 102 | Regler | 142 | Linearführung |
| 103 | Ein-/Ausgangsmodul | 143 | Linearführung |
| 104 | Switchmodul | 144 | Linearantrieb |
| 105 | Ansaugstutzen | 145 | Linearantrieb |
| | | | |
| 106 | Leitung | 146 | Linearantrieb |
| 107 | Datenbusleitung | 147 | Linearführung |
| 108 | Befestigungslasche | 148 | Linearantrieb |
| 109 | Schließmechanismus | 149 | Linearführung |
| 110 | Anschlussstecker | 150 | Halteaufnahme |
| 151 | Gehäuseteil | | |
| 152 | Gehäuseteil | | |
| 153 | Verbindungsvorrichtung | | |
| 154 | Bodenwand | | |
| 155 | Umrandung | | |
| | | | |
| 156 | Montageflansch | | |
| 157 | Dichtung | | |
| 158 | Einhängelasche | | |
| 159 | Aufnahme schlitz | | |
| 160 | Aufnahmeöffnung | | |
| | | | |
| 161 | Anschlussstecker | | |
| 162 | Anschlussstecker | | |
| 163 | Kontaktplatte | | |
| 164 | Kontaktfläche | | |
| 165 | Schaltelement | | |
| | | | |
| 166 | Montageelement | | |
| 167 | Platine | | |
| 168 | Montagefläche | | |
| 169 | Schutzmodul | | |
| 170 | Gehäuse | | |
| | | | |
| 171 | Trennwand | | |
| 172 | Sichtscheibe | | |
| 173 | Inspektionszugang | | |
| 174 | Befestigungsmittel | | |
| 175 | Dichtung | | |
| | | | |
| 176 | Gaszuführung | | |
| 177 | Absaugöffnung | | |
| 178 | Ventilator | | |

## Patentansprüche

1. Fertigungsanlage (1) zur Herstellung einer Baugruppe aus mehreren Teilen (3), umfassend
eine Transportanlage (2) zur Beförderung von Teilen (3) mittels Teileträger (4),in Transportrichtung (5) hintereinander angeordneten Arbeitsstationen (6) und/oder Teilebereitstellungsstationen (7), sowie einem Traggehäuse (9), wobei
die Arbeitsstationen (6) und/oder Teilebereitstellungsstationen (7) jeweils über Montageaufnahmen (121; 126) an Lagerrahmenmodulen (13) gelagert sind, und wobei das Traggehäuse (9) nebeneinander angeordnete Tragrahmenmodule (36, 37, 38) umfasst, welche Tragrahmenmodule (36, 37, 38) eine Bodenplatte (49) und eine Montageplatte (50) umfassen, wobei die Bodenplatte (49) und Montageplatte (50) über Vertikalrahmen (51) miteinander verbunden sind und
die Montageplatte (50) auf ihrer der Bodenplatte (49) abgewandten Oberseite eine Montageebene (11) ausbildet, auf welcher die Lagerrahmenmodule (13) über ihre Anschlussplatten (41) abstützbar und über Befestigungsvorrichtungen (42) lösbar mit dem Traggehäuse (9) verbunden sind,
**dadurch gekennzeichnet, dass**
die Transportanlage (2) über ihren Grundrahmen (8) ebenfalls über Befestigungsvorrichtungen (43) lösbar mit der Montageebene (11) der Montageplatte (50) des Traggehäuses (9) verbunden ist.

2. Fertigungsanlage nach Anspruch 1, **dadurch gekennzeichnet, dass** die Lagerrahmenmodule (13) für die Arbeitsstationen (6) und/oder Teilebereitstellungsstationen (7) im Wesentlichen gleichartig gestaltet sind.

3. Fertigungsanlage nach Anspruch 1 oder 2, **dadurch gekennzeichnet, dass** das Lagerrahmenmodul (13) Seitenwände (120), eine diese verbindende Anschlussplatte (41) und eine Montageaufnahme (121) umfasst, wobei die Arbeitsstation (6) über ihren Grundrahmen (122) an der Montageaufnahme (121) abstützbar und über eine Befestigungsvorrichtung (124, 125) lösbar mit dem Lagerrahmenmodul (13) verbunden ist.

4. Fertigungsanlage nach Anspruch 1 oder 2, **dadurch gekennzeichnet, dass** das Lagerrahmenmodul (13) Seitenwände (120), eine diese verbindende Anschlussplatte (41) und eine Montageaufnahme (126) umfasst, wobei die Teilebereitstellungsstation (7) über ihren Grundrahmen (127) an der Montageaufnahme (126) abstützbar und über eine Befestigungsvorrichtung (128,129) lösbar mit dem Lagerrahmenmodul (13) verbunden ist.

5. Fertigungsanlage nach Anspruch 1 oder 2, **dadurch gekennzeichnet, dass** das Lagerrahmenmodul (13) Seitenwände (120), eine diese verbindende Anschlussplatte (41) und in übereinander liegenden Montageebenen eine erste Montageaufnahme (121) und eine zweite Montageaufnahme (126) umfasst, wobei die Arbeitsstation (6) über ihren Grundrahmen (122) an der ersten Montageaufnahme (121) abstützbar und über eine Befestigungsvorrichtung (124, 125) lösbar mit dem Lagerrahmenmodul (13) verbunden ist und wobei die Teilebereitstellungsstation (7) über ihren Grundrahmen (127) an der zweiten Montageaufnahme (126) abstützbar und über eine Befestigungsvorrichtung (128, 129) lösbar mit dem Lagerrahmenmodul (13) verbunden sind.

6. Fertigungsanlage nach einem der Ansprüche 1 bis 5, **dadurch gekennzeichnet, dass** die Anschlussplatte (41) von verschiedenen Lagerrahmenmodulen (13) im Wesentlichen gleichartig gestaltet ist und eine Führungsvorrichtung (131) umfasst.

7. Fertigungsanlage nach einem der Ansprüche 1 bis 6, **dadurch gekennzeichnet, dass** die Lagerrahmenmodule (13) in einem etwa der Breite (133) eines Lagerrahmenmodules (13) entsprechenden Rasterabstand und in einer Längsreihe nebeneinander angeordnet sind.

8. Fertigungsanlage nach einem der Ansprüche 1 bis 6, **dadurch gekennzeichnet, dass** die Lagerrahmenmodule (13) in einem etwa der Breite (133) eines Lagerrahmenmodules (13) entsprechenden Rasterabstand in einer Längsreihe nebeneinander und zwischen Seitenständern (135) derart angeordnet sind, dass sich einander zugewandte Seiten benachbarter Lagerrahmenmodule (13) gegeneinander und die voneinander abgewandten Seiten des in der Längsreihe ersten Lagerrahmenmodules (13) und letzten Lagerrahmenmodules (13) gegen die Seitenständer (135) abstützen.

9. Fertigungsanlage nach einem der Ansprüche 1 bis 8, **dadurch gekennzeichnet, dass** die Tragrahmenmodule (36, 37, 38) jeweils einen Bodenplattenteil (49), einen Montageplattenteil (50) und Vertikalrahmenteile (51) umfassen, welche zu einer selbstragenden Gehäuseeinheit miteinander verbunden sind.

10. Fertigungsanlage nach einem der Ansprüche 1 bis 9, **dadurch gekennzeichnet, dass** die Tragrahmenmodule (36,37, 38) in einer Längsreihe nebeneinander angeordnet und jeweils über Befestigungsvorrichtungen (44) zueinander verbunden sind, sodass sie das Traggehäuse (9) ausbilden, wobei ein erstes Tragrahmenmodul (36) mit einer ersten Funktionseinheit (46) und ein zweites Tragrahmenmodul (37) mit einer zweiten Funktionseinheit (47) und ein oder mehrere zwischen diesen angeordnete dritte Tragrahmenmodule (38) mit einer oder mehreren dritten Funktionseinheiten (48) ausgestattet sind.

11. Fertigungsanlage nach Anspruch 10, **dadurch gekennzeichnet, dass** die erste Funktionseinheit (46) ein Antriebsschrankmodul (82) mit einer elektrischen Energieversorgungseinheit (83), elektronischen Steuerungsvorrichtung mit einer Rechnereinheit (84) für die Transportanlage (2) und/oder Kommunikationsschnittstelle (85) zum Anschluss der Rechnereinheit (84) an ein Datenbussystem (107) umfasst.

12. Fertigungsanlage nach Anspruch 10, **dadurch gekennzeichnet, dass** die zweite Funktionseinheit (47) ein Technologieschrankmodul (87) mit einer Arbeitsmittelversorgungseinheit (88), einer Aufbereitungseinheit (89) für Druckmedium und/oder elektrisch betätigbaren Schalteinheiten (90) umfasst.

13. Fertigungsanlage nach Anspruch 10, **dadurch gekennzeichnet, dass** die dritte Funktionseinheit (48) eine den Arbeitsstationen (6) entsprechende Anzahl an Schaltkastenmodule (53), welche jeweils mit einer ersten Ansteuerschaltung (99) für eine Arbeitsstation (6) ausgestattet ist, und/oder ein Schaltschrankmodul (54), welches mit einer Rechnereinheit (115) ausgestattet ist, die ihrerseits über eine Kommunikationsleitung (70, 107) mit den Ansteuerschaltungen (99) von mehreren Arbeitsstationen (6) verbunden ist, umfasst.

14. Fertigungsanlage nach einem der Ansprüche 10 bis 13, **dadurch gekennzeichnet, dass** die dritte Funktionseinheit (48) eine den Teilebereitstellungsstationen (7) entsprechende Anzahl an Schaltkastenmodule (53) umfasst, welche jeweils mit einer zweiten Ansteuerschaltung (100) für eine Teilebereitstellungsstation (7) ausgestattet sind, wobei die Ansteuerschaltungen (100) über eine Kommunikationsleitung (107) mit der Steuerungsvorrichtung, insbesondere der Rechnereinheit (84) des Antriebsschrankmodules (82) verbunden ist.

15. Fertigungsanlage nach Anspruch 13 oder 14, **dadurch gekennzeichnet, dass** die Schaltkastenmodule (53) und das Schaltschrankmodul (54) zwischen der Bodenplatte (49) und Montageplatte (50) und mit gegenseitigem Abstand einander gegenüberliegend angeordnet sind und zwischen ihnen in der Bodenplatte (49) je dritter Funktionseinheit (48) zumindest eine Durchführungsöffnung (72) für Leitungen (70, 73, 75) ausgebildet ist.

16. Fertigungsanlage nach einem der Ansprüche 13 bis 15, **dadurch gekennzeichnet, dass** das Schaltkastenmodul (53) ein Einschubgehäuse mit einer Bodenwand (92), Deckenwand (93), Vorderwand (94), Rückwand (95) und Seitenwänden (96) ausbildet, wobei das Einschubgehäuse in einer oder mehreren ihrer Wände (92, 93, 94, 95, 96) mit einer Luftaustrittsöffnung (97) und einer Lufteintrittsöffnung (98) versehen ist.

17. Fertigungsanlage nach einem der Ansprüche 13 bis 16, **dadurch gekennzeichnet, dass** das Schaltkastenmodul (53) ein Einschubgehäuse mit einer Bodenwand (92), Deckenwand (93), Vorderwand (94), Rückwand (95) und Seitenwänden (96) ausbildet, wobei an der Rückwand (95) ein Anschlussstecker (110, 112) für eine Energieversorgungsleitung (106) der Arbeitsstation (6) und/oder Teilebereitstellungsstation (7) und/oder Anschlussstecker (111, 113) für eine Signalleitung (106) und/oder eine Kommunikationsschnittstelle (138) für den Anschluss an eine Datenbusleitung (107) zur Datenübertragung vorgesehen ist.

18. Fertigungsanlage nach einem der Ansprüche 10 bis 17, **dadurch gekennzeichnet, dass** die dritte Funktionseinheit (48) einen zwischen einander zugewandte Innenseiten der Boden- und Montageplattenteile (49, 50) in der Höhe und einander zugewandte Innenseiten der Vertikalrahmenteile (51) in der Breite begrenzten Aufnahmeschacht (55) für einen oder mehrere von diesem entfernbare Schaltkastenmodule (53) und in der Verlängerung des Aufnahmeschachtes (55) vorgesehenen Aufnahmeraum (62) für das Schaltschrankmodul (54) ausbildet, wobei das Schaltschrankmodul (54) relativ zum Aufnahmeschacht (55) zwischen einer ersten Stellung und einer zweiten Stellung bewegbar ist.

19. Fertigungsanlage nach einem der Ansprüche 10 bis 18, **dadurch gekennzeichnet, dass** die dritte Funktionseinheit (48) auf seinem Montageplattenteil (50) je Lagerrahmenmodul (13) eine Führungsvorrichtung (64) umfasst, welche komplementär zur Führungsvorrichtung (131) des Lagerrahmenmodules (13) ausgebildet ist, sodass jedes Lagerrahmenmodul (13) über die Führungsvorrichtungen (64, 131) relativ gegenüber dem Tragrahmenmodul (38) justierbar und über die Anschlussplatte (41) am Tragrahmenmodul (38) montierbar ist.

20. Fertigungsanlage nach einem der Ansprüche 1 bis 19, **dadurch gekennzeichnet, dass** die Tragrahmenmodule (36, 37, 38) auf einem Untergestell (52) montierbar sind und im Untergestell (52) integriert zumindest ein Leitungsführungskanal (81) vorgesehen ist, welcher je erster Funktionseinheit (46) und/oder zweiter Funktionseinheit (47) und/oder dritter Funktionseinheit (48) eine Durchgangsöffnung (136) ausbildet, durch welche Leitungen (70; 73; 75) hindurchführbar sind.

21. Fertigungsanlage nach einem der Ansprüche 1 bis 20, **dadurch gekennzeichnet, dass** zumindest eines der Lagerrahmenmodule (13) mit zumindest einem Subschaltkastenmodul (137) ausgestattet ist, welches einen ersten Gehäuseteil (151) mit einer Bodenwand (154) und an der Bodenwand (154) auf einer ersten Seite angeordnete elektrische Schaltelemente (165) umfasst und an einer der Seitenwände (120) des Lagerrahmenmodules (13) montierbar ist, wobei die Bodenwand (154) ferner auf einer zweiten Seite eine wärmeleitende Kontaktfläche (164) ausbildet, die gegen die Seitenwand (120) des Lagerrahmenmodules (13) anliegt, wenn das Subschaltkastenmodul (137) am Lagerrahmenmodul (13) montiert ist.

22. Fertigungsanlage nach einem der Ansprüche 1 bis 20, **dadurch gekennzeichnet, dass** zumindest eines der Lagerrahmenmodule (13) mit zumindest einem Subschaltkastenmodul (137) ausgestattet ist, welches einen ersten Gehäuseteil (151) mit einer Bodenwand (154), eine an dieser mit einer ersten Seite befestigte Kontaktplatte (163) und an der Kontaktplatte (163) auf einer zweiten Seite angeordnete elektrische Schaltelemente (165) umfasst sowie an einer der Seitenwände (120) des Lagerrahmenmodules (13) montierbar ist, wobei die Bodenwand (154) auf einer der Kontaktplatte (163) abgewandten Seite eine wärmeleitende Kontaktfläche (164) ausbildet, die gegen die Seitenwand (120) des Lagerrahmenmodules (13) anliegt, wenn das Subschaltkastenmodul (137) am Lagerrahmenmodul (13) montiert ist.

23. Fertigungsanlage nach einem der Ansprüche 1 bis 22, **dadurch gekennzeichnet, dass** die Fertigungsanlage (1) Bewegungsachsen (139, 140) und
eine über die Bewegungsachsen (139, 140) relativ zur Transportanlage (2) verstellbare Arbeitseinheit, insbesondere eine Handhabungsvorrichtung (16) umfasst, wobei die erste Bewegungsachse (139) in einer ersten Richtung (x-Richtung) parallel zur Transportrichtung (5) verstellbar und die zweite Bewegungsachse (140) in einer zweiten und dritten Richtung (yund z-Richtung) verstellbar auf der ersten Bewegungsachse (139) gelagert ist,
und dass
mehrere Lagerrahmenmodule (13) mit einem ersten Linearführungssystem (142') und einem zweiten Linearführungssystem (143') versehen sind,
wobei sich die Linearführungssysteme (142', 143') parallel zur Transportrichtung (5) entlang mehrerer Lagerrahmenmodule (13) durchgehend erstrecken und an diesen Lagerrahmenmodulen (13) befestigt sind und die erste Bewegungsachse (139) an ihren Endbereichen über die Linearführungssysteme (142', 143') gelagert ist, und dass
zumindest ein elektrisch steuerbarer Linearantrieb (144') vorgesehen ist, welcher sich parallel zur Transportrichtung (5) entlang mehrerer Lagerrahmenmodule (13) durchgehend erstreckt, sodass die zweite Bewegungsachse (140) zwischen mehreren Lagerrahmenmodulen (13) in der ersten Richtung (x-Richtung) parallel zur Transportrichtung (5) verstellbar ist.

## Claims

1. A manufacturing plant (1) for producing an assembly consisting of a plurality of parts (3), comprising
a conveying facility (2) for conveying parts (3) by means of parts carriers (4), workstations (6) and/or parts picking stations (7) arranged one after the other in the conveying direction (5), as well as a support housing (9), wherein
the workstations (6) and/or parts picking stations (7) are each mounted on bearing frame modules (13) via mounting seats (121; 126), and wherein
the support housing (9) comprises juxtaposed support frame modules (36, 37, 38), which support frame modules (36, 37, 38) comprise a base plate (49) and a mounting plate (50), wherein the base plate (49) and the mounting plate (50) are connected to each other via vertical frames (51) and
the mounting plate (50), on its upper side facing away from the base plate (49), forms a mounting plane (11), on which the bearing frame modules (13) can be supported by their connecting plates (41) and are detachably connected to the support housing (9) via fastening devices (42),
**characterised in that**
the conveying facility (2) is detachably connected via its base frame (8) to the mounting plane (11) of the mounting plate (50) of the support housing (9) also via fastening devices (43).

2. The manufacturing plant according to claim 1, **characterised in that** the bearing frame modules (13) for the workstations (6) and/or parts picking stations (7) are constituted essentially in the same way.

3. The manufacturing plant according to claim 1 or 2, **characterised in that** the bearing frame module (13) comprises side walls (120), a connecting plate (41) connecting the latter and a mounting seat (121), wherein the workstation (6) can be supported via its base frame (122) on the mounting seat (121) and is detachably connected via a fastening device (124, 125) to the bearing frame module (13).

4. The manufacturing plant according to claim 1 or 2, **characterised in that** the bearing frame module (13) comprises side walls (120), a connecting plate (41) connecting the latter and a mounting seat (126), wherein the parts picking station (7) can be supported via its base frame (127) on the mounting seat (126) and is detachably connected via a fastening device (128, 129) to the bearing frame module (13).

5. The manufacturing plant according to claim 1 or 2, **characterised in that** the bearing frame module (13) comprises side walls (120), a connecting plate (41) connecting the latter and a first mounting seat (121) and a second mounting seat (126) in mounting planes lying one above the other, wherein the workstation (6) can be supported via its base frame (122) on the first mounting seat (121) and is detachably connected via a fastening device (124, 125) to the bearing frame module (13) and wherein the parts picking station (7) can be supported via its base frame (127) on the second mounting seat (126) and is detachably connected via a fastening device (128, 129) to the bearing frame module (13).

6. The manufacturing plant according to any one of claims 1 to 5, **characterised in that** the connecting plate (41) of different bearing frame modules (13) is constituted essentially in the same way and comprises a guide device (131).

7. The manufacturing plant according to any one of claims 1 to 6, **characterised in that** the bearing frame modules (13) are disposed at a grid spacing roughly corresponding to the width (133) of a bearing frame module (13) and in a longitudinal row beside one another.

8. The manufacturing plant according to any one of claims 1 to 6, **characterised in that** the bearing frame modules (13) are disposed at a grid spacing roughly corresponding to the width (133) of a bearing frame module (13) in a longitudinal row beside one another and between lateral stands (135), in such a way that sides facing towards one another of adjacent bearing module frames (13) are supported against one another and the sides facing away from one another of the first bearing frame module (13) and last bearing frame module (13) in the longitudinal row are supported against lateral stands (135).

9. The manufacturing plant according to any one of claims 1 to 8, **characterised in that** the support frame modules (36, 37, 38) each comprise a bottom plate part (49), a mounting plate part (50) and vertical frame parts (51), which are connected to one another to form a self-supporting housing unit.

10. The manufacturing plant according to any one of claims 1 to 9, **characterised in that** the support frame modules (36, 37, 38) are disposed in a longitudinal row beside one another and are each connected to one another via fastening devices (44), so that they form the support housing (9), wherein a first support frame module (36) is provided with a first functional unit (46) and a second support frame module (37) is provided with a second functional unit (47) and one or more third support frame modules (38) disposed between the latter are provided with one or more third functional units (48).

11. The manufacturing plant according to claim 10, **characterised in that** the first functional unit (46) comprises a drive cabinet module (82) with an electrical power supply unit (83), an electronic control device with a computing unit (84) for the conveying facility (2) and/or a communication interface (85) for connecting the computing unit (84) to a data bus system (107).

12. The manufacturing plant according to claim 10, **characterised in that** the second functional unit (47) comprises a technology cabinet module (87) with a working equipment supply unit (88), a preparation unit (89) for a pressure medium and/or electrically actuatable switching units (90).

13. The manufacturing plant according to claim 10, **characterised in that** the third functional unit (48) comprises a number of switch box modules (53) corresponding to the workstations (6), said switch box modules each been provided with a first control circuit (99) for a workstation (6), and/or a switch cabinet module (54), which is provided with a computing unit (115), which for its part is connected via a communication line (70, 107) to the control circuits (99) of a plurality of workstations (6).

14. The manufacturing plant according to any one of claims 10 to 13, **characterised in that** the third functional unit (48) comprises a number of switch box modules (53) corresponding to the parts picking stations (7), said switch box modules each been provided with a second control circuit (100) for a parts picking station (7), wherein the control circuit (100) is connected via a communication line (107) to the control device, in particular the computing unit (84) of the drive cabinet module (82).

15. The manufacturing plant according to claim 13 or 14, **characterised in that** the switch box module (53) and the switch cabinet module (54) are disposed between the bottom plate (49) and the mounting plate (50) and lying opposite one another with a mutual spacing, and there is formed between the latter, in the bottom plate (49) of every third functional unit (48), at least one through-opening (72) for lines (70, 73, 75).

16. The manufacturing plant according to any one of claims 13 to 15, **characterised in that** the switch box module (53) constitutes a slide-in housing with a bottom wall (92), a top wall (93), a front wall (94), a rear wall (95) and side walls (96), wherein the slide-in housing is provided in one or more of its walls (92, 93, 94, 95, 96) with an air outlet opening (97) and an air inlet opening (98).

17. The manufacturing plant according to any one of claims 13 to 16, **characterised in that** the switch box module (53) constitutes a slide-in housing with a bottom wall (92), a top wall (93), a front wall (94), a rear wall (95) and side walls (96), wherein there is provided at the rear wall (95) a connector plug (110, 112) for a power supply line (106) of the workstation (6) and/or parts picking station (7) and/or a connector plug (111, 113) for a signal line (106) and/or a communication interface (138) for the connection to a data bus line (107) for data transfer.

18. The manufacturing plant according to any one of claims 10 to 17, **characterised in that** the third functional unit (48) constitutes an accommodation shaft (55) for one or more switch box modules (53) removable therefrom, said accommodation shaft being bounded between mutually facing inner sides of the bottom and mounting plate parts (49, 50) over the height and mutually facing inner sides of the vertical frame parts (51) over the width, and an accommodation space (62) for the switch cabinet module (54), said accommodation space being provided in the extension of the accommodation shaft (55), wherein the switch cabinet module (54) is movable relative to the accommodation shaft (55) between a first position and a second position.

19. The manufacturing plant according to any one of claims 10 to 18, **characterised in that** the third functional unit (48) comprises on its mounting plate part (50) a guide device (64) for each bearing frame module (13), said the guide device being constituted complementary to the guide device (131) of the bearing frame module (13), so that each bearing frame module (13) can be adjusted via the guide devices (64, 131) relative to the support frame module (38) and can be mounted via the connecting plate (41) on the support frame module (38).

20. The manufacturing plant according to any one of claims 1 to 19, **characterised in that** the support frame modules (36, 37, 38) can be mounted on an under-frame (52) and at least one line routing duct (81) is provided integrated in the under-frame (52), said line routing duct constituting a through-opening (136) for each first functional unit (46) and/or second functional unit (47) and/or third functional unit (48), through which through-opening lines (70; 73; 75) can be passed.

21. The manufacturing plant according to any one of claims 1 to 20, **characterised in that** at least one of the bearing frame modules (13) is provided with at least one sub-switch box module (137), which comprises a first housing part (151) with a bottom wall (154) and electrical switching elements (165) disposed on the bottom wall (154) on a first side and can be mounted on one of the side walls (120) of the bearing frame module (13), wherein the bottom wall (154) further forms in a heat-conducting contact surface (164) on a second side, said heat-conducting contact surface lying against a side wall (120) of the bearing frame module (13) when the sub-switch box module (137) is mounted on the bearing frame module (13).

22. The manufacturing plant according to any one of claims 1 to 20, **characterised in that** at least one of the bearing frame modules (13) is provided with at least one sub-switch box module (137), which comprises a first housing part (151) with a bottom wall (154), a contact plate (163) fixed to the latter with a first side and electrical switching elements (165) disposed on the contact plate (163) on a second side and can be mounted on one of the side walls (120) of the bearing frame module (13), wherein the bottom wall (154) forms a heat-conducting contact surface (164) on a side facing away from the contact plate (163), said heat-conducting contact surface lying against the side wall (120) of the bearing frame module (13) when the sub-switch box module (137) is mounted on the bearing frame module (13).

23. The manufacturing plant according to any one of claims 1 to 22, **characterised in that** the manufacturing plant (1) comprises movement axes (139, 140) and a work unit, in particular a handling device (16), displaceable relative to the conveying facility (2) via the movement axes (139, 140), wherein the first movement axis (139) is mounted adjustable in a first direction (x-direction) parallel to the conveying direction (5) and the second movement axis (140) is mounted adjustable in a second and third direction (yand z-direction) on the first movement axis (139),
and that
a plurality of bearing frame modules (13) are provided with a first linear guide system (142') and a second linear guide system (143'),
wherein the linear guide systems (142', 143') extend continuously parallel to the conveying direction (5) along a plurality of bearing frame modules (13) and are fixed to these bearing frame modules (13) and the first movement axis (139) is mounted at its end regions via the linear guide systems (142', 143'), and that
at least one electrically controllable linear drive (144') is provided, which extends continuously parallel to the conveying direction (5) along a plurality of bearing frame modules (13), so that the second movement axis (140) can be adjusted between a plurality of bearing frame modules (13) in the first direction (x-direction) parallel to the conveying direction (5).

## Revendications

1. Installation de fabrication (1) pour la fabrication d'un sous-groupe constitué de plusieurs pièces (3), comprenant
une installation de transport (2) pour transporter des pièces (3) à l'aide de porte-pièces (4), des stations de travail (6) disposées les unes derrière les autres dans la direction du transport (5), et/ou des stations (7) de mise à disposition des pièces, ainsi qu'un bâti porteur (9), dans laquelle
les stations de travail (6) et/ou les stations (7) de mise à disposition des pièces sont chacune logées par l'intermédiaire de logements de montage (121 ; 126) contre des modules de cadre support (13), et dans laquelle
le bâti porteur (9) comprend des modules de cadre porteur (36, 37, 38) disposés les uns à côté des autres,
lesquels modules de cadre porteur (36, 37, 38) comprenant une plaque de fond (49) et une plaque de montage (50), la plaque de fond (49) et la plaque de montage (50) étant reliées l'une à l'autre par l'intermédiaire de cadres verticaux (51), et
la plaque de montage (50) formant sur son côté supérieur opposé à la plaque de fond (49) un plan de montage (11), sur lequel les modules de cadre support (13) peuvent s'appuyer par l'intermédiaire de leurs plaques de raccordement (41), et sont reliés d'une manière amovible au bâti porteur (9) par l'intermédiaire de dispositifs de fixation (42), **caractérisée en ce que**
l'installation de transport (2) est, par l'intermédiaire de son cadre de base (8), et aussi par l'intermédiaire de dispositifs de fixation (43), reliée d'une manière amovible au plan de montage (11) de la plaque de montage (50) du bâti porteur (9).

2. Installation de fabrication selon la revendication 1, **caractérisée en ce que** les modules de cadre support (13) pour les stations de travail (6) et/ou les stations (7) de mise à disposition des pièces sont configurés pour l'essentiel d'une manière équivalente.

3. Installation de fabrication selon la revendication 1 ou 2, **caractérisée en ce que** le module de cadre support (13) comprend des parois latérales (120), une plaque de raccordement (41) qui les relie et un logement de montage (121), la station de travail (6) pouvant par l'intermédiaire de son cadre de base (122) s'appuyer contre le logement de montage (121) et étant par l'intermédiaire d'un dispositif de fixation (124, 125) reliée d'une manière amovible au module de cadre support (13).

4. Installation de fabrication selon la revendication 1 ou 2, **caractérisée en ce que** le module de cadre support (13) comprend des parois latérales (120), une plaque de raccordement (41) qui les relie et un logement de montage (126), la station (7) de mise à disposition des pièces pouvant s'appuyer par l'intermédiaire de son cadre de base (127) contre le logement de montage (126) et étant par l'intermédiaire d'un dispositif de fixation (128, 129) reliée d'une manière amovible au module de cadre support (13).

5. Installation de fabrication selon la revendication 1 ou 2, **caractérisée en ce que** le module de cadre support (13) comprend des parois latérales (120), une plaque de raccordement (41) qui les relie et, dans des plans de montage disposés les uns au-dessus des autres, un premier logement de montage (121) et un deuxième logement de montage (126), la station de travail (6) pouvant par l'intermédiaire de son cadre de base (122) s'appuyer contre le premier logement de montage (121) et étant par l'intermédiaire d'un dispositif de fixation (124, 125) reliée d'une manière amovible au module de cadre support (13), et la station (7) de mise à disposition des pièces pouvant par l'intermédiaire de son cadre de base (127) s'appuyer contre le deuxième logement de montage (126) et étant par l'intermédiaire d'un dispositif de fixation (128, 129) reliée d'une manière amovible au module de cadre support (13).

6. Installation de fabrication selon l'une des revendications 1 à 5, **caractérisée en ce que** la plaque de raccordement (41) des différents modules de cadre support (13) est configurée pour l'essentiel d'une manière équivalente et comprend un dispositif de guidage (131).

7. Installation de fabrication selon l'une des revendications 1 à 6, **caractérisée en ce que** les modules de cadre support (13) sont disposés selon un pas correspondant approximativement à la largeur (133) d'un module de cadre support (13), et les uns à côté des autres en rangée longitudinale.

8. Installation de fabrication selon l'une des revendications 1 à 6, **caractérisée en ce que** les modules de cadre support (13) sont disposés selon un pas correspondant approximativement à la largeur (133) d'un module de cadre support (13), les uns à côté des autres en rangée longitudinale et entre des montants latéraux (135), de telle sorte que des côtés dirigés l'un vers l'autre de modules de cadre support (13) voisins s'appuient l'un contre l'autre, et que les côtés opposés l'un à l'autre du module de cadre support (13) qui est le premier dans la rangée longitudinale et du module de cadre support (13) qui est le dernier dans la rangée longitudinale, s'appuient contre les montants latéraux (135).

9. Installation de fabrication selon l'une des revendications 1 à 8, **caractérisée en ce que** chaque module de cadre porteur (36, 37, 38) comprend une partie (49) formant plaque de fond, une partie (50) formant plaque de montage et des parties (51) formant cadre vertical, qui sont reliées les unes aux autres pour former une unité de bâti autoportante.

10. Installation de fabrication selon l'une des revendications 1 à 9, **caractérisée en ce que** les modules de cadre porteur (36, 37, 38) sont disposés les uns à côté des autres en rangée longitudinale, et sont reliés chacun les uns aux autres par l'intermédiaire de dispositifs de fixation (44) de façon à former le bâti porteur (9), un premier module de cadre porteur (36) étant équipé d'une première unité fonctionnelle (46) et un deuxième module de cadre porteur (37) étant équipé d'une deuxième unité fonctionnelle (47), et un ou plusieurs troisièmes modules de cadre porteur (38), disposés entre ces derniers, étant équipés d'une ou plusieurs troisièmes unités fonctionnelles (48).

11. Installation de fabrication selon la revendication 10, **caractérisée en ce que** la première unité fonctionnelle (46) comprend un module (82) d'armoire de transmission électrique, ayant une unité d'alimentation en énergie électrique (83), un dispositif de commande électronique avec une unité de calcul (84) pour l'installation de transport (2) et/ou une interface de communication (85) pour raccordement de l'unité de calcul (84) à l'unité de bus de données (107).

12. Installation de fabrication selon la revendication 10, **caractérisée en ce que** l'unité fonctionnelle (47) comprend un module d'armoire technologique (87), avec une unité (88) d'alimentation en fluide moteur, une unité de préparation (89) pour le fluide sous pression et/ou des unités de commutation à manoeuvre électrique (90).

13. Installation de fabrication selon la revendication 10, **caractérisée en ce que** l'unité fonctionnelle (48) comprend un nombre correspondant aux stations de travail (6) de modules de coffret de commutation (53), dont chacun est équipé d'un premier circuit d'excitation (99) pour une station de travail (6), et/ou un module d'armoire de commutation (54), qui est équipé d'une unité de calcul (115), qui pour sa part est par l'intermédiaire d'une ligne de communication (70, 107) reliée aux circuits d'excitation (99) de plusieurs stations de travail (6).

14. Installation de fabrication selon l'une des revendications 10 à 13, **caractérisée en ce que** la troisième unité fonctionnelle (48) comprend un nombre de modules de coffret de commutation (53) correspondant aux stations (7) de mise à disposition des pièces, dont chacun est équipé d'un deuxième circuit d'excitation (100) pour une station (7) de mise à disposition des pièces, le circuit d'excitation (100) étant par l'intermédiaire d'une ligne de communication (107) relié au dispositif de commande, en particulier à l'unité de calcul (84) du module d'armoire de transmission électrique (82).

15. Installation de fabrication selon la revendication 13 ou 14, **caractérisée en ce que** le module de coffret de commutation (53) et le module d'armoire de commutation (54) sont disposés entre la plaque de fond (49) et la plaque de montage (50), et opposés l'un à l'autre à une certaine distance l'un de l'autre, et au moins une ouverture de passage (72) pour les lignes (70, 73, 75) étant réalisée entre eux, dans la plaque de fond (49) de chacune des troisièmes unités fonctionnelles (48).

16. Installation de fabrication selon l'une des revendications 13 à 15, **caractérisée en ce que** le module de coffret de commutation (53) forme un boîtier pour montage en baie, avec une paroi de fond (92), une paroi de plafond (93), une paroi avant (94), une paroi arrière (95) et des parois latérales (96), le boîtier pour montage en baie étant, dans une ou plusieurs de ses parois (92, 93, 94, 95, 96), pourvu d'un orifice de sortie d'air (97) et d'un orifice d'entrée d'air (98).

17. Installation de fabrication selon l'une des revendications 13 à 16, **caractérisée en ce que** le module de coffret de commutation (53) forme un boîtier pour montage en baie, avec une paroi de fond (92), une paroi de plafond (93), une paroi avant (94), une paroi arrière (95) et des parois latérales (96) une fiche de raccordement (110, 112) pour une ligne (106) d'alimentation en énergie de la station de travail (6) et/ou de la station (7) de mise à disposition des pièces, et/ou une fiche de raccordement (111, 113) pour une ligne de signalisation (106) et/ou une interface de communication (138), étant prévues contre la paroi arrière (95) pour raccordement à une ligne de bus de données (107), pour transmission de données.

18. Installation de fabrication selon l'une des revendications 10 à 17, **caractérisée en ce que** la troisième unité fonctionnelle (48) forme un puits de logement (55), délimité en hauteur entre les faces intérieures dirigées l'une vers l'autre des pièces (49, 50) formant plaque de fond et plaque de montage, et en largeur entre les faces intérieures dirigées l'une vers l'autre des pièces (51) formant cadre vertical, pour un ou plusieurs modules (53) de coffret de commutation, pouvant être éloignés de ce puits, et un espace de logement (62), prévu dans le prolongement du puits de logement (55), pour le module (54) de coffret de commutation, le module (54) de coffret de commutation pouvant être déplacé par rapport au puits de logement (55) entre une première position et une deuxième position.

19. Installation de fabrication selon l'une des revendications 10 à 18, **caractérisée en ce que** l'unité fonctionnelle (48) comprend, sur sa pièce (50) formant plaque de montage, et par module de cadre support (13) un dispositif de guidage (64), qui est configuré complémentaire du dispositif de guidage (131) du module de cadre de support (13) de telle sorte que chaque module de cadre support (13) puisse par l'intermédiaire du dispositif de guidage (64, 131) être ajusté par rapport au module de cadre support (38) et être monté par l'intermédiaire de la plaque de raccordement (41) contre module de cadre porteur (38).

20. Installation de fabrication selon l'une des revendications 1 à 19, **caractérisée en ce que** les modules de cadre porteur (36, 37, 38) peuvent être montés sur un châssis (52), et qu'il est prévu, intégré dans le châssis (52) au moins un canal de guidage de ligne (81), qui, par chaque première unité fonctionnelle (46) et/ou par chaque deuxième unité fonctionnelle (47) et/ou par chaque troisième unité fonctionnelle (48) forme une ouverture de passage (136), par laquelle peuvent être passées les lignes (70 ; 73 ; 75).

21. Installation de fabrication selon l'une des revendications 1 à 20, **caractérisée en ce qu'**au moins l'un des modules de cadre support (13) est équipé d'au moins un sous-module de coffret de commutation (137), lequel comprend une première partie de boîtier (151) avec une paroi de fond (154) et des éléments de commutation électrique (165) disposés contre la paroi de fond (154) sur un premier côté, et qui peut être monté contre l'une des parois latérales (120) du module de cadre support (13), la paroi de fond (154) formant en outre sur un deuxième côté une face de contact productrice de chaleur (164), qui s'appuie contre la paroi latérale (120) du module de cadre support (13) quand le sous-module de coffret de commutation (137) est monté contre le module de cadre support (13).

22. Installation de fabrication selon l'une des revendications 1 à 20, **caractérisée en ce qu'**au moins l'un des modules de cadre support (13) est équipé d'au moins un sous-module de coffret de commutation (137), qui comprend une première partie de boîtier (151) avec une paroi de fond (154), une plaque de contact (163) fixée à cette dernière par un premier côté, et des éléments de commutation électrique (165) disposés contre la plaque de contact (163) sur un deuxième côté, et peut être monté contre l'une des parois latérales (120) du module de cadre support (13), la paroi de fond (154) formant sur un côté opposé à la plaque de contact (163) une face de contact (164) conductrice de chaleur, qui s'appuie contre la paroi latérale (120) du module de cadre support (13) quand le sous-module de coffret de commutation (137) est monté contre le module de cadre support (13).

23. Installation de fabrication selon l'une des revendications 1 à 22, **caractérisée en ce que** l'installation de fabrication (1) comprend des axes de mouvement (139, 140) et une unité de travail pouvant par l'intermédiaire des axes de mouvement (139, 140) être déplacée par rapport à l'installation de transport (2), en particulier un dispositif de manipulation (16), le premier axe de mouvement (139) étant logé de façon à pouvoir se déplacer dans une première direction (direction x) parallèlement à la direction de transport (5), et le deuxième axe de mouvement (140) étant logé de façon à pouvoir être déplacé dans une deuxième et une troisième directions (directions y et z) sur le premier axe de mouvement (139), et que
plusieurs modules de cadre support (13) sont prévus avec un premier système de guidage linéaire (142') et un deuxième système de guidage linéaire (143'),
les systèmes de guidage linéaire (142', 143') s'étendant d'une manière continue parallèlement à la direction de transport (5) le long de plusieurs modules de cadre support (13) et étant fixés à ces modules de cadre support (13), et le premier axe de mouvement (139) étant logé contre ces zones terminales par l'intermédiaire des systèmes de guidage linéaire (142', 143'), et que
au moins un organe d'entraînement linéaire à commande électrique (144') est prévu, qui s'étend d'une manière continue parallèlement à la direction de transport (5) le long de plusieurs modules de cadre support (13), de telle sorte que le deuxième axe de mouvement (140) puisse être déplacé parallèlement à la direction de transport (5) entre plusieurs modules de cadre support (13) dans la première direction (direction x).
